# EUROPEAN PATENT APPLICATION

(11) **EP 4 084 429 A1**
(43) Date of publication of application: **02.11.2022**
(21) Application number: 21170555.3
(22) Date of filing: 26.04.2021
(51) Int. Cl.: H04L 29/06, H04L 29/08, H04L 9/32

(54) **SYSTEM AND METHOD FOR DISTRIBUTED TRANSACTION PROPAGATION AND VERIFICATION**

(71) Applicant: Toumi, Alessandro Semi, 8110 Tabarka (TN)
(72) Inventor: Toumi, Alessandro Semi, 8110 Tabarka (TN)
(74) Representative: AOMB Polska Sp. z.o.o.

(57) **Abstract**

A plurality of methods are presented that are executable in a computer-implemented distributed ledger. Methods for an entity to take part in a process aimed at choosing, from a plurality of entities, a producer of a new block of valid transactions in a blockchain. A method for an entity to establish a measure of a central tendency for a data set composed of at least one value related to an occurrence exogenous to the distributed ledger, in which transactions are organised in blocks forming a blockchain, and to produce a new blockchain block. A method for an entity to create digital tokens whose worth is stable in relation to at least one certain value. A method for an entity to produce a new blockchain block, wherein the new blockchain block includes data allowing for a verification of another data that represent an occurrence exogenous to the distributed ledger.

## Description

### TECHNICAL FIELD

This application relates to the field of distributed public ledgers, securing the contents and the sequence of transactions as well as the verification thereof.

### BACKGROUND

In 2008, an anonymous author published under a pen name "Satoshi Nakamoto", a document entitled "Bitcoin: A Peer-to-Peer Electronic Cash System" describing the mechanism behind an electronic currency operating in a peer-to-peer network, i.e., the Bitcoin. The first blocks emerged, i.e., sets of transactions confirmed by performing appropriate calculations. According to the author, the Bitcoin was supposed to become the first decentralised currency secured by the applied computational power of nodes. Soon, the new technology gained substantial ground. For the first time in history, something digital, which had a real value, got out from a centrally supervised circulation, at least to a certain extent.

However, Bitcoin has lost its momentum and has not become a technological base for a global currency. The following paragraphs will explain the main purposes of the traditional currencies and the desired characteristics thereof; they will also clarify how Bitcoin ranks against the aforementioned traditional currencies.

Basic functions of a currency include:
- Means of exchange in trade transactions. Currency may well be recognised as a means of payment for goods and services, since other purchases of the latter can be made using said currency. A material aspect is the confidence that the value of monetary units, expressed in goods and services, will not significantly change between the time of payment acceptance and the time of performance of the payment (using the units received). Bitcoin does not perform said function, given that its value is constantly fluctuating, and, in most cases, such fluctuations will represent risk factors greater than the ones existing on the goods and services market itself. Therefore, Bitcoin, as it is technically incapable of offering the function described above, is a speculative instrument functioning in an isolation from the real economic goods and processes.
- Unit of account - the value of goods and services can be expressed in monetary units, as they are the equivalent of all goods and services. This is closely related to a stability of the currency in relation to all goods and services on the market, which (as already explained in the description of the first function) is not achieved by Bitcoin.

- Store of value - a surplus (in relation to an expenditure) of the payment means held becomes a reserve to be used afterwards. This function may be performed not only by a currency. Alternatively, it could involve, e.g., precious metals, real properties or works of art. The characteristics desired for this function are the predictability of value over time and liquidity. Again, Bitcoin, due to its unpredictable valuation, is deprived of the first, while having a satisfactory level of the latter (at least in countries where Bitcoin is exchangeable into their national currencies).

The desired currency characteristics include:
- uniformity, divisibility, portability, durability - which, due to the digital nature of a traditional currency and Bitcoin, are evident in both.
- acceptability - acceptability of a traditional currency is mostly based on its adoption (enforced by governments and regulators) and stability of its value. Bitcoin lacks stable value, therefore its potential for reaching wider acceptability is limited.
- adaptation to real-world variables - this feature of currency is rarely discussed. Currency should create a consensus capable of responding to the circumstances occurring in the real world in which said currency is used. Monetary policy, involving, say, increasing money supply, is a response to the real-world circumstances, reflected in the centrally made decisions governing the financial system. Bitcoin lacks this critical feature.

Even the most sophisticated algorithm will not be able to respond to situations and events that occur in a non-mathematical reality. Only humans can understand these variables and translate them into measurable decisions.

Furthermore, in order to fulfil the role of a currency and have the desired characteristics thereof, a monetary unit needs to be stable. This mainly means the stability of its purchasing power in relation to goods and services or the stability of the exchange rate in relation to the currency issued by the national central bank. This may, however, involve stability in relation to any value.

Unfortunately, in the systems based on decentralised consensus, no stability as described above is a frequent concern, as units are used to speculate their prices through the purchase and sales thereof. This makes them unpopular to be used for ordinary trade transactions or settlements of any kind between individuals and companies.

### SUMMARY

For the aforementioned reasons, it would be advantageous if stable (as understood above) monetary units could be created in such distributed systems. It would also be advantageous if their creation, operation and use did not require any interference of a centralised organisation holding control over these processes. Thus, the risk associated with its bad will, fraud or failure would be avoided.

In one aspect, the present invention relates to a computer-implemented method, in a computer-implemented distributed ledger, for an entity to take part in a process aimed at choosing, from a plurality of entities, a producer of a new block of valid transactions in a blockchain, relative to a sequence of prior blocks in the blockchain. The method comprises having the entity generate a data structure. At least a first part of the data structure may allow for proving an inclusion of a particular data block within a set of data blocks that comprises components from which the data structure was constructed, wherein the particular data block contains at least one of a cryptographic key, which can be used for an encryption process, or a string. Alternatively, at least a first part of the data structure may allow for, together with other information, proving an inclusion of a particular data block within a set of data blocks that comprises components from which the data structure or another data structure was constructed, wherein the particular data block contains at least one of a cryptographic key, which can be used for an encryption process, or a string. The method further comprises having the entity send a message in a peer-to-peer network, wherein the message is composed of at least a second part of the data structure, the message being included after having been sent in at least one of the prior blocks. The method further comprises having the entity obtain a value that is at least partly relative to contents of one or more of the prior blocks. The method further comprises having the entity perform at least one of encrypting at least one part of the value using the cryptographic key to produce an encrypted value or executing a computable function based on said at least one part of the value and at least a part of the string, which produces a function output. The method further comprises having the entity perform at least one function, wherein data comprising at least one of at least one part of the encrypted value or at least one part of the function output are at least a part of an input of the at least one function performed, to produce a ciphertext. The method further comprises having the entity check the ciphertext against at least one criterion, wherein meeting said at least one criterion by the ciphertext allows for producing the new block of the valid transactions by the entity or by another entity.

The first part of the data structure and the second part of the data structure may be the same part of the data structure, different parts of the data structure, or partially overlapping parts of the data structure.

The aforementioned method presents advantages over other methods of block production utilised in blockchains such as, e.g., Bitcoin, Ethereum, Cardano. One example of an advantage may be that block production does not necessitate performing relatively many serial iterations of hash function. Another example of an advantage may be the fact that any entity possessing cryptocurrency units within the blockchain utilising said method can (if certain conditions are met) efficiently take part in the process aimed at choosing a producer of a new block - without the need to fulfil a special function (e.g., of a validator node) that, e.g., depends on the amount of cryptocurrency owned or being voted for by other entities that use the blockchain.

In another aspect, the present invention relates to a computer-implemented method, in a computer-implemented distributed ledger, for an entity to take part in a process aimed at choosing, from a plurality of entities, a producer of a new block of valid transactions in a blockchain, relative to a sequence of prior blocks in the blockchain. The method comprises having the entity receive a message that comprises at least one of a cryptographic key, which can be used for an encryption process, or a string. At least one prior block includes at least one part of a data structure. Said at least one part of the data structure may allow for proving an inclusion of a particular data block within a set of data blocks that comprises components from which the data structure was constructed, wherein the particular data block contains the at least one of the cryptographic key, which can be used for the encryption process, or the string. Alternatively, said at least one part of the data structure may allow for, together with other information, proving an inclusion of a particular data block within a set of data blocks that comprises components from which the data structure or another data structure was constructed, wherein the particular data block contains the at least one of the cryptographic key, which can be used for the encryption process, or the string. The method further comprises having the entity obtain a value that is at least partly relative to contents of one or more of the prior blocks. The method further comprises having the entity perform at least one of encrypting at least one part of the value using the cryptographic key to produce an encrypted value or executing a computable function based on said at least one part of the value and at least a part of the string, which produces a function output. The method further comprises having the entity perform at least one function, wherein data comprising at least one of at least one part of the encrypted value or at least one part of the function output are at least a part of an input of said at least one function performed, to produce a ciphertext. The method further comprises having the entity check the ciphertext against at least one criterion, wherein meeting the at least one criterion by the ciphertext allows for producing the new block of the valid transactions by the entity or by another entity.

The aforementioned method presents advantages over other methods of block production utilised in blockchains such as, e.g., Bitcoin, Ethereum, Cardano. One example of an advantage may be that block production does not necessitate performing relatively many serial iterations of hash function. Another example of an advantage may be the fact that any entity possessing cryptocurrency units within the blockchain utilising said method can (if certain conditions are met) efficiently take part in the process aimed at choosing a producer of a new block - without the need to fulfil a special function (e.g., of a validator node) that, e.g., depends on the amount of cryptocurrency owned or being voted for by other entities that use the blockchain.

The step of having the entity perform the at least one function to produce the ciphertext may comprise having the entity concatenate the data comprising the at least one of said at least one part of the encrypted value or said at least one part of the function output with other data, received by the entity as a part of a data exchange aimed at finding an appropriate result of a concatenation process, and performing at least one cryptographic operation.

The aforementioned method presents additional (other than the ones described in relation to previous methods) advantage over other methods of block production utilised in blockchains such as, e.g., Bitcoin, Ethereum, Cardano. Said advantage comprises the fact that said method allows for the major factor determining the distribution of new cryptocurrency units (gained as a reward for producing blocks) being the amount of used Internet bandwidth of nodes.

The other information may comprise at least one hash output that is a part of at least one path of hashes.

The cryptographic key may be used for the encryption process using either an asymmetric cryptography or a symmetric cryptography.

At least one of the data structure or the other data structure may be a hash tree.

In another aspect, the present invention relates to a computer-implemented method, in a computer-implemented distributed ledger, for an entity to establish a measure of a central tendency for a data set composed of at least one value related to an occurrence exogenous to the distributed ledger, in which transactions are organised in blocks forming a blockchain, and to produce a new blockchain block, wherein the new blockchain block includes at least one of the measure of the central tendency or at least some of outcomes of processes that are at least partly related to the measure of the central tendency. The method comprises having the entity receive data comprising said at least one value related to the occurrence exogenous to the distributed ledger. The method further comprises having the entity check if the data are valid according to at least one protocol rule. The method further comprises having the entity compute the measure of the central tendency for the data set composed of said at least one value related to the occurrence exogenous to the distributed ledger. The method further comprises having the entity produce the new blockchain block that includes the at least one of the measure of the central tendency or the at least some of the outcomes of the processes that are at least partly related to the measure of the central tendency.

The aforementioned method presents advantages over other methods of block production utilised in blockchains such as, e.g., Bitcoin, Ethereum, Cardano. Said advantages comprise allowing for reaching consensus on any publicly available value (external to the distributed ledger) without the need for centralisation of the process.

The step of having the entity compute the measure of the central tendency for the data set composed of said at least one value related to the occurrence exogenous to the distributed ledger may further comprise having the entity execute at least some of the processes.

In another aspect, the present invention relates to a computer-implemented method, in a computer-implemented distributed ledger, for an entity to create digital tokens whose worth is stable in relation to at least one certain value. The method comprises having the entity deposit cryptocurrency units in an address of a smart contract, wherein this causes an inability to use the cryptocurrency units by the entity under certain circumstances, the smart contract being able to access data related to the at least one certain value. The method further comprises having the entity receive the digital tokens, which represent rights arising from depositing the cryptocurrency units, wherein at least one owner of the digital tokens will receive, if specific conditions are met, an appropriate amount of another cryptocurrency units, if any, wherein the appropriate amount of the other cryptocurrency units received depends on the data related to the at least one certain value.

The aforementioned method presents advantages over other methods of creating digital tokens whose worth is stable in relation to at least one certain value (i.e., stablecoins). Said advantages comprise no need for collateralisation using assets external to the blockchain (as is the case with, e.g., Tether [USDT]) or overcollateralisation using assets functioning within the blockchain (as is the case with, e.g., DAI) in the process of stablecoin(s) creation and utilisation.

In another aspect, the present invention relates to a computer-implemented method, in a computer-implemented distributed ledger, in which transactions are organised in blocks forming a blockchain, for an entity to produce a new blockchain block, wherein the new blockchain block includes data allowing for a verification of another data that represent an occurrence exogenous to the distributed ledger, wherein the other data were reached by a consensus within the distributed ledger or within another distributed ledger. The method comprises having the entity include in suitable data from which the new blockchain block is being constructed the data allowing for the verification of the other data that represent the occurrence exogenous to the distributed ledger, wherein the data comprise at least one part of a data structure. Said at least one part of the data structure may allow for proving an inclusion of a particular data block within a set of data blocks that comprises components from which the data structure was constructed, wherein the particular data block contains the other data that represent the occurrence exogenous to the distributed ledger. Alternatively, said at least one part of the data structure may allow for, together with other information, proving an inclusion of a particular data block within a set of data blocks that comprises components from which the data structure or another data structure was constructed, wherein the particular data block contains the other data that represent the occurrence exogenous to the distributed ledger. The method further comprises having the entity produce the new blockchain block comprising the data.

The aforementioned method presents advantages over other methods of block production utilised in blockchains such as, e.g., Bitcoin, Ethereum, Cardano. Said advantages comprise allowing for producing a block that allows for secure verification of data representing the occurrence exogenous to the blockchain, also if said data is a part of another blockchain and is verified in terms of being a part of said other blockchain (in which case the secure verification involves the assumption that consensus reached in said other blockchain [and, possibly, within every other blockchain that forms a special chain of dependencies between the data in said another blockchain and another data in said blockchain] is veridical).

The other information may comprise at least one hash output that is a part of at least one path of hashes.

At least one of the data structure or the other data structure may be a hash tree.

In another aspect, the present invention relates to a computer-readable storage medium storing instructions that, when executed by a computer, cause the computer to perform the method(s) as described herein.

In another aspect, the present invention relates to a computer program comprising executable code that, when executed by a computer, causes the computer to perform the method(s) as described herein.

In another aspect, the present invention relates to a computer-implemented system, comprising at least one non-transitory processor-readable storage medium that stores at least one of processor-executable instructions or data; and at least one processor communicably coupled to the at least one non-transitory processor-readable storage medium, wherein the at least one processor is configured to perform the steps of the method(s) as described herein.

In general, the solutions described herein may better fulfil the functions of a currency as compared to Bitcoin or other similar systems, in terms of at least one of the following functions:
- Currency functions as a means of exchange in trade transactions. In some instances of the system that are presented herein, a monetary unit that functions within the system can theoretically perform said function as information (obtained in a decentralised manner) on the current market value of that monetary unit, expressed in another unit, such as domestic currency, allows for performing a variety of operations in the system to produce stabilised (in relation to the value expressed, e.g., in monetary units of the chosen national currencies) tokens. External values (of goods, traditional currencies, cryptocurrencies, etc.) can be determined in relation to that monetary unit in a decentralised manner, through periodical voting of the nodes, based on the logic of Schelling point scheme.
- In some instances of the system that are presented herein, a monetary unit in the system may perform the function of the unit of account or the function of store of value (both of which are closely related to stability of the value of the currency in relation to goods and services), wherein said functions are made possible owing to the use of stable value digital tokens.

The solutions described herein may also perform better in terms of desired currency characteristics as compared to Bitcoin or other similar systems, in terms of at least one of the following:
- uniformity, divisibility, portability, durability - in some instances of the system that are presented herein, achieved to a degree similar to that of Bitcoin
- acceptability - in some instances of the system that are presented herein, dispersed distribution of units (partly based on the amount of the Internet bandwidth used by nodes) allows for a broad adoption of the monetary unit of the system and its increased acceptability by the public.
- adaptation to real-world variables - in some instances of the system that are presented herein, using the Schelling point scheme logic allows for obtaining, in a decentralised (yet reasonable and predictable) manner, virtually any publicly available information on the external world and allows for the decentralised decision-making process.

By decentralisation, the solutions presented herein can allow for a financial system (or any finance-based consensus), wherein the risk related to the centralisation of management thereof involving:
- ill will of the managing organisation,
- management that enables the managing organisation to gain undue benefits,
- as well as other problems related to the corruption of power,
becomes much less likely to appear.

### BRIEF DESCRIPTION OF THE DRAWINGS

Embodiments of the system described herein are explained in more details in accordance with the figures of the drawings, which are briefly described as follows.
Figure 1 shows an exemplary Merkle tree constructed from data blocks storing symmetric keys.
Figure 2 shows a diagram illustrating an exemplary transmission of data in the form of ticket values from and to the nodes.
Figure 3 shows a diagram illustrating exemplary satellite nodes that make their Internet bandwidth available to nodes-addresses.
Figure 4 shows a diagram illustrating two functions of the main chain block.
Figure 5 shows a diagram illustrating a hypothetical situation that concerns proofs in the network.
Figure 6 shows a diagram illustrating an exemplary agreement between Alice and Bob at the time of its conclusion (using a smart contract).
Figure 7 shows a diagram illustrating the termination of an exemplary agreement between Alice and Bob (or between subsequent holders of tokens representing the rights arising from such original agreement, if any) after its expiration.
Figure 8 shows a diagram illustrating the steps of a computer-implemented method for an entity (either a satellite node or a node-address, depending on which steps are performed) to take part in a process aimed at choosing, from a plurality of entities, a producer of a new block of valid transactions in a blockchain, relative to a sequence of prior blocks in the blockchain.

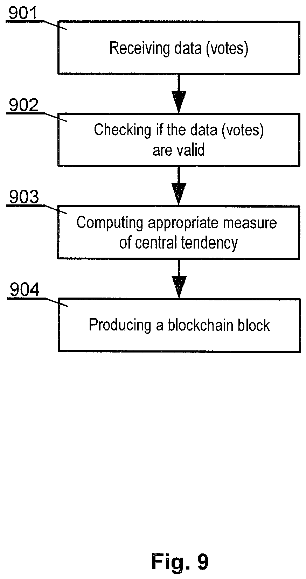

Figure 9 shows a diagram illustrating the steps of a computer-implemented method for an entity to establish a measure of a central tendency for a data set composed of at least one value related to an occurrence exogenous to a distributed ledger, in which transactions are organised in blocks forming a blockchain, and to produce a new blockchain block, wherein the new blockchain block includes at least one of the measure of the central tendency or at least some of outcomes of processes that are at least partly related to the measure of the central tendency (said processes can be or represent any kind of transactions).
Figure 10 shows a diagram illustrating the steps of a computer-implemented method for an entity to produce a new blockchain block, wherein the new blockchain block includes data allowing for a verification of another data that represent an occurrence exogenous to a distributed ledger, wherein the other data were reached by a consensus within the distributed ledger or within another distributed ledger.
Figure 11 shows a computer system that allows for implementing the methods described herein in said computer system.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing", "creating", "transferring", "executing", "determining", "detecting", "obtaining", "selecting", "calculating", "generating" or the like, refer to the action and processes of a computer system that manipulates and transforms data represented as physical (electronic) quantities within the computer registers and memories into other data similarly represented as physical quantities within the memories or registers or other information storage means of this sort.

A computer-readable (storage) medium, such as referred to herein, typically may be non-transitory and/or may comprise a non-transitory device. In this context, a non-transitory storage medium may include a device that may be tangible, meaning that the device has a concrete physical form, although the device may change its physical state. Thus, for example, "non-transitory" refers to a device remaining tangible despite a change in state.

As utilised herein, the term "example" means serving as a non-limiting example, instance, or illustration. Similarly, the terms "assume", "assumption", "assumptions", "assuming", "assumed", "for example" and "e.g." introduce a list of one or more non-limiting examples, instances, or illustrations.

### DEFINITIONS

Where the definition of terms departs from the commonly used meaning of the term, applicant intends to utilise the definitions provided below, unless specifically indicated otherwise.

For the purposes of this application, the term "entity" refers to a computer (in particular a client computer or a server computer), a computer system (such as a plurality of computers connected by a network, operating locally or in a cloud environment), a user (such as a natural person or a legal person), a user operating the computer or the computer system, or an artificial intelligence computer-implemented system.

For the purposes of this application, the term "Merkle tree" in its broadest sense refers to any suitable data structure in accordance with the appropriate context of the term's use. In the present disclosure, mostly a hash tree, in which every leaf node is labelled with the cryptographic hash of a data block and every non-leaf node is labelled with the cryptographic hash of the labels of its child nodes, is used (in accordance with the appropriate context) as a "Merkle tree". However, in some instances, any suitable data structure (not only a hash tree described above) may be used, *mutatis mutandis,* in an analogous (to the use of said hash tree) way. Said suitable data structure may be, e.g., a linear data structure, a graph, another tree data structure or a hash-based data structure.

For the purposes of this application, the term "sub-network" refers to any peer-to-peer network that utilises at least some of the methods described herein.

For the purposes of this application, the term "network" (not to confuse with "peer-to-peer network") refers to a set of sub-networks, wherein one sub-network can carry out transactions that depend on a state and/or transaction(s) from another sub-network.

For the purposes of this application, the term "matrix state" refers to the original state of the sub-network that is not subject to a consensus and is a part of the client software of each node (a state hardcoded into the client software). In some instances of the system presented herein, the first sub-network (to ever be created) will have to start from such pre-established original state, which comprises a set of addresses having cryptocurrency units that allow for participation in the consensus regarding the production of blocks.

For the purposes of this application, the term "encryption key" refers to a symmetric key (or, in some instances, some other data, e.g., a string) stored in one of data blocks from which a Merkle tree was constructed (or, in some instances, stored in one of data blocks from which a Merkle tree, whose root is stored in one of data blocks from which another Merkle tree was constructed [whose at least a part is included into a special transaction], was constructed), whose at least a part is included into a special transaction, which is made by an address and included in one or more of blockchain blocks, said special transaction declaring the symmetric keys (or, in some instances, some other data) to be used (by using said symmetric keys when performing encryption or, in some instances, by using some other data when performing some other computable function) in the process of generating values that can be used to reach consensus on the producer of next block in the sub-network.

For the purposes of this application, the terms "encryption key declaration", "encryption keys declaration" and "declaration of encryption keys" refer to a special transaction made by an address and included in one or more of blockchain blocks, wherein said transaction includes at least a part of a Merkle tree constructed from the data blocks containing encryption keys (or, in some instances, of a Merkle tree constructed from data blocks containing roots of Merkle trees constructed from data blocks containing encryption keys); the aforementioned transaction allows for using said encryption keys in the process of generating values that can be used to reach consensus on the producer of next block in the sub-network.

For the purposes of this application, the terms "checkpoint" and "checkpoint block" refer to a blockchain block until which (or, in some instances, until a blockchain block produced some number of blocks before which) each address should, in order to be able to use encryption keys in the process of reaching consensus (on the producer of next block in the sub-network) in the sub-network after that block and until the next analogous one (in some instances, this period of time can be determined differently), determine encryption keys to be used by said address in the process of reaching consensus in the sub-network; said determination is done (by an address) by means of an encryption keys declaration.

For the purposes of this application, the term "first level Merkle tree" refers to a Merkle tree whose at least a part is included in the encryption keys declaration and published in one or more of the blockchain blocks (so that the mentioned part is publicly available data at the time of said encryption keys declaration); data blocks from which said Merkle tree was constructed contain roots of other Merkle trees, which were constructed from data blocks containing encryption keys.

For the purposes of this application, the term "second level Merkle tree" refers to a Merkle tree constructed from data blocks containing encryption keys to be used in the process of reaching consensus on the producer of the next block in the sub-network; the root of said Merkle tree is contained in one of the data blocks from which the first level Merkle tree was constructed and is not publicly available data at the time the encryption keys declaration, in which at least a part of said first level Merkle tree is included, is published in one or more of the blockchain blocks.

For the purposes of this application, the term "ticket value" refers to a value which, after concatenation with another ticket value and performing computable function (e.g., SHA-256) using concatenated values as an input of said computable function, produces output of a computable function that, if said output is a number (in the decimal form) small enough (in some instances, big enough), allows for block production, wherein each ticket value is obtained by performing operations comprising adding the number that is relative to the content of one or more of the prior blocks to the number that depends on the current size of the data of which ticket values consist (as is desirable in the sub-network to decrease or increase the rate at which said ticket values will be propagated across the sub-network) and using the encryption key.

For the purposes of this application, the terms "plaintext-version of ticket value(s)" and "plaintext-version ticket value(s)" refer to ticket value(s) in plaintext version, i.e., before the encryption using the encryption key.

For the purposes of this application, the term "target size of the ticket value" refers to the size of the data of which the ticket values consist as is desirable in the sub-network to decrease or increase the rate at which said ticket values will be propagated across the sub-network.

For the purposes of this application, the term "difficulty level" (not to be confused with "level of output difficulty", "output difficulty level" or "output difficulty level L") refers to the number of zeros after one (in some instances, said "difficulty level" can be expressed using different values) in a number that consensus participants, competing to become the producer of the next block, need to add to another number, wherein said another number is relative to the contents of one or more of the prior blocks, in order to achieve the result of said addition that, after performing appropriate concatenations and encryption that utilises the result of said concatenations as an input (or, in some instances, performing other computable function), generates a ticket value.

For the purposes of this application, the terms "level of output difficulty" and "output difficulty level" (not to be confused with "difficulty level" and "output difficulty level L") refer to the value of an output, obtained in search of the value of an output that would allow for block production, of computable function in terms of how small a number it is (in some instances, it can be measured in terms of, e.g., how big a number it is; if this value is measured in terms of how small a number it is, then the smaller this number is, the bigger [or higher] the output difficulty level it has and vice versa), wherein the input of said computable function is obtained by performing operations comprising adding the number that is relative to the contents of one or more of the prior blocks to the number that depends on the current difficulty level, incrementation and concatenation operations, and encryption operations using the encryption keys (or, in some instances, performing other computable function).

For the purposes of this application, the terms "meeting the level of output difficulty", "satisfying the level of output difficulty", "meeting the current level of output difficulty", "satisfying the current level of output difficulty", "meeting the output difficulty level", "satisfying the output difficulty level", "meeting the current output difficulty level", "satisfying the current output difficulty level" and similar refer to being characterised by the fact of being, in whole or in part, composed of the value that has level of output difficulty big enough to allow for block production.

For the purposes of this application, the term "output difficulty level L" refers to the particular bigness (or height) of output difficulty level, which is not acceptable for block production.

For the purposes of this application, the term "winning ticket values" refers to the ticket values that, having performed an appropriate computable function (e.g., SHA-256), wherein said ticket values are at least a part of the input of said function, result in an output of said function meeting the current output difficulty level and allowing for block production.

For the purposes of this application, the terms "sequential number of the ticket value" and "sequential number of ticket value" refer to the number of times an incrementation operation needs to be performed in order to allow for the generation of a specific ticket value, including incrementation operations performed in the process of generating ticket values prior to the generation of said ticket value, wherein as part of the process of generating each of the mentioned ticket values (previous ones and the one in question) a number dependent on the hash of concatenated ticket values that allowed for block production (by having met output difficulty level) of the previous block and on the current target size of the ticket value is incremented (while one such incrementation operation can be a part of the process of generating many ticket values [whose generation consists of performing some further steps]); counting the number of incrementation operations performed is done separately for each set of ticket values generated (or being able to be generated) based on the balance of a single address that made encryption keys declaration allowing for generation of said set of ticket values. For example, if, in order to allow for the generation of a given ticket value, incrementation operation needs to be performed 100 times, then the sequential number of said ticket value is 100.

For the purposes of this application, the term "winning nodes" refers to the nodes that made encryption keys declarations that allow/allowed for the generation of the winning ticket values.

For the purposes of this application, the term "winning addresses" refers to the addresses using which encryption keys declarations were made, wherein said encryption keys declarations allow/allowed for the generation of winning ticket values.

For the purposes of this application, the terms "coinbase" and "coinbase transaction" refer to a transaction generating cryptocurrency units in the system as a reward for producing a block.

For the purposes of this application, the terms "using the Internet bandwidth of other nodes/node/satellite node/satellite nodes", "indirectly using the Internet bandwidth of other nodes/node/satellite node/satellite nodes", "using the Internet bandwidth of nodes/node/satellite node/satellite nodes" and "indirectly using the Internet bandwidth of nodes/node/satellite node/satellite nodes" refer to the act of using the Internet bandwidth of node(s), wherein said bandwidth is used in order to fulfil the task of sending and/or receiving ticket values to/from some nodes in the sub-network, by other node(s) indirectly (by delegating said task); this is done in order to, upon performing an appropriate computable function, wherein said ticket values are at least a part of an input of said function, find an output of said function that meets the current output difficulty level and allows for block production.

For the purposes of this application, the term "satellite nodes" refers to such nodes in a sub-network that, as part of the process of using the Internet bandwidth of other nodes, send and/or receive ticket values, which can be generated based on proper encryption keys declaration(s) made by other nodes, to/from some nodes in the sub-network in order to find winning ticket values.

For the purposes of this application, the term "node-address" refers to a node in a sub-network that can generate ticket values based on encryption keys declaration done by itself (by said node).

For the purposes of this application, the term "ticket values belonging to the address" (or "ticket values belonging to the addresses", if said term refers to plurality of addresses) refers to ticket values whose generation involves using encryption keys contained in the data blocks which were used to construct (from said data blocks) the Merkle tree, whose at least a part was published in the encryption keys declaration (or, alternatively, whose generation involves using encryption keys contained in the data blocks from which the second level Merkle tree was constructed, whose root is contained in one of the data blocks from which the first level Merkle tree, whose at least a part was published in the encryption keys declaration, was constructed), wherein said encryption keys declaration was done by said address.

For the purposes of this application, the term "addresses of satellite nodes-beneficiaries" refers to any addresses designated by the satellite nodes taking part in block production, which (said addresses) will be beneficiaries of the coinbase transaction for the production of said block.

For the purposes of this application, the term "winning nodes-addresses" refers to the nodes-addresses that take part in the production of a block and have due share in the coinbase transaction for the production of said block.

For the purposes of this application, the term "penalising transaction" refers to a special kind of transaction, included in one or more of the previous blocks, which proves that the entity that made said transaction knew (at the time said transaction was made) at least a certain amount of encryption keys that were contained in the data blocks from which the Merkle tree, whose at least a part was published in the encryption keys declaration made using a single address, was constructed (or, in some instances, contained in the data blocks from which the Merkle tree, whose root is contained in one of the data blocks from which another Merkle tree was constructed [whose at least a part was published in the encryption keys declaration made using a single address], was constructed). The previously mentioned penalising transaction, after including it in one or more blocks, allows for another transaction, proving (by means of Merkle proofs) that said penalising transaction was made correctly and truthfully, and taking away cryptocurrency units held in said address.

For the purposes of this application, the terms "penalise", "to penalise", "penalises" and similar refer to the act of subjecting someone/something (an address, a node-address, etc.) to penalising transaction.

For the purposes of this application, the term "main chain" refers to the chain of blocks whose blocks designate producers of blocks in another chain of blocks (i.e., sub-chain; the term "sub-chain" is defined in the following paragraph), wherein said another chain of blocks is subordinated to the main chain (as which entities are to become producers of blocks in said another chain of blocks and the timing of the production of blocks in said another chain of blocks depend on the contents of blocks in the main chain). The main chain does not contain state and state transitions, which are contained in said another chain of blocks.

For the purposes of this application, the term "sub-chain" refers to the chain of blocks that is subordinated to the main chain (because the entities to become producers of blocks in the sub-chain and the timing of the production of said blocks in the sub-chain depend on the contents of the blocks in the main chain). Sub-chain blocks contain state and state transitions. Sub-chain blocks are produced between the production of the blocks in the main chain.

For the purposes of this application, the term "vote" refers to a special kind of transaction that can include value(s) related to the occurrence(s) exogenous to the sub-network and can be included in the block (of the main chain) by its producer; if included, said transaction can designate the entity that made said transaction as the block producer in the sub-chain.

For the purposes of this application, the term "voting" refers to a process of casting a vote or votes and possibly, but not necessarily, to their inclusion in the main chain block.

For the purposes of this application, the term "maximal median deviation" refers to the system fixed parameter that determines how much any given entity that casts a vote can deviate in choosing a value, said value being a necessary part of the vote and being included in it, from the median of such values (included in all votes in a given main chain block in which said vote is included) obtained to be considered a valid (e.g., for the process of designating producers of blocks in a sub-chain) vote.

For the purposes of this application, the term "vote output" refers to an output of hash function performed for each value (used as an input) obtained by means of concatenating a certain vote included in the last block of the main chain and the hash output that allows for the main chain block production, wherein the input is formed of concatenated winning ticket values.

For the purposes of this application, the term "winning vote outputs" refers to vote outputs that, being (in the decimal form) sufficiently low numbers, allow for the designation of the producer of a block in a sub-chain.

For the purposes of this application, the terms "aware" and "being aware" or similar refer to having reached consensus by a sub-network regarding occurrences external (exogenous) to said sub-network (e.g., the sub-network may be aware of occurrence C, external to said sub-network, by reaching consensus on C; C can be any publicly available data).

For the purposes of this application, the term "proof' (not to be confused with "Merkle proof') refers to value(s) or data obtained using said value(s), reached in a sub-network as part of the process of reaching the consensus on certain occurrence(s) exogenous to said sub-network, that allows the aforementioned sub-network to be aware of said occurrence(s).

For the purposes of this application, the term "chain of proofs" refers to a verifiable chain of dependencies between the proofs obtained in many sub-networks, wherein at least one proof obtained in one sub-network relates to a proof obtained in another sub-network.

For the purposes of this application, the term "separation" refers to a process of separating one sub-network from another, wherein the state of the former is reduced by the number of units that will constitute the matrix state of the latter; furthermore, parameters and protocol rules determining the basic sub-network consensus are identical in both sub-networks involved in the process.

For the purposes of this application, the term "separated" refers to being/having been subjected to separation.

For the purposes of this application, the term "Intercon" refers to a system of decentralized consensus, as explained in the example embodiments.

For the purposes of this application, the term "Intercom" refers to a monetary unit used in the Intercon system, as explained in the example embodiments.

In the context of the present disclosure, the term "at least one of A or B" is to be understood as one of the following:
1.) A
2.) B
3.) both A and B

### DETAILED DESCRIPTION

The system described herein provides a mechanism for distributing transaction verification and propagation, so that no entity is solely responsible for performing calculations to verify and/or propagate transaction information.

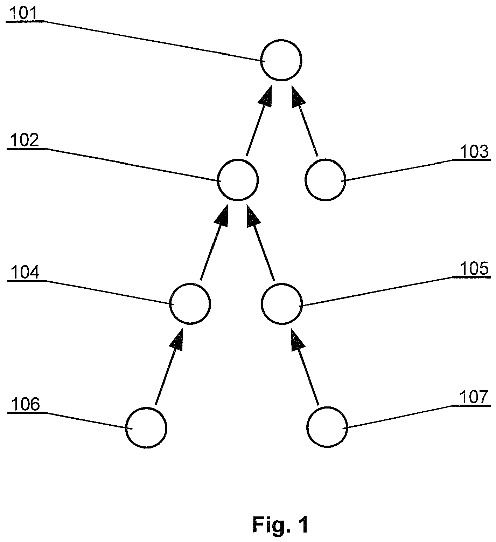

Fig. 1 illustrates an exemplary Merkle tree, used in an example presented in section 2 below. In Fig. 1, data blocks 106 and 107 consist of symmetric keys, only known to Alice. 101 is the Merkle root (of the Merkle tree illustrated). 104 is a hash of data in data block 106. 105 is a hash of data in data block 107. 102 is a hash of concatenated data from 104 and 105. 101 is a hash of concatenated data from 102 and 103. Fig. 1 illustrates only a part of the exemplary Merkle tree. The only element publicly available (in blockchain) for the nodes to see is the root of the Merkle tree and its depth.

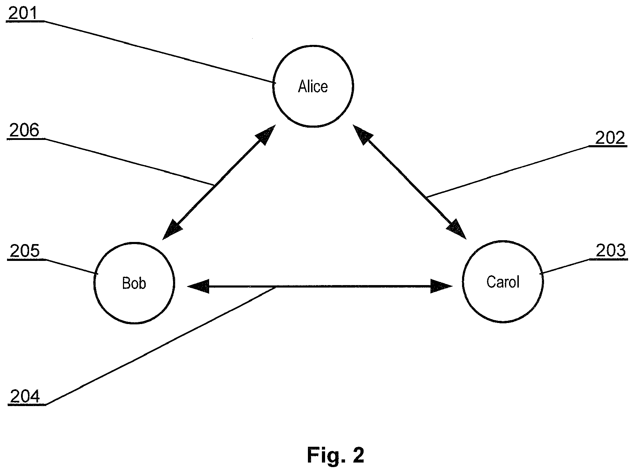

Fig. 2 diagrammatically and conceptually illustrates an example, wherein transmission of data in the form of ticket values occurs between exemplary nodes "Alice", "Bob" and "Carol", as exemplified in section 4 below. In Fig. 2, 201 represents node "Alice". 203 represents node "Carol". 205 represents node "Bob". Bidirectional arrows 202, 204, 206 denote the transmission of data in the form of ticket values from and to the nodes (from Alice to Bob; from Bob to Alice; from Alice to Carol; from Carol to Alice; from Carol to Bob; from Bob to Carol).

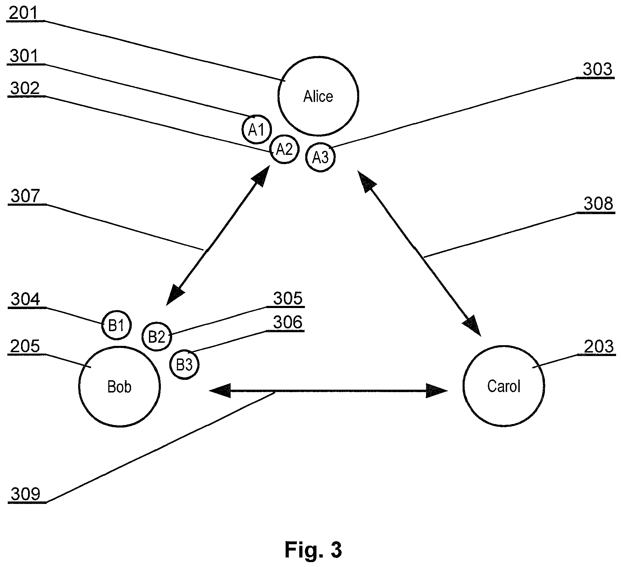

Fig. 3 illustrates an example, wherein satellite nodes indirectly make their Internet bandwidth available to Alice and Bob, as exemplified in section 5 below. In Fig. 3, 301, 302, 303, 304, 305, 306 are satellite nodes. 301 represents satellite node A1. 302 represents satellite node A2. 303 represents satellite node A3. 304 represents satellite node B1. 305 represents satellite node B2. 306 represents satellite node B3. Carol does not have any satellite nodes. Bidirectional arrows 307, 308, 309 denote the transmission of data in the form of ticket values between the satellite nodes and other satellite nodes, between the satellite nodes and node-address or between nodes-addresses.

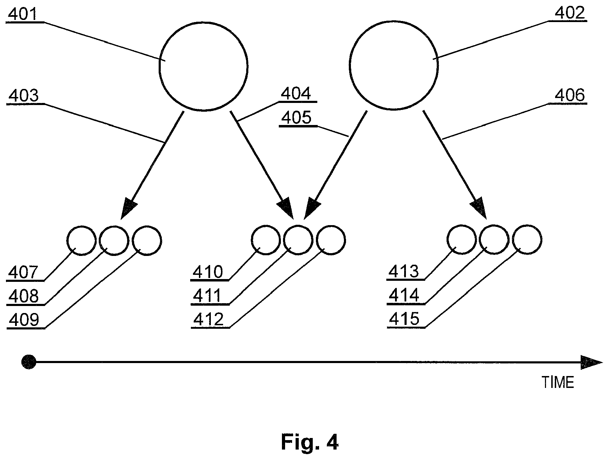

Fig. 4 diagrammatically and conceptually illustrates an example, wherein the relation between the main chain blocks and sub-chain blocks, as described in section 6 below, is exemplified. In Fig. 4, 401 and 402 represent the main chain blocks. 407, 408, 409, 410, 411, 412, 413, 414, 415 - sub-chain blocks. Arrows that point in the direction from a block of the main chain to the blocks of the sub-chain represent two functions of the main chain block: the left-pointing arrows 403 and 405 symbolise the confirmation of the sub-chain blocks generated within the period of time since the last main chain block; the right-pointing arrows 404 and 406 symbolise the designation of addresses for the production of blocks in the sub-chain within the period of time until the next block of the main chain. Each main chain block performs these two functions. The illustration presents only 3 sub-chain blocks between the main chain blocks.

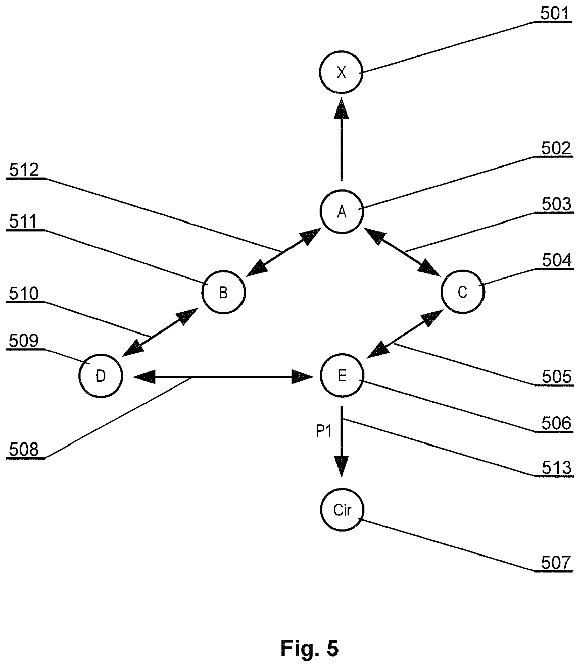

Fig. 5 diagrammatically and conceptually illustrates an example involving a hypothetical situation, exemplifying chains of proofs described in section 7 below. In Fig. 5, 502 represents sub-network A; 511 represents sub-network B; 504 represents sub-network C; 509 represents sub-network D; 506 represents sub-network E. Bilateral arrows 503, 505, 508, 510, 512 represent proofs regarding the state (and proofs) in another sub-network, obtained mutually (e.g., D obtains proof pertaining to E, and E that pertaining to D). 513 represents proof PI regarding a circumstance Cir occurring in the external world (in the example used in section 7 that proof relates to a stock exchange price of NEW AGE company shares). 507 represents the circumstance Cir. 501 represents transaction X.

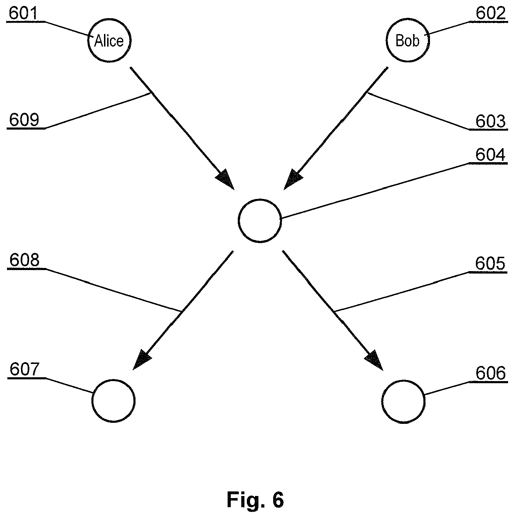

Fig. 6 diagrammatically and conceptually illustrates an example involving the exemplary agreement between Alice and Bob at the time of its conclusion (using a smart contract), as described in section 8 below. In Fig. 6, 601 represents node "Alice", which takes part in the agreement, as described in section 8 below. 602 represents node "Bob", which takes part in the agreement, as described in section 8 below. 609 represents Alice's payment of the equivalent of 1000 USD in INC (the symbol "INC" is explained below) to the address of smart contract. 603 represents Bob's payment of the equivalent of 1000 USD in INC to the address of smart contract. 604 represents the smart contract that freezes the equivalent of 2000 USD in INC (from Alice and Bob) for a certain time (in the example presented in section 8 below, it equals one year). 608 represents smart contract's payment of the 1000 USD-tokens (the term is explained below) to Alice. These tokens entitle to an equivalent of USD 1000 in INC after one year; tokens are transferable. 605 represents smart contract's payment to Bob. This payment is made in tokens that will entitle Bob to INC after one year from entering into the agreement (in an amount depending on the INC:USD exchange rate applicable at the time); tokens are transferable. 607 represents Alice's address after receiving the tokens. Alice can transfer the tokens (in whole or in part) or not. 606 represents Bob's address after receiving tokens. Bob can transfer the tokens (in whole or in part) or not.

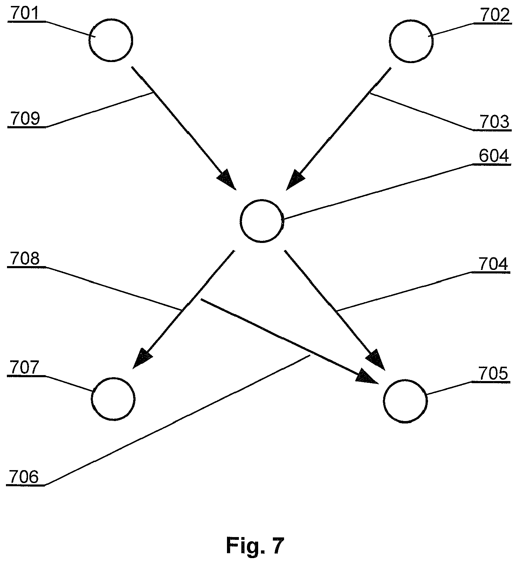

Fig. 7 diagrammatically and conceptually illustrates an example involving the termination of the exemplary agreement, originally concluded between Alice and Bob, after its term, as described in section 8 below. In Fig. 7, 701 represents node "Alice", which takes part in the agreement, or, pro rata, the next owner(s) of Alice's USD-tokens. 702 represents node "Bob", which takes part in the agreement, or, pro rata, the next owner(s) of Bob's tokens. 709 represents Alice's (or, pro rata, the next owner's [owners'] of Alice's USD-tokens) right to the equivalent of 1000 USD in INC in exchange for 1000 USD-tokens. 703 represents Bob's (or, pro rata, the next owner's [owners'] of Bob's tokens) right to the INC remaining in the address of smart contract after the payment represented by 708 and in exchange for Bob's (or their next owner's [owners']) tokens. 708 represents smart contract's payment of the equivalent of 1000 USD in INC (according to the INC/USD exchange rate at the moment of this payment) to Alice (or, pro rata, the next owner[s] of Alice's USD-tokens); from this payment the amount of the payment represented by 706 is automatically deducted. 704 represents smart contract's payment (to Bob or, pro rata, the next owner[s] of Bob's tokens) of the INC remaining in the address of smart contract after the payment represented by 708 and in exchange for Bob's (or their next owner's [owners']) tokens. 707 represents Alice's or (pro rata) next owner's (owners') of Alice's USD-tokens address(es) after receiving the payment represented by 708. 705 represents Bob's or (pro rata) next owner's (owners') of Bob's tokens address(es) after receiving the payment represented by 704. 706 represents the payment of the equivalent of 30 USD in INC (calculated according to an exchange rate at the moment the agreement started, illustrated in Fig. 6) made at the moment payments represented by 708 and 704 occur. This payment is made to address(es) represented by 705.

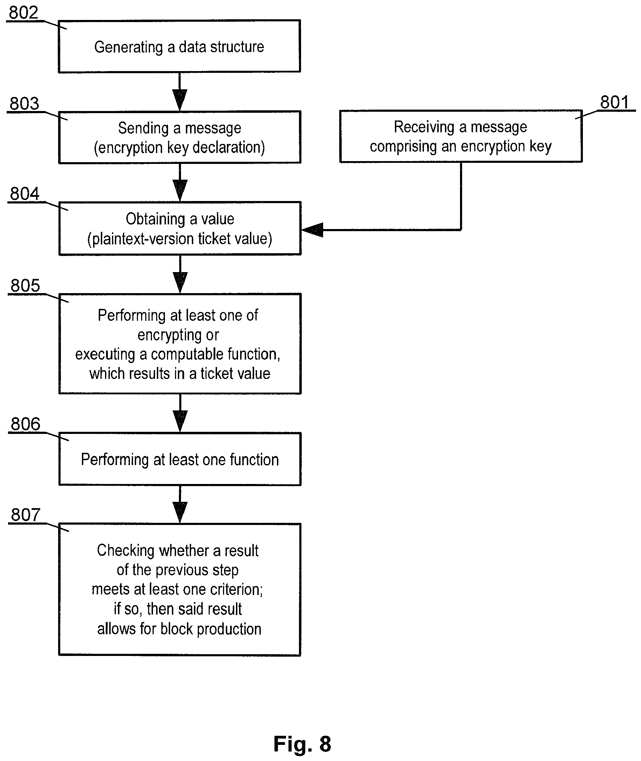

Fig. 8 diagrammatically and conceptually illustrates the steps of a computer-implemented method for an entity (either a satellite node or a node-address, depending on which steps are performed) to take part in a process aimed at choosing, from a plurality of entities, a producer of a new block of valid transactions in a blockchain, relative to a sequence of prior blocks in the blockchain. In Fig. 8, step 801 represents receiving (by the entity) a message that comprises at least one of a cryptographic key, which can be used for an encryption process, or a string. At least one prior block includes at least one part of a data structure. Said at least one part of the data structure allows for proving an inclusion of a particular data block within a set of data blocks that comprises components from which the data structure was constructed, wherein the particular data block contains the at least one of the cryptographic key, which can be used for the encryption process, or the string. Alternatively, said at least one part of the data structure allows for, together with other information, proving an inclusion of a particular data block within a set of data blocks that comprises components from which the data structure or another data structure was constructed, wherein the particular data block contains the at least one of the cryptographic key, which can be used for the encryption process, or the string. Step 801 is performed only if the entity functions (in the context of the method for the entity to take part in the process aimed at choosing, from the plurality of the entities, the producer of the new block of the valid transactions in the blockchain, relative to the sequence of the prior blocks in the blockchain) as a satellite node, i.e., the entity uses an encryption key received from another entity (node-address). This step can be performed in a number of ways as described in the examples discussed below. The aforementioned "cryptographic key" is referred to as an encryption key in the examples discussed below. Furthermore, the use of a string as an encryption key is described in at least one of the examples discussed below. An encryption key is suitable to be used in the process of generation of a ticket value according to one of succeeding steps, i.e., step 805. Step 802 represents generating (by the entity) a data structure. At least a first part of the data structure allows for proving an inclusion of a particular data block within a set of data blocks that comprises components from which the data structure was constructed, wherein the particular data block contains at least one of a cryptographic key, which can be used for an encryption process, or a string. Alternatively, at least a first part of the data structure allows for, together with other information, proving an inclusion of a particular data block within a set of data blocks that comprises components from which the data structure or another data structure was constructed, wherein the particular data block contains at least one of a cryptographic key, which can be used for an encryption process, or a string. Step 802 can be performed in a number of ways as described in the examples discussed below. The aforementioned "cryptographic key" is referred to as an encryption key in the examples discussed below. Furthermore, the use of a string as an encryption key is described in at least one of the examples discussed below. Step 803 represents sending (by the entity) a message in a peer-to-peer network. The message is composed of at least a second part of the data structure mentioned in the step 802. The message is included after having been sent in at least one of the prior blocks. This step can be performed in a number of ways as described in the examples discussed below. The aforementioned "message" is referred to as an encryption key declaration/encryption keys declaration/declaration of encryption keys in the examples discussed below. Step 804 represents obtaining (by the entity) a value that is at least partly relative to contents of one or more of the prior blocks. Step 804 can be performed in a number of ways as described in the examples discussed in section 3 below. The aforementioned "value" is referred to as a plaintext-version ticket value/plaintext-version of ticket value in the examples discussed below. Step 805 represents performing (by the entity) at least one of encrypting at least one part of the value using the cryptographic key to produce an encrypted value or executing a computable function based on said at least one part of the value and at least a part of the string, which produces a function output. This step can be performed in a number of ways as described in the examples discussed in section 3 below. The result of said performance is referred to as a ticket value (or final ticket value) in the examples discussed below. Step 806 represents performing (by the entity) at least one function, wherein data comprising at least one of at least one part of the encrypted value or at least one part of the function output are at least a part of an input of the at least one function performed, to produce a ciphertext. This step can be performed in a number of ways as described in the examples discussed in sections 4 and 5 below. Said performance is done in search for winning ticket values, as described in the examples discussed in sections 4 and 5 below. Furthermore, in some instances, this step comprises having the entity concatenate the data comprising the at least one of said at least one part of the encrypted value or said at least one part of the function output with other data, received by the entity as a part of a data exchange aimed at finding an appropriate result of a concatenation process, and performing at least one cryptographic operation. Step 807 represents checking the ciphertext against at least one criterion, wherein meeting said at least one criterion by the ciphertext allows for producing the new block of the valid transactions by the entity or by another entity. This step can be performed in a number of ways as described in the examples discussed in sections 4 and 5 below. Said checking is done against at least the current level of output difficulty. If the ciphertext meets the at least one criterion, then the ciphertext allows for block production.

Fig. 9 diagrammatically and conceptually illustrates the steps of a computer-implemented method for an entity to establish a measure of a central tendency for a data set composed of at least one value related to an occurrence exogenous to a distributed ledger, in which transactions are organised in blocks forming a blockchain, and to produce a new blockchain block, wherein the new blockchain block includes at least one of the measure of the central tendency or at least some of outcomes of processes that are at least partly related to the measure of the central tendency (said processes can be or represent any kind of transactions). In Fig. 9, step 901 represents receiving (by the entity) data comprising said at least one value related to the occurrence exogenous to the distributed ledger. This step can be performed in a number of ways as described in the examples discussed in section 6 below. The aforementioned "data" are referred to as vote(s) in the examples discussed below. Step 902 represents checking (by the entity) if the data (vote[s]) are valid according to at least one protocol rule. This step can be performed in a number of ways as described in the examples discussed in section 6 below. Step 903 represents computing (by the entity) the measure of the central tendency for the data set composed of said at least one value related to the occurrence exogenous to the distributed ledger. This step can be performed in a number of ways as described in the examples discussed in section 6. Furthermore, in some instances, this step further comprises having the entity execute at least some of the processes (said processes can be or represent any kind of transactions). This execution can be performed in a number of ways as described in the examples discussed below, especially in sections 6 and 7. Step 904 represents producing (by the entity) the new blockchain block that includes the at least one of the measure of the central tendency or the at least some of the outcomes of the processes that are at least partly related to the measure of the central tendency. This step can be performed in a number of ways as described in the examples discussed below.

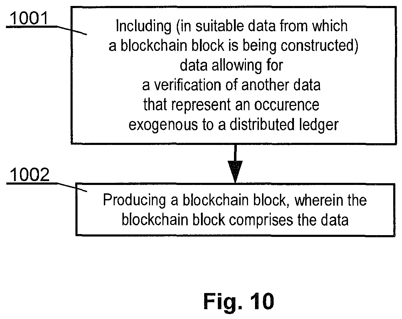

Fig. 10 diagrammatically and conceptually illustrates the steps of a computer-implemented method for an entity to produce a new blockchain block, wherein the new blockchain block includes data allowing for a verification of another data that represent an occurrence exogenous to a distributed ledger, wherein the other data were reached by a consensus within the distributed ledger or within another distributed ledger. In Fig. 10, step 1001 represents including (by the entity), in suitable data from which the new blockchain block is being constructed, the data allowing for the verification of the other data that represent the occurrence exogenous to the distributed ledger. Said data comprise at least one part of a data structure. Said at least one part of the data structure allows for proving an inclusion of a particular data block within a set of data blocks that comprises components from which the data structure was constructed, wherein the particular data block contains the other data that represent the occurrence exogenous to the distributed ledger. Alternatively, said at least one part of the data structure allows for, together with other information, proving an inclusion of a particular data block within a set of data blocks that comprises components from which the data structure or another data structure was constructed, wherein the particular data block contains the other data that represent the occurrence exogenous to the distributed ledger. Step 1001 can be performed in a number of ways as described in the examples discussed below. Section 7 below presents examples exemplifying how the data can allow for the verification of the other data that represent the occurrence exogenous to the distributed ledger. The way this can be achieved is illustrated in an exemplary way in Fig. 5. Step 1002 represents producing (by the entity) the new blockchain block comprising the data.

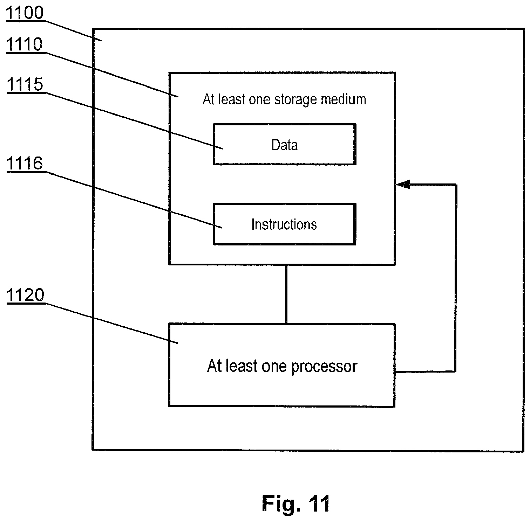

The methods described herein can be implemented in a computer-implemented system 1100, such as shown in Fig. 11. The computer-implemented system 1100 may comprise at least one non-transitory processor-readable storage medium 1110, which stores at least one of processor-executable instructions 1116 or data 1115, and at least one processor 1120 communicably coupled to the at least one non-transitory processor-readable storage medium 1110. The at least one processor 1120 is configured to (by executing the processor-executable instructions 1116) perform the steps of the methods.

For concreteness only, in some portions of the description that follow, the Intercon system is described as a decentralised system for financial transactions. Those skilled in the art will realise that Intercon can handle many other kinds of transactions as well. Intercon has a flexible design and can be implemented in various, but related, ways. Those skilled in the art will realise that many variants of the basic embodiments, which are presented here, can be derived therefrom.

For better understanding, this description is presented in the form of numbered sections, wherein subsequent sections introduce new elements of the system and methods for optimising the functioning of the components already described in the previous section(s).

### SECTION 1: GENERAL DESCRIPTION

This disclosure describes a system of decentralised consensus, operating based on peer-to-peer network(s) and blockchain technology. Every sub-network allows for obtaining consensus on the current state and state transitions occurring both within said sub-network and, in some instances, within any other sub-network (by means of the chains of proofs); or, in some instances, for obtaining consensus on any publicly known circumstance existing in the external world. This would be performed by means of a periodical vote based on the logic of the Schelling point scheme, allowing for establishing the interdependencies between sub-networks and, among others, atomic transactions between the latter, transactions mediated by real-world factors, infinite scalability. The proposed method for obtaining a consensus by, *inter alia,* sending and receiving the large volumes of data would allow for the major factor determining the distribution of new Intercoin units (gained as a reward for, e.g., producing blocks) being the amount of used Internet bandwidth of the nodes.

In some instances, each system user could generate asymmetric key pair(s) and share their address(es), generated based on public key(s), with other users (just like the bank account number is shared with a contractor in order to be able to receive the payment). Addresses having funds (in the form of Intercoin units) would be publicly available for inspection to all nodes. Each transaction would reduce the balance of one of the addresses in order to increase the balance of another.

### SECTION 2: BASIC PRINCIPLES - INITIAL STATE OF A SINGLE SUB-NETWORK

In some instances, participation in the consensus is based on the number of Intercoin units held, i.e., the more of the Intercoin units an address holds (and uses to make encryption keys declaration and, consequently, to participate in consensus), proportionally the more likely said address is to become a block producer. Let us assume, in the example presented here, that the matrix state of the first Intercon sub-network will consist of three addresses with the balances as follows:
Alice's address - 5 Intercoins
Bob's address - 3 Intercoins
Carol's address - 6 Intercoins
In the example presented here, this is the state at the beginning of the sub-network's existence. The names of the nodes are introduced for illustrative purposes only. For its operation to begin, nodes Alice, Bob and
Carol (whom may [here and hereinbelow] also be referred to as "he" - Bob, "she" - Alice or Carol, or "it" - a node [Alice, Bob or Carol]) would need to agree on a specific moment, expressed, e.g., in the CET time, of the starting time of the sub-network. Let us assume this time to be 12:00 01-01-2022 CET. We assume that system clocks in Alice's, Bob's and Carol's devices are synchronised (with some acceptable margin of error) at the starting time of operation of the sub-network.

Intercon's consensus mechanism will be described in greater detail in the following sections; the point is, in some instances, only addresses that have made (before the last checkpoint) an appropriate encryption key declaration can participate therein; checkpoints occur at specific intervals (here, we assume that a checkpoint occurs in the last block of each 1000 blocks). In some further instances, addresses that have made encryption keys declaration after the last checkpoint may participate in the consensus; checkpoints may occur at various intervals.

In some instances, in accordance with the Intercon consensus mechanism (described below), in order for the addresses to participate in the consensus, the addresses must perform a special transaction, namely an encryption keys declaration. The matrix state must therefore include addresses, balances thereof and their encryption keys declarations.

In the example presented here, the first sub-network starts operating at 12:00 01-01-2022 CET. Each node that joins said sub-network will have a matrix state hardcoded in its client software. The first block on which a consensus needs to be reached in the sub-network is the one at height 1.

Let us now see some elements of the mechanism of the sub-network obtaining consensus on its state in block 1 and state transitions that occur therein.

Let us assume that, in the example presented here, in the matrix state there are 3 addresses with their balances and encryption keys declarations allowing for the participation in the consensus (explained below):
State:
Alice 5 INC (here, INC is symbol for Intercom)
Bob 3 INC
Carol 6 INC

This means that 3 addresses will be allowed to participate in the process of consensus regarding block 1: Alice's, Bob's, and Carol's.

In the example presented here, assuming that Alice, Bob and Carol are connected to the sub-network and that all three actively compete for the right to produce block 1, each of them will have an opportunity to be selected to produce this block directly proportional to the number of INC units held in the matrix state.

In some instances, in addition to basic data, such as balance, hashed public key, etc., each address that made currently valid encryption keys declaration will be associated with a data field generated by its owner (with the exception of the matrix state where encryption keys declarations are predefined), containing the root of Merkle tree constructed from data blocks containing cryptographic symmetric keys to be used to exercise the right to participate in the consensus arising from the units held in a given address. In the blockchain itself, said symmetric keys will not be stored (saved) anywhere; the only element to be publicly available will be the root of Merkle tree and its depth.

Let us assume that, in the example presented here, Alice's address in the matrix state comprises the following data:
Address: 1BvBMSEYstWetqTFn5Au4m4GFg7xJaNVN2
Balance: 5 INC
Merkle root: 3735fdaa7201f5bfac677c6ba6ee6de5c91d63930236c02fa725af53ca06521d
Merkle tree depth: 2

Assuming that we only use binary Merkle trees, the depth of Merkle tree 2 means that the hashes of the data blocks (leaves) are at the third level; the total number of data blocks from which the Merkle tree was constructed is 4.

In some instances, each address will be able to include any number of encryption keys in the data blocks from which Merkle tree, which that address generates, is constructed. When the address owner generates and publishes, by means of an encryption keys declaration (signed with a private key associated with the address), the root of Merkle tree constructed from the data blocks containing the generated encryption keys, the address owner declares the encryption keys they will use in a specific number of the subsequent blocks following the next checkpoint (explained below). In some further instances, the address owner declares the encryption keys they will use in a specific number of the subsequent blocks following some other event in the blockchain.

Furthermore, in some instances, an asymmetric key can be contained in one of data blocks from which Merkle tree is constructed, to be used as an encryption key (to be used in the process of generating ticket values by performing an encryption; said process is described in the following section), instead of a symmetric key. In such a case, an asymmetric key is used in the process of encryption instead of a symmetric key.

Furthermore, in some instances, a string may be contained as an encryption key in one of data blocks from which a relevant Merkle tree (i.e., constructed from data blocks storing applicable encryption keys) is constructed, to be used as an encryption key in the process of generating ticket value(s). In such a case, generation of a ticket value using such an encryption key (in the form of a string) is performed as described in the last paragraph of the following section.

Furthermore, in some instances, an address owner can publish, by means of an encryption keys declaration (signed with a private key associated with the address), other part of a Merkle tree (other than a root) constructed from data blocks containing the generated encryption keys.

Furthermore, in some further instances, a (suitable) data structure other than the one used in exemplary embodiments presented in this section can be used as a Merkle tree, in a way analogous to as described in the present section. Said data structure may be, e.g., a linear data structure, a graph, another tree data structure or a hash-based data structure. In such a case, said data structure stores encryption keys in a way analogous to how it is described in the present section.

In the example presented here, the interval between checkpoints is 999 blocks. The checkpoint occurs every thousandth block. The next checkpoint will occur in block 1000, the next one in block 2000, etc. Any address wishing to participate in the consensus should declare, by means of a special and irreversible transaction (i.e., encryption keys declaration), the encryption keys that may be used by said address for the consensus in the sub-network in the next 1000 blocks, but counting from the first block after the next checkpoint (e.g., encryption keys declaration in any of the blocks 1001-2000 will declare the encryption keys that may be used for the consensus on the blocks 2001-3000 etc.; once made and included in the blockchain, the encryption keys declaration may not be altered or revised).

Let us assume that, in the example presented here, Alice's address from the matrix state is associated with a proper encryption keys declaration (included in the matrix state along with the Alice's address; said declaration would normally be made by Alice, but because said declaration is already included in the matrix state, it does not need to be made by Alice by way of proper transaction) with the root of Merkle tree constructed from data blocks containing encryption keys that Alice will be able to use for participation in the consensus process that selects the producers of the blocks at blockchain heights from 1 to 1000.

In the example presented here, this also means that Alice will have to, in order to maintain an uninterrupted ability to participate in the consensus, publish in any block at blockchain heights between 1 and 1000 an encryption keys declaration, signed by Alice (using the private key associated with Alice's address), that will determine the encryption keys for Alice to use in the consensus over a period of time from block 1001 to block 2000. If Alice fails to publish such a transaction (encryption keys declaration) in any block up to 1000, Alice will be able to participate in the consensus only starting from block 2001, provided that Alice publishes an encryption keys declaration in any block 1001 to 2000. In our example, blocks numbered 1000, 2000, 3000, etc. are checkpoints. In the example presented here, each address may determine (using encryption keys declaration) encryption keys to be used by said address over the period starting after the next checkpoint to the subsequent one, but not further. After making such a declaration, the declaring address is "frozen", i.e., said address cannot send or receive funds (decrease or increase its balance) until checkpoint, to the participation in consensus on which said address is entitled to by the encryption keys declaration in question (e.g., encryption keys declaration at a height of 1500 means that the address cannot be used to send funds or receive funds up to block 3000 inclusive, since the declaration covers blocks 2001 to 3000). In some further instances, the declaring address may be frozen partially or not at all; the interval in which the address is frozen may be different.

In the example presented here, in order to make the consensus protocol secure, it should be assumed that the encryption keys declaration can only be included (if it is assumed that checkpoints occur every 1000 blocks) in the first, e.g., 800 blocks after each checkpoint, leaving 200 blocks (before the next checkpoint) without encryption keys declarations. Thus, any undesirable phenomena (such as forks) to occur in the last 200 blocks after checkpoint will not affect the consensus on who can participate in the production of blocks after the next checkpoint (based on encryption keys declaration made).

It is important to understand that the above solution allows, in the example presented here, for any node that synchronises with the sub-network at a height of, e.g., 1801-2000 to know the following:
- the roots of Merkle trees constructed from data blocks containing encryption keys that may be used by addresses that declared encryption keys (each address may use appropriate encryption keys, which said address declared) by means of an encryption keys declaration (e.g., addresses that did not declare encryption keys using encryption keys declaration in blocks 1001-1800 will not be able to participate in the consensus by means of encryption keys until the block after the next checkpoint, i.e., up to a height of 3001) to participate in a consensus at blockchain heights from 2001 to 3000;
- the balances of the addresses which declared encryption keys by means of encryption keys declarations in each subsequent block within blocks 1001 to 1800.

This is crucial, as it leads to a conclusion (as will become more evident) that this knowledge allows, in some instances, each such node for autonomous verification of the correctness of the blockchain, which, e.g., will be sent to said node by its peer when said node will re-synchronise with the sub-network after leaving said sub-network.

In some instances, each encryption key will allow for generation of a set of ticket values. Since the success consisting in producing a block and obtaining a reward for such production will be dependent on the number of the ticket values to the generation of which an address is entitled, given that said number is directly proportional to the balance of this address at the time of declaration of encryption keys; each address will be able to declare any number of encryption keys (by means of a declaration of a root of Merkle tree together with the depth thereof in an encryption keys declaration) without the latter changing the number of ticket values to the generation of which an address is entitled and statistical opportunity to produce the block.

Let us now adopt the following assumptions:
- in some instances, for each block at a certain blockchain height (or for more of such blocks, if fork occurs) that will be produced through the consensus of a sub-network, each address must declare (by means of an encryption keys declaration) unique encryption keys to be used in the process of consensus on this block (participating in the consensus, the same encryption key cannot be used for two blocks at different heights); in some further instances, the same encryption key can be used for two (or more) blocks at different heights;
- in some instances, each address may declare, by means of an encryption keys declaration, one root of Merkle tree; this Merkle tree will not be constructed from the data blocks directly containing encryption keys to be used in the process of consensus on blocks (in the range from the block after the next checkpoint to the subsequent checkpoint) as previously described; instead, this Merkle tree will be constructed from the data blocks containing the roots (one data block containing one Merkle root) of other Merkle trees together with their depths, in a number identical to the number of blockchain blocks from the block after the next checkpoint to the subsequent checkpoint; and only these other Merkle trees will be constructed from the data blocks containing encryption keys, separately for each blockchain height (one Merkle tree constructed from the data blocks containing encryption keys to be used for participation in consensus on one block [or possibly more of such blocks, if fork occurs] at a specific blockchain height); in some further instances, the above-mentioned numbers may vary;

- in some instances, each node, following the analysis of the depth of Merkle trees (declared together with the root of each Merkle tree generated by the address owner) can calculate, assuming that all Merkle trees are binary and no data block is empty or duplicated, how many non-empty and non-duplicated data blocks were used to construct a particular Merkle tree. Let us see how, in the example presented here, an encryption keys declaration published by Alice at a height of blockchain, e.g., 2100 (which, placed in block 2100, automatically "freezes" Alice's address up to block 4000, disallowing its balance to be increased or decreased similarly to as previously described), could be characterised:
   Block height: 2100
   Address: 1BvBMSEYstWetqTFn5Au4m4GFg7xJaNVN2
   Address balance: 5 INC

1 INC entitles to the performance of 5000 incrementation operations in the process of generation of ticket values per block (said incrementation operations are described in next section)

Entitlement of the address to perform incrementation operations in the process of generation of ticket values for each blockchain block in the range from 3001 to 4000: 25000 incrementation operations/block

The root of the first level Merkle tree, which is constructed from data blocks containing roots of the second level Merkle trees, which are constructed from the data blocks containing encryption keys to be used for consensus (in the example presented here, on blocks 3001-4000):
3735fdaa7201f5bfac677c6ba6ee6de5c91d63930236c02fa725af53ca06521d
The depth of the first level Merkle tree: 10
Number of leaves in the first level Merkle tree: 1024
Number of empty (not valid) leaves in the first level Merkle tree: last 24
Number of non-empty (valid) leaves in the first level Merkle tree: 1000 (first 1000)

The number of the data block from the set of data blocks from which the first level Merkle tree was constructed, containing the root of the second level Merkle tree which was constructed from the data blocks containing encryption keys that can be used in the consensus on the block at a height of 3001: 1 (first out of 1000 non-empty data blocks)

The number of the data block from the set of data blocks from which the first level Merkle tree was constructed, containing the root of the second level Merkle tree which was constructed from the data blocks containing encryption keys that can be used in the consensus on the block at a height of 3002: 2 (second out of 1000 non-empty data blocks)

The number of the data block from the set of data blocks from which the first level Merkle tree was constructed, containing the root of the second level Merkle tree which was constructed from the data blocks containing encryption keys that can be used in the consensus on the block at a height of 4000: 1000 (thousandth out of 1000 non-empty data blocks)

Data not disclosed in the blockchain (known only by the address owner):
Data block no. 1 from the set of data blocks from which the first level Merkle tree was constructed: 1cdf62124b11d97f0f820d3dc573b4e9da0967434eb98c15bc0a6f0def88fc50
(Data block no. 1 from the set of data blocks from which the first level Merkle tree was constructed contains the root of second level Merkle tree, constructed from the data blocks containing encryption keys that can be used for consensus on the blockchain block at a height of blockchain 3001.)
The depth of the (also binary) second level Merkle tree (constructed from the data blocks containing encryption keys) whose root is contained in data block no. 1 from the set of data blocks from which the first level Merkle tree was constructed: 12
The depth of the second level Merkle tree (constructed from the data blocks containing encryption keys) whose root is contained in data block no. 2 from the set of data blocks from which the first level Merkle tree was constructed: 13
The number of leaves in the second level Merkle tree whose root is contained in data block no. 1 from the set of data blocks from which the first level Merkle tree was constructed: 4096 (2¹², since there are 13 levels)
The number of leaves in the second level Merkle tree whose root is contained in data block no. 2 from the set of data blocks from which the first level Merkle tree was constructed: 8192 (2¹³, since there are 14 levels)
The number of encryption keys that the address can use in the process of consensus on block 3001: 4096 (generated by the owner of the address and known thereto at the time of generation; it is assumed that no leaves are empty or duplicated)
The number of encryption keys that the address can use in the process of consensus on block 3002: 8192 (2¹³, generated by the owner of the address and known thereto at the time of generation; it is assumed that no leaves are empty or duplicated)
The number of incrementation operations that can be performed while generating ticket values using one encryption key for the purpose of taking part in the process of consensus on block 3001: 25000/4096=6.103515625
The number of incrementation operations that can be performed while generating ticket values using one encryption key for the purpose of taking part in the process of consensus on block 3002: 25000/8192=3.0517578125

In some instances, the number of incrementation operations that can be performed while generating ticket values using one encryption key is the quotient, wherein the divisor is the number of encryption keys (declared by the address [by means of an encryption keys declaration] for consensus on the block at a given blockchain height) and the dividend is the number of incrementation operations to the performance of which (using said encryption keys) a particular address is entitled. In the example presented here, related to Alice's key and at a height of 3001, again, this will be:
The number of incrementation operations that can be performed while generating ticket values using one encryption key for the purpose of taking part in the process of consensus on block 3001 is 6.103515625, because 25000/4096=6.103515625

In some instances, since this number must be an integer, it needs to be rounded. The real number is rounded to an integer, always rounding it towards zero. In the example presented here:
The number of incrementation operations that can be performed while generating ticket values using one encryption key for the purpose of taking part in the process of consensus on block 3001 is 6, because 25000/4096=6.103515625≈6

Thus, by participating in the consensus described below, in our example related to block 3001, Alice will be able to perform the following:
The first 6 incrementation operations: as part of the process of generating ticket values using the first encryption key (contained in the first data block from the set of data blocks from which the second level Merkle tree was constructed, wherein said second level Merkle tree was constructed from the data blocks containing encryption keys that can be used in the consensus on the blockchain block at height 3001);
The next 6 incrementation operations: as part of the process of generating ticket values using the second encryption key (contained in the second data block from the set of data blocks from which the second level Merkle tree was constructed, wherein said second level Merkle tree was constructed from the data blocks containing encryption keys that can be used in the consensus on the blockchain block at height 3001);
etc.

It is important that, in some instances, the balance of each address that declared its encryption keys by means of an encryption keys declaration, valid for the consensus from the block after the next checkpoint to the subsequent checkpoint, does not change until the checkpoint to whose blockchain height thus declared encryption keys are valid (e.g., according to the example presented here, the declaration of encryption keys in block 2200 would make it impossible to change the balance of the address up to block 4001, since the encryption keys would be valid for the consensus on blocks 3001 to 4000). This allows for penalisation of malicious addresses by means of penalising transactions, as will be described in section 5.

In some instances, any suitable data structure(s) may be used, *mutatis mutandis,* in a way analogous to how the use of hash tree(s) is presented in the exemplary embodiments in this section. Said suitable data structure may be, e.g., a linear data structure, a graph, another tree data structure or a hash-based data structure.

### SECTION 3: BASIC PRINCIPLES - TICKET VALUES

In some instances, the consensus in the Intercon system is reached, *inter alia,* using ticket values, generated according to methods described in this section. However, in some further instances, ticket values may be determined by the circumstances other than those described in the present section.

In some instances, consensus participants generate ticket values according to steps that are described below generally and by presenting an example.

In some instances, the process of creating ticket values by consensus participants comprises the following steps:
1. In some instances, consensus participants generate the hash of concatenated ticket values that allowed for block production (by having met the output difficulty level) of the previous block (in some further instances, the consensus participants can use a different value to hash; furthermore, the consensus participants can use a different cryptographic function). In the example presented here, a block at a blockchain height of 3100 has just been propagated in the sub-network and the consensus has begun on block 3101. Alice declared (by means of an encryption keys declaration) in one of the blocks at a blockchain heights between 2001 and 2800 encryption keys to be used for consensus on blocks 3001 to 4000; Alice's address was then "frozen", and its balance was 5 INC, which allows Alice to perform 25,000 incrementation operations (described below) in the process of generating ticket values to be used for the consensus on the production of each block at blockchain heights from 3001 to 4000. Assuming that Alice has declared (by means of an encryption keys declaration) 4096 encryption keys for block 3101, the amount of incrementation operations that Alice can perform as part of process of generating ticket values using one encryption key (the process is described below) is, rounded towards zero, 6. Alice generates the hash of concatenated ticket values that allowed for block production (by having met output difficulty level) of block 3100. Let us assume that this hash is 53f5e2b88e29c2c04190fc16d60242d2ca546f6870194d8300588104013b942d
2. In some instances, consensus participants convert hexadecimal hash into a decimal value. In the example presented here, Alice converts hexadecimal hash 53f5e2b88e29c2c04190fc16d60242d2ca546f6870194d8300588104013b942d into a decimal value and obtains the following number: 37976408733557900610306960108552563814856946093575738771214560540391368266797
3. In some instances, consensus participants verify the current target size of the ticket value. This size is variable and periodically adjusted in the sub-network. Periodically, the time it took, on average, to produce a block during a particular period is measured (based on the blocks' time stamps). Then, depending on the result, the target size of the ticket value is increased to slow down the production of blocks, or decreased for the reverse effect. Crucially, when referring to increasing and decreasing this size, what is meant is an increase and decrease thereof achieved by increasing or decreasing the difficulty level by the number of zeroes after one (since said reference, rather to the value as such, is made to the number of digits, that is to say the size of the data of which it consists). The difficulty level is expressed as the number of zeroes after one (in some further instances, it can be expressed using different values).

The higher the current level thereof, the greater the number that consensus participants will need to add to the (decimal) number described in item 2. Let us assume that, in the example presented here, the current difficulty level is 250. This means that to the number from item 2, Alice needs to add the following number: 1000000000000000000000000000000000000000000000000000000000000000000000000000000000000 0000000000000000000000000000000000000000000000000000000000000000000000000000000000000 000000000000000000000000000000000000000000000000000000000000000000000000000000000 - one and 250 zeroes. In many instances, these figures will be much larger. Their task is to increase the size of the data of which the message, encrypted with an encryption key (i.e., a symmetric key), consists. The size of the data in question relates to the size of such messages as is desirable in the sub-network to decrease or increase the rate at which said messages (encrypted) will be propagated across the sub-network, which will translate into the production frequency of the blocks, as will be explained afterwards.

In some instances, before each checkpoint, a calculation is performed of the number of possible combinations (that can be obtained in the process of concatenating ticket values in order to hash said ticket values after concatenation [which is described in section 4 and section 5 below and relates to finding the winning ticket values]) of ticket values, achievable in the sub-network (at every blockchain height) after the checkpoint in question (the sum of the balances of addresses that can participate in the consensus as a result of the declarations of encryption keys potentially undergoes a transition; and the larger the sum of balances, the more combinations of ticket values achievable, wherein this relation is not linear, which has a positive effect on the security of the system). Therefore, in addition to the periodical mechanism for increasing or decreasing the target size of the ticket value described above, another mechanism should occur at the same time adjusting said size, whereby it is decreased or increased proportionally (in terms of, e.g., the number of zeroes) to the change in the number of possible combinations of ticket values achievable in the sub-network (at each blockchain height) after the checkpoint, e.g., C (and until the subsequent one), said change occurring in relation to the number of possible combinations of ticket values achievable in the sub-network (at each blockchain height) after the preceding checkpoint (preceding C) and until the subsequent one (C); the calculated adjustment takes place upon reaching the block immediately succeeding checkpoint C. In other words, if, in relation to the given checkpoint in the blockchain, the number of possible combinations of ticket values achievable in the sub-network (at each blockchain height) from a block after that checkpoint (and until subsequent checkpoint) is greater than said number in relation to the preceding one (checkpoint), the target size of the ticket value will decrease proportionally and vice versa, so that the statistical size of the data that the nodes will propagate (as will be described below) in the form of the ticket values will be independent of fluctuations in the number of possible combinations of ticket values achievable in the sub-network (at each blockchain height), depending on the changes in the amount of Internet bandwidth used by the nodes. In some further instances, the described calculations and occurrences can take place at other instances of time and in various, but analogous, ways.

In some instances, both of these mechanisms, adjusting the target size of the ticket value, will occur independently from each other. One guarantees that target size of the ticket value will vary depending on the amount of Internet bandwidth used by the nodes (as will be described below); while the other ensures that said target size of the ticket value will vary depending on the number of possible combinations of ticket values achievable in the sub-network (at each blockchain height) that vary due to the sum of the balances of the addresses that can participate in the consensus.

4. In some instances, consensus participants add the number described in item 2 to the number described in item 3. In the example presented here, Alice adds the number used as an example in item 2 to the number used as an example in item 3. The result is: 10,000,000,000,000,000,000,000,000,000,000,000,000,000,000,000,000,000,000,000,000,000,000,000,00 0,000,000,000,000,000,000,000,000,000,000,000,000,000,000,000,000,000,000,000,000,000,000,000,000 ,000,000,000,000,000,000,000,000,000,037,976,408,733,557,900,610,306,960,108,552,563,814,856,946, 093,575,738,771,214,560,540,391,368,266,797. Thus, said result is a number whose data size (e.g., expressed in bits) is greater than that of the number's used as an example in item 2. Therefore, it would also be larger (in terms of data size) after being encrypted with a symmetric key (encryption key).

5. In some instances, each one of certain nodes (nodes-addresses and satellite nodes; please refer to section 4 and section 5 for clarification) is entitled to generate some number of ticket values in order to participate in consensus on one block (or more of such blocks, if fork occurs) at any given blockchain height (covered by the relevant declaration of encryption keys), in line with the address balance at the time of declaring encryption keys (by means of an encryption keys declaration) that can be used to generate these ticket values. Ticket values, in some instances, are generated by incrementing (or performing other computable function) the number described in item 4 (not necessarily the number that was used as an example in item 4) by 1 (one) and, following each incrementation, performing certain concatenation and encryption operations. In the example presented here, in line with the address balance at the time of declaring (by means of an encryption keys declaration) encryption keys, Alice is entitled to perform 25,000 incrementation operations in the process of generating ticket values for each block in the range from 3001 to 4000. Alice performs 25,000 incrementation operations for block 3101 by incrementing the number used as an example in item 4 by 1 (one) 25,000 times. Following each incrementation, Alice treats each resulting number as the base for creation of many plaintext-version (not yet encrypted with a proper encryption key) ticket values. The first number, resulting from incrementation, is 10,000,000,000,000,000,000,000,000,000,000,000,000,000,000,000,000,000,000,000,000,000,000,000,00 0,000,000,000,000,000,000,000,000,000,000,000,000,000,000,000,000,000,000,000,000,000,000,000,000 ,000,000,000,000,000,000,000,000,000,037,976,408,733,557,900,610,306,960,108,552,563,814,856,946, 093,575,738,771,214,560,540,391,368,266,798. The sequential number of any ticket value generated using this number will be 1 (as only one incrementation took place). According to the procedures described in sections 4 and 5 below, executed by the nodes in order to reach consensus on the producer of the next block, ticket value generated using encryption key declared (by means of an encryption keys declaration) by one address is concatenated with the ticket value generated using encryption key declared (by means of an encryption keys declaration) by another address (and, after concatenation, hashed); this allows for finding a pair of winning ticket values. Ticket value TV1, generated using encryption key declared (by means of an encryption keys declaration) by address A, will be different if it is to be concatenated (and, after concatenation, hashed) with ticket value TV2, generated using encryption key declared (by means of an encryption keys declaration) by address B, than if it is to be concatenated (and, after concatenation, hashed) with ticket value TV3, generated using encryption key declared (by means of an encryption keys declaration) by address C. Let us assume that Alice wants to generate a ticket value to be concatenated with another ticket value (in the process aimed at finding a pair of winning ticket values, allowing for creation of the next block) and, after concatenation, hashed. Let us assume that said another ticket value is ticket value (which can be generated by another node) whose sequential number of ticket value is 500 and said another ticket value can be generated using encryption key declared (by means of an encryption keys declaration) by address 1Jh2f2CXbHKUpPnJDZM6eW1Mznvox14WDS.

Alice concatenates number (without commas) 10,000,000,000,000,000,000,000,000,000,000,000,000,000,000,000,000,000,000,000,000,000,000,000,00 0,000,000,000,000,000,000,000,000,000,000,000,000,000,000,000,000,000,000,000,000,000,000,000,000 ,000,000,000,000,000,000,000,000,000,037,976,408,733,557,900,610,306,960,108,552,563,814,856,946, 093,575,738,771,214,560,540,391,368,266,798 and address 1Jh2f2CXbHKUpPnJDZM6eW1Mznvox14WDS. Alice then concatenates the result of this concatenation with the sequential number of ticket value that can be generated by said address, with which (ticket value) Alice wants her ticket value (which is being generated by Alice) to be concatenated (in the process aimed at finding winning ticket values). This sequential number of ticket value is 500. The final result of two concatenation operations is *1000000000000000000000000000000000000000000000000000000000000000000000000000000000000 0000000000000000000000000000000000000000000000000000000000000000000000000000000000000 0000379764087335579006103069601085525638148569460935757387712145605403913682667981Jh2 f2CXbHKUpPnJDZM6eW1Mznvox14WDS500.* This is the plaintext-version ticket value, generated by Alice, which can be, as part of the process of finding the winning ticket values (allowing for the production of block 3101) and after encrypting it (said plaintext-version ticket value) using appropriate encryption key (as described below), concatenated with ticket value (and, after concatenation, hashed) whose sequential number of the ticket value is 500 and which is generated using appropriate encryption key declared (by means of an encryption keys declaration and for consensus on the production of block 3101) by address 1Jh2f2CXbHKUpPnJDZM6eW1Mznvox14WDS. This procedure is reiterated for the purpose of creating plaintext-version ticket values to be concatenated with each other possible ticket value (and, after concatenation, hashed) in the sub-network, each time taking into consideration the address that have declared (by means of an encryption keys declaration) encryption key to be used in the process of generating given another ticket value and its sequential number of ticket value.

Let us assume that Alice created all plaintext-version ticket values, according to the amount of incrementation operations for which the balance of Alice's address (frozen due to encryption keys declaration) allows, which Alice wants to be (after being encrypted using appropriate encryption key, which is described below) concatenated (and, after concatenation, hashed) with other ticket values in the sub-network. Each of plaintext-version ticket values, which Alice created, is to be encrypted using a suitable encryption key, which Alice has declared (by means of an encryption keys declaration) for the consensus on the production of the block 3101. In our example, Alice has one encryption key to be used to encrypt all plaintext-version ticket values (which Alice created in the manner described above) whose creation involved concatenating (with proper addresses and sequential numbers of ticket values) each 6 consecutive numbers resulting from incrementation by one, so (for simplification, we will use only the last three digits from said numbers):
..798, ...799, ...800, ...801, ...802, ...803 - after being concatenated with appropriate address and sequential number of ticket value (as described above), each of these numbers (being a string after proper concatenation operations) needs to be encrypted using the encryption key (declared by Alice by means of an encryption keys declaration) that is contained in the first data block from the set of data blocks from which the second level Merkle tree was constructed, wherein said second level Merkle tree was constructed from the data blocks containing encryption keys for consensus on blockchain block 3101; this procedure is to be reiterated for each address and sequential number of ticket value involved in creation of a particular plaintext-version of ticket value;
...804, ...805, ...806, ...807, ...808, ...809 - after being concatenated with appropriate address and sequential number of ticket value (as described above), each of these numbers (being a string after proper concatenation operations) needs to be encrypted using the encryption key (declared by Alice by means of an encryption keys declaration) that is contained in the second data block from the set of data blocks from which the second level Merkle tree was constructed, wherein said second level Merkle tree was constructed from the data blocks containing encryption keys for consensus on blockchain block 3101; this procedure is to be reiterated for each address and sequential number of ticket value involved in creation of a particular plaintext-version of ticket value;
etc.

In some instances, the result of each of these operations, consisting in encrypting the string, resulting from incrementation and proper concatenation operations, using a proper symmetric key (encryption key), is each time the final ticket value. In some further instances, ticket values can be generated by encrypting only a part of the mentioned string or by using an entirely different function (not utilising symmetric cryptography) altogether.

In the example presented here, Alice has performed 25,000 incrementation operations for the purpose of generating ticket values that allow for participation in the consensus on the production of block 3101 - using 4096 encryption keys for said generation. 6 is the result of rounding towards zero, so that 25000/6 = 4166.66..., which is more than the 4096 encryption keys available, which implies a loss of the Alice's potential to generate a certain number of ticket values. In a real-life scenario, Alice would probably choose a number of encryption keys per block which, taking into account Alice's address balance, the number of incrementation operations for the performance of which said balance allows and rounding towards zero, would not entail a loss or would entail a smaller loss.

In the example presented here, Alice sends to another node, e.g., Bob, which made the relevant encryption keys declaration using the address 1Jh2f2CXbHKUpPnJDZM6eW1Mznvox14WDS, ticket value that results from encrypting the string 1000000000000000000000000000000000000000000000000000000000000000000000000000000000000 0000000000000000000000000000000000000000000000000000000000000000000000000000000000000 0000379764087335579006103069601085525638148569460935757387712145605403913682667981Jh2 f2CXbHKUpPnJDZM6eW1Mznvox14WDS500 using encryption key suitable for encryption of plaintext-version ticket values whose creation involved performing (by Alice) one incrementation operation and which (after being encrypted using an appropriate encryption key) are suitable for consensus on the production of block 3101. This is done so that Bob will be able to generate appropriate ticket value and concatenate said ticket value with the one generated by Alice (and hash the string resulting from such concatenation), in an effort aimed at finding a pair of winning ticket values (as described in section 4). Let us suppose that the address that Alice used to make encryption keys declaration allowing for generation of said ticket value is 1FiqYw9jvnKSMXviKXJLES6mHPX8LD9TVT (Alice's address). In addition to the ticket value resulting from encrypting the string 1000000000000000000000000000000000000000000000000000000000000000000000000000000000000 0000000000000000000000000000000000000000000000000000000000000000000000000000000000000 0000379764087335579006103069601085525638148569460935757387712145605403913682667981Jh2 f2CXbHKUpPnJDZM6eW1Mznvox14WDS500 using appropriate encryption key, which (said ticket value) will be called here T_{A}, Alice sends to Bob additional data comprising information on which address (1Jh2f2CXbHKUpPnJDZM6eW1Mznvox14WDS) and which sequential number of ticket value (500) was concatenated as part of the process of generating relevant ticket value (generated by Alice), on which address (1FiqYw9jvnKSMXviKXJLES6mHPX8LD9TVT) was used to make the encryption keys declaration that allowed for generation of said ticket value by Alice and on the sequential number of ticket value thus generated (1). This is necessary, as Bob, in order to generate a ticket value that can be concatenated with the one thus generated by Alice (and, after concatenation, hashed), needs this data. Bob, upon receiving appropriate ticket value and additional data from Alice, performs the following steps:
1. Increments the number described in item 4 above 500 times, which results in number 1000000000000000000000000000000000000000000000000000000000000000000000000000000000000 0000000000000000000000000000000000000000000000000000000000000000000000000000000000000 000037976408733557900610306960108552563814856946093575738771214560540391368267297.
2. Concatenates the number described in item 1 above (ending with "297") with the appropriate Alice's address (1FiqYw9jvnKSMXviKXJLES6mHPX8LD9TVT). The result of this concatenation is concatenated with the sequential number of the ticket value generated and sent to Bob by Alice (1). The final result is the string *1000000000000000000000000000000000000000000000000000000000000000000000000000000000000 0000000000000000000000000000000000000000000000000000000000000000000000000000000000000 0000379764087335579006103069601085525638148569460935757387712145605403913682672971Fiq Yw9jvnKSMXviKXJLES6mHPX8LD9TVT1.*
3. Encrypts the string *1000000000000000000000000000000000000000000000000000000000000000000000000000000000000 0000000000000000000000000000000000000000000000000000000000000000000000000000000000000 0000379764087335579006103069601085525638148569460935757387712145605403913682672971Fiq Yw9jvnKSMXviKXJLES6mHPX8LD9TVT1* using the encryption key declared by Bob (by means of an encryption keys declaration) to be used for generating ticket values for the consensus on block 3101 whose generation involves performing incrementation operation 500 times (possibility of performing incrementation operation 500 times is justified by a balance of address 1Jh2f2CXbHKUpPnJDZM6eW1Mznvox14WDS). The resulting ticket value will be called here T_{B}.

Now Bob can, in effort aimed at finding pair of winning ticket values (as described in sections 4 and 5), concatenate T_{A} and T_{B} (either as T_{A} with T_{B} or as T_{B} with T_{A}) and hash the result of said concatenation.

Furthermore, in some instances, a string may be contained as an encryption key in one of data blocks from which a relevant Merkle tree (i.e., constructed from data blocks storing applicable encryption keys) is constructed, to be used as an encryption key in the process of generating ticket value(s). If this is the case, the process of generating a ticket value from a plaintext-version ticket value (using such an encryption key [i.e., in the form of a string]) comprises performing suitable computable function(s), wherein said performing utilises at least a part of an appropriate plaintext-version ticket value and at least a part of an appropriate string. For example, this may be carried out by concatenating the plaintext-version ticket value with the appropriate string (in a way analogous to how, in item 5 above, certain encryption keys in the form of symmetric keys were appropriate to be used to encrypt certain plaintext-version ticket values; in the present context, analogously, certain encryption keys in the form of strings are appropriate to be concatenated with certain plaintext-version ticket values) and hashing the result of the concatenation, wherein the result of each such operation is a final ticket value.

In some instances, any suitable data structure(s) may be used, *mutatis mutandis,* in a way analogous to how the use of hash tree(s) is presented in the exemplary embodiments in this section. Said suitable data structure may be, e.g., a linear data structure, a graph, another tree data structure or a hash-based data structure.

### SECTION 4: BASIC PRINCIPLES - SIMPLIFIED CONSENSUS

Below, it is described how, in some instances, once the previous block is produced in the sub-network, nodes can participate in the competition to designate one of their addresses for the production of the next block.

The steps to be taken by nodes to obtain consensus on the production of a new block (according to the simplified method described here) will be described generally and by presenting an example. Obtaining consensus on the production of a new block (according to the simplified method described here) comprises the following steps:
1. In some instances, nodes entitled to participate in the consensus (as a result of the possibility to generate ticket values that depends on the address balance and making the encryption keys declaration) generate ticket values for a consensus on a given block. In the example presented here, we assume that in the exemplary sub-network there are three nodes entitled to participate in the consensus (as a result of the possibility to generate ticket values): "Alice", "Bob" and "Carol", named for illustrative purposes only. Let us assume that Alice, Bob, and Carol are entitled to perform 25,000 incrementation operations (in a way described in section 3) as part of the process of generating ticket values (for consensus on our exemplary block) each. Alice, Bob, and Carol will perform 25,000 incrementation operations each.
2. In some instances, every participant of the consensus authorised to participate therein can send their ticket values to every other participant; and receive everyone else's ticket values. In the example presented here, Alice will send, as far as (as fast as) Alice's Internet bandwidth allows, her own ticket values to Bob and Carol. Carol will send ticket values to Alice and Bob, and Bob to Alice and Carol. Every participant of the consensus authorised to participate therein will try to send their ticket values to everyone else; and to receive everyone else's ticket values.
3. In some instances, each node, upon receiving a ticket value from another node, carries out the following operation: said node concatenates each of its own ticket values it generated with each ticket value received from said another node (wherein both concatenated ticket values are valid for consensus on a block at a given blockchain height). Then, treating the pairs of concatenated ticket values as the hash function input, said node performs hash compression function. Every output thus obtained is verified in terms of how small a number it is (in its decimal form). Each node sends and receives ticket values, concatenates the received ones with its own ones (each of its own ones with each received) and hashes the inputs obtained by means of such concatenation to finally obtain a hash output with a suitably low value. In some further instances, cryptographic function/s other than a hash function may be used; the input of cryptographic function/s may be obtained by means other than concatenation and may involve only part/s of the ticket values; the output obtained may be verified in other terms (other than how small a number it is).

In some instances, the level of output difficulty that must be obtained (by finding hash output with a suitably low value) in order to allow for block production is determined in each checkpoint block so that said level of output difficulty is calculated based on the total amount of possible combinations of ticket values (that can be obtained in the process of concatenating ticket values in order to hash said ticket values after concatenation [said process relates to finding winning ticket values]) achievable in the sub-network at each blockchain height after that checkpoint and until the subsequent one; the level of output difficulty is calculated so as to be proportional to said total amount of possible combinations of ticket values achievable in the sub-network; the larger this total is, the higher the output difficulty level that must be obtained in order to allow for block production (and the lower the maximal output value, valid for block production during the period after said checkpoint and until the next one). In some further instances, the level of output difficulty that must be obtained in order to allow for block production may be determined at other instances of time.

In some instances, statistically, approximately once every specific number of trials an output (of a hash function, according to the procedure described above) with a suitably low value would be obtained, where the number of trials is dependent on the current output difficulty level that must be obtained in order to allow for block production.

Three following questions may arise at this point:
a) Will there be no frequent finding, in some instances, of sufficiently (to produce a block) low output by multiple nodes at the same time, which would interfere with the cyclicity of block production?
b) What will happen if, in some instances, a sufficiently low output cannot be achieved despite concatenating every ticket value with every ticket value (and hashing concatenated ticket values)?
c) Given that the number of ticket values available in the sub-network is, in some instances, unlikely to undergo any dramatic fluctuations (unless the latter are caused by external factors, such as market factors), and the amount of Internet bandwidth used by the nodes participating in the consensus may vary significantly (vary overtime), how will the system regulate the cyclicity of block production?

Answering the first question, in some instances, since the main determining factor for finding the right hash output over time will be the amount of data that each node will be able to send and/or receive over time, the nodes will not send (or receive) an unlimited number of ticket values at once but will depend on the bandwidth of their Internet connections; it is highly unlikely that multiple solutions (which meet the requirement of the output difficulty level that must be obtained in order to allow for block production) will emerge at the same time, but even then this will be resolved by the next block, as the use of the Internet bandwidth by the nodes is a kind of investment of real-world resources, invested by way of a group investment in the consensus based on one of the previous blocks, which can form the extension of the blockchain.

Answering the second question, in some instances, if a sufficiently low hash output cannot be achieved and, within the time-frame set in the system, the next block will not be propagated, the nodes forming the sub-network (given that system clocks of the devices participating in the consensus are, with some acceptable margin of error, synchronised) lower the level of output difficulty that must be obtained in order to allow for block production by the pre-determined amount (increasing the maximal value of the hash output that can be the basis for the production of the next block); this can be repeated until the next block is finally produced. Once said next block is produced, the output difficulty level that must be obtained in order to allow for block production returns to normal.

Answering the third question, in some instances, the system will regulate the cyclicity of block production by periodically changing the target size of the ticket value (as described in the previous section), which at the same time increases (or decreases) the amount of the data that each node needs to send and/or receive in order to send and/or receive the same number of ticket values generated by itself and/or by any other node(s).

4. In some instances, if a node, after concatenating one of its ticket values with one received from another node and hashing the input resulting from such concatenation obtains an output with a sufficiently low value, said node can produce a block. In some further instances, instead of concatenating one of its ticket values with one received from another node and hashing the input resulting from such concatenation in order to obtain an output with a sufficiently low value, nodes will perform some other function, e.g., using only their own ticket values or parts thereof as an input (or a part of an input), in order to obtain, e.g., an output with a sufficiently low value; or a goal, allowing for block production, may consist in the ticket value (generated by the address) itself meeting a certain criterion. In the example presented here, let us assume that Alice, after concatenating one of Alice's ticket values with one received from Bob and hashing the input resulting from such concatenation, obtained an output with a sufficiently low value. This entitles Alice to produce the next block. The production of the block involves the following:
a) in some instances, composing a block and adding to said block, *inter alia,* the hash of the header of the previous block;
b) in some instances, adding two ticket values to the block that, after concatenating and hashing the input resulting from such concatenation, give a suitable output (with a sufficiently low value);
c) in some instances, adding the output (as defined in letter b) above) with a sufficiently low value to the block;
d) in some instances, adding to the block the encryption keys (both own key and the other node's one) used for encryption (as symmetric keys) of plaintext-version ticket values that, after said encryption (in ciphertext form), are the winning ticket values; the encryption key of the other node can be obtained by sending an enquiry to said node by the node producing the block; in some instances, the incentive for the other node to share this information is a share in the profit from the reward for producing a block;
e) in some instances, adding to the block Merkle proofs leading (in the sense of paths of hashes) to a respective root of the first level Merkle tree (and, analogously, through the relevant second level Merkle tree) in the blockchain block in which the block-producing node declared its (relevant) encryption keys and, analogously, to a root of the first level Merkle tree (and, analogously, through the relevant second level Merkle tree) in the blockchain block in which the other winning node did the same from the hashes (leaves) of data blocks containing encryption keys used to encrypt the plaintext-version ticket values (winning ticket values) that allow for the production of the block; from the other node, the Merkle proofs can be gained by sending an enquiry to said node by the block-producing node; in some instances, the incentive for the other node to share this information is a share in the profit from the reward for producing a block;
f) in some instances, adding to the block the relevant (allowing for the production of said block) winning ticket values in the form of a plaintext, i.e., not encrypted with encryption keys (plaintext-version ticket values), and, in some instances, a transaction (coinbase) constituting the reward for producing the block (thus increasing the supply of Intercoin units) - generating Intercoms as a reward for producing a block, this reward given to the addresses involved in block production; the block-producing node may send an enquiry to other node regarding its (other node's) winning ticket value in the form of a plaintext;
g) in some instances, adding to the block the timestamp of the block (which points to the time the block was created and initially propagated in the peer-to-peer network and which should correspond to the local time of nodes propagating the block in the sub-network, wherein system clocks of nodes' devices should be synchronised, with some acceptable margin of error, according to selected time zone; as a protocol rule, if the timestamp does not correspond, with some acceptable margin of error, to the local time of a node, said node will neither accept as valid [and, e.g., try to extend, by producing the next block, the blockchain that includes said block] nor propagate the block upon receiving it [said block]) and signing the whole with a private key of the address that was used to make the encryption keys declaration that allowed for generation of the relevant winning ticket value that, based on the consensus mechanism described, entitles to produce the block.

In some instances, the main source of consensus (in the sub-network) on which blocks form the blockchain extension from a block whose blockchain height is immediately succeeding a blockchain height of checkpoint to block whose blockchain height is that of subsequent checkpoint (here and hereinbelow referred to, for the sake of simplicity, as checkpoint-to-checkpoint blockchain extension) will be the sum of the levels of output difficulty obtained in the blocks forming said blockchain extension. Node synchronising with the sub-network and verifying the blockchain will verify the blockchain in terms of the sum of the levels of output difficulty obtained in the blocks forming checkpoint-to-checkpoint blockchain extension that starts from the block after last checkpoint whose production took place preceding said node's last synchronisation (and blockchain verification) until the next checkpoint and choose an extension with the largest sum of the levels of output difficulty obtained in blocks forming it (extension); afterwards, the node will use encryption keys declarations (which allow for the verification of Merkle proofs associated with relevant encryption keys) made in the blockchain extension so chosen in the process of verifying (and choosing the correct one) the next such checkpoint-to-checkpoint blockchain extension (and so on).

In some instances, each time the verifying node verifies a checkpoint-to-checkpoint blockchain extension, said verifying node looks for an extension with biggest sum of the levels of output difficulty obtained in blocks forming it (extension). This is established in reference to encryption keys declarations made in the preceding checkpoint-to-checkpoint blockchain extension, which are treated as veridical. Let us assume that the checkpoint-to-checkpoint extension thus found is extension E. After finding it (extension E), treating the blockchain blocks that contain encryption keys declarations (in line with previous examples, first 800 blocks after a relevant checkpoint) in E as immutable, the verifying node verifies succeeding checkpoint-to-checkpoint extension, here called E+1, in an analogous manner; said verifying node establishes such extension in reference to encryption keys declarations made in blocks forming extension E, which are treated as veridical. However, if the E+1 extension thus found is an extension extending the blockchain in such a way that a few (in line with previous examples, up to 200) last blocks at blockchain heights covered by blockchain extension E (which do not contain encryption keys declarations) are different than previously established as correct (by being included in E), then the verifying node will treat said last blocks, which are different than previously established as correct, as veridical, even though the new (thus changed) version of the extension composed of the blocks at blockchain heights covered by extension E has smaller sum of the levels of output difficulty obtained in the blocks forming it (new version of extension composed of blocks at blockchain heights covered by extension E) than the sum of the levels of output difficulty obtained in the blocks forming extension E. This is done because any given succeeding blockchain extension with biggest sum of output difficulty levels obtained in the blocks forming it (succeeding blockchain extension) can extend a preceding blockchain extension with less than biggest (known) sum of output difficulty levels obtained in blocks at blockchain heights covered by said preceding blockchain extension, e.g., because a fork consisting of one or few last blocks of said preceding blockchain extension, which are a part of an extension with the sum of output difficulty levels obtained in the blocks forming it (extension) smaller than that of another known (analogous) extension, was extended by a succeeding extension with biggest (known) sum of output difficulty levels obtained in blocks forming it.

In some instances, in order to maintain the highest security, verification of a blockchain by a node synchronising with the sub-network should take place before the production of each checkpoint (synchronisation and trustless verification, occurring, e.g., 0 to 200 blocks before the production of a checkpoint, necessitates synchronisation occurring 0 to 200 blocks before the production of the next one in order to identify the roots of Merkle trees constructed from the data blocks containing encryption keys declared by addresses, their balances, etc.; evidently, the value of 0 to 200 blocks before checkpoint is arbitrary, in line with previously used examples). In fact, it is perfectly possible for a node not to synchronise with the sub-network and perform blockchain verification before the production of every checkpoint (doing it only occasionally, as described in the preceding paragraph), but this behaviour is associated with a slight risk of falling victim to a certain kind of attack on protocol, wherein an attacker becomes in possession of a large amount of private keys (e.g., by bribery) associated with the addresses that were able to produce blocks (in past) in a given checkpoint-to-checkpoint blockchain extension (and thus the attacker is able to simulate these blocks at will).

In some instances, verification of each block is carried out by verifying the correctness of the data from a) to g) above. Since the verifying node knows the roots of first level Merkle trees constructed from the sets of data blocks that contain data blocks containing the roots of second level Merkle trees that were constructed from the sets of data blocks that contain data blocks containing the encryption keys declared (by means of an encryption keys declaration) by the winning addresses before the previous checkpoint, said verifying node can verify, using Merkle proofs (letter e), whether a particular data block, one of the data blocks from which a relevant Merkle tree was constructed, contains correct (previously declared by means of an encryption keys declaration) encryption key - even though said verifying node did not know said key at the time of its declaration, as said key was declared in the form of the root of the first level Merkle tree. Said verifying node can use these encryption keys to encrypt relevant plaintext-version ticket values. Said verifying node can verify whether plaintext-version ticket values are adequate, whether the values (plaintext-version ticket values) have been encrypted with appropriate encryption keys (e.g., in accordance with the mentioned [in section 3] principle of dividing the number of allowable incrementation operations by the number of encryption keys and rounding the result towards zero), etc. Said verifying node does not need to know the encryption keys themselves in advance.

In some instances, assuming that majority of the nodes participating in the consensus, "majority of the nodes" being the majority in terms of the balances of addresses, are honest, the system meets the requirement of a Byzantine fault tolerant system. We assume that it is impossible to corrupt the majority participating in the consensus. How could a malicious entity attacking the sub-network take over the consensus?

In some instances, the malicious entity could try to create a block that is produced based on concatenated ticket values that would constitute a hash input that, after performing this function, would give an output that, after conversion of its hexadecimal form to a decimal value (as described in the previous section), would give a value that, after increasing said value by a number determined by the current target size of the ticket value and performing other actions (concatenation operations and encryptions using encryption keys) needed to generate ticket values, would enable said malicious entity to obtain (using the encryption keys declared, by means of encryption keys declaration[s], by the address[es] held by said malicious entity and as part of the block production process) in the next block and the following ones the sum of output difficulty levels larger than the one obtained by the honest majority of the sub-network.

In some instances, given that:
a) the number of ticket values to which (to generation of which) said malicious entity is entitled (for the purpose of producing a block at any given blockchain height) is smaller than the number to which (to generation of which) the honest majority is entitled;
b) the output difficulty level obtained is, statistically, determined by the number of ticket values involved in the process of obtaining said output difficulty level;
c) encryption keys (and the number of incrementation operations allowable per one encryption key in the process of generating ticket values, as described in section 3) and the relevant encryption keys declarations themselves are pre-declared and verifiable;
the only variable that the malicious entity could manipulate in order to achieve a greater sum of output difficulty levels obtained in blocks it (said malicious entity) produces is a factor that increases or decreases the current target size of the ticket value, described in item 3 of the previous section. Thus, in some instances, this factor needs to be changed at sufficient intervals (not too often).

In some instances, if the attacker tries to simulate the whole checkpoint-to-checkpoint blockchain extension, assuming that this extension is composed of 1000 blocks, they can statistically execute 1/3 of the number of ticket values' concatenations (in order to hash values resulting from concatenations) per block executed on average by the honest majority and they (said attacker) can (in contrast to the honest majority) start the process of simulating said blockchain extension with block produced based on any concatenated ticket values' hash (which is assumed for the sake of argument), their (attacker's) statistical chance of simulating blocks in such a way that ultimately results in a checkpoint-to-checkpoint blockchain extension with an average output difficulty level obtained in each block at least equal to that obtained by the majority is, for every concatenated ticket values' hash that the attacker tries to use as a basis for producing the first block in the checkpoint-to-checkpoint extension, 3¹⁰⁰⁰ times smaller than that of the majority. In this scenario, the attacker would statistically need to try with more than 3¹⁰⁰⁰ hashes of concatenated ticket values' (1.322070819 E+477 hashes) that allow for the production of the very first block, which is evidently impossible, in order to outperform the honest majority. Thus, in some instances, the only synchronisation where trust is required is the first one; said synchronization is based, however, on the same level of acceptable trust as downloading, e.g., client software itself, into which the matrix state is hardcoded (and while downloading said client software, one needs to trust the server that said matrix state is the "true" state).

In some instances, any suitable data structure(s) may be used, *mutatis mutandis,* in a way analogous to how the use of hash tree(s) is presented in the exemplary embodiments in this section. Said suitable data structure may be, e.g., a linear data structure, a graph, another tree data structure or a hash-based data structure.

### SECTION 5: DESCRIPTION OF CONSENSUS IN THE INTERCON SUB-NETWORK

In the previously presented example, we have assumed that each participant of consensus on a single block may send ticket values whose generation involves performing 25,000 incrementation operations to any other participant, the participants being Alice, Bob and Carol. In the example presented here, in addition to this, let us also assume that each participant uses the same amount of Internet bandwidth to send or receive data and it takes each of the participants the same amount of time to send a given amount of ticket values to the other participant(s) or to receive same amount of ticket values from the other participant(s).

What would happen, however, if, in the example presented here, the two nodes (for example Alice and Bob) were able to indirectly use the Internet bandwidth of other nodes (including those not entitled to generate ticket values) in order to accelerate the process of finding the winning ticket values? Such other nodes would send and receive ticket values instead of Alice and Bob; said other nodes would also concatenate ticket values and, after concatenation, hash (concatenated) ticket values. Assuming that each of these nodes would use (for mentioned purposes) the same amount of Internet bandwidth as Alice, Bob and Carol, if Alice and Bob had indirectly used Internet bandwidth of, e.g., 3 nodes each, their (Alice's and Bob's) ability, dependent mostly on the amount of Internet bandwidth used, to (indirectly, by delegating this task to other nodes) concatenate and (after concatenation) hash ticket values over time would quadruple (taking into account also their own capacity).

In the example presented here, let us assume that Alice and Bob only use the Internet bandwidth of their satellite nodes (i.e., satellite nodes with which Alice cooperates or with which Bob cooperates) rather than their own. In such a scenario, how will this situation affect the sub-network? Each block whose production is the result of concatenating (and, after concatenation, hashing) ticket values generated based on encryption keys declarations made by Alice and Bob (rather than Alice and Carol, or Bob and Carol) will be produced faster than any block being the result of concatenating (and, after concatenation, hashing) ticket values generated based on encryption keys declarations made by Bob and Carol or Alice and Carol. This increased speed will be reflected in the timestamps of the blocks produced using ticket values generated based on Alice's and Bob's encryption keys declarations. Over time, these faster produced blocks will contribute to an increase in the current target size of the ticket value that regulates the cyclicity of block production, as the statistical frequency of the production thereof will be increased. At the same time, with said increase in the target size of the ticket value, there will be an increase in the amount of data necessary to send or receive in order to send or receive one ticket value, as the ticket values will be larger (in terms of the data size). All this puts Carol at disadvantage, as within the statistical time-frame for producing one block, Carol will be able to send and/or receive much smaller number of ticket values compared to the number which Alice and Bob are able to (indirectly) send and/or receive in the same interval. Since in this situation Carol needs much more time to achieve the same outcome (and to gain the same odds of becoming a block producer), with the system stipulating that if no block is produced that would meet the current output difficulty level within the time-frame provided (in relation to the previous block's timestamp), output difficulty level that must be obtained in order to allow for block production will be gradually reduced until such reduction results in the production of a block; Carol's potential to participate in the consensus (represented by the number of ticket values that may be concatenated and, after concatenation, hashed) will be severely limited, as Carol will be losing said potential due to the disproportionately small amount of Internet bandwidth available (to Carol) compared to that (indirectly) available to Alice and Bob (in the context of Alice and Bob using the Internet bandwidth of other nodes). Carol is simply unable to use her own (Carol's) potential (to participate in the consensus) over time as efficiently as Alice and Bob are. In some instances, the nodes will compete not only in terms of the number of ticket values (which can be generated based on encryption keys declarations made by the nodes), but also in terms of the (used) bandwidth of their Internet connections (and/or Internet bandwidth indirectly made available by other nodes). Since the bandwidth of Internet connection of one node may be severely limited, involving several nodes in the process and optimal use of their Internet bandwidths would be the key for success.

We will present the steps to reach consensus on the next block (according to elaborate method described here) generally and by presenting an example. Reaching consensus on the next block (according to elaborate method described here) comprises the following steps:
1. In some instances, nodes-addresses generate and declare in blocks (by means of a special transaction included in a block, i.e., encryption keys declaration) before the checkpoint, e.g., A, the roots of the first level Merkle trees, constructed from the data blocks containing the roots of second level Merkle trees, which were constructed from data blocks containing the encryption keys that said nodes-addresses will be able to use in the process of the consensus regarding blocks after said checkpoint A (and until the subsequent one). Each node-address declares (in a way described) encryption keys that said node-address will be able to use in the process of generating ticket values (or send [said encryption keys] to satellite node[s], delegating the task of generation, as described below). Having done that, the nodes-addresses are entitled to generate a certain number of ticket values. Since the hash of the concatenated ticket values that allowed for block production (by having met output difficulty level) of the previous block in the decimal form and the target size of the ticket value are commonly known in the sub-network, after obtaining encryption key from the node-address and receiving necessary information (necessary for performing incrementation and concatenation operations that are a part of the process of generation of ticket values, according to section 3) from other satellite node(s) with which a satellite node cooperates, the satellite node is able to generate ticket values on its own, using, *inter alia,* said hash, target size of the ticket value and information received from other satellite node(s) (by means of, *inter alia,* incrementation and concatenation operations and encryption with a symmetric key in the form of an encryption key, analogously to the process of generating ticket values described in section 3). Therefore, nodes-addresses do not need to use their Internet bandwidth to send/receive ticket values to/from other nodes; it is enough to send (to the satellite nodes) encryption keys alone for the satellite nodes to be able to generate ticket values on their own. In some further instances, nodes-addresses may generate and declare (by means of an encryption keys declarations) in blocks before the checkpoint A the roots of Merkle trees constructed from data blocks containing encryption keys, in order to declare the encryption keys, which will be used in the process of the consensus regarding blocks after said checkpoint A, without using the first- and second level Merkle trees; values and methods other than the ones described in section 3 may be used in the process of generating ticket values.

In the example presented here, we will refer to the satellite nodes participating in our exemplary consensus as follows: Alice's (i.e., cooperating with Alice) satellite nodes will be named A1, A2, A3, Bob's satellite nodes - B1, B2, B3. Alice, Bob and Carol generated and declared in blocks before the last checkpoint the roots of the first level Merkle trees, constructed from data blocks containing the roots of the second level Merkle trees, wherein three (one originally constructed by Alice, one originally constructed by Bob and one originally constructed by Carol) of these second level Merkle trees were constructed from the data blocks containing the encryption keys that Alice, Bob and Carol (or satellite nodes with which they cooperate) will be able to use (by generating ticket values using said encryption keys) in the process of the consensus regarding the exemplary block in question (at a certain height of blockchain), wherein the second level Merkle tree originally constructed by Alice was constructed from data blocks containing encryption keys originally generated by Alice, second level Merkle tree originally constructed by Bob was constructed from data blocks containing encryption keys originally generated by Bob, the second level Merkle tree originally constructed by Carol was constructed from the data blocks containing encryption keys originally generated by Carol. Each one of them (Alice, Bob, Carol) is entitled to generate a certain number of ticket values. Let us assume that using one encryption key any one of them can generate (by performing encryption) 1000 ticket values.

Having obtained an encryption key from the node-address, the satellite node is able to generate ticket values on its own; therefore, nodes-addresses (such as Alice, Bob and Carol) do not need to use their Internet bandwidth to send/receive ticket values to/from other nodes (other nodes-addresses or satellite nodes cooperating with said other nodes-addresses); it is enough to send encryption keys alone for the satellite nodes to be able to generate ticket values on their own (in the amount for the generation of which said encryption keys allow).
2. In some instances, having generated ticket values, satellite nodes send said ticket values to each other and/or receive the ticket values. The satellite nodes concatenate (as described in section 3) and (after concatenation) hash the ticket values, trying to find the pair of concatenated ticket values such that would yield an output (of the hash function) of the lowest possible value (meeting the output difficulty level). Each satellite node should, in an optimal situation, exchange ticket values (for the mentioned purposes), which said satellite node can generate owing to having access to the encryption keys declared (by means of an encryption keys declaration) by nodes-addresses with which said satellite node cooperates, with each other satellite node (and/or with nodes-addresses, if nodes-addresses participate in this exchange instead of delegating the task to satellite nodes) in such a way that the maximal number of ticket values that said satellite node can generate owing to having access to encryption keys is concatenated with the maximal number of other ticket values and, after concatenation, hashed (in search of winning ticket values). In some further instances, other cryptographic function may be used (other than hash); the output that the nodes look for may be different than the lowest possible (in decimal form).
3. In some instances, satellite node, after concatenating ticket values and hashing the concatenated ticket values belonging to the nodes-addresses' addresses, obtains an output meeting the current output difficulty level. This node will be able to produce the next block. In the example presented here, let us assume that satellite node B1, after concatenating ticket values and hashing the concatenated ticket values belonging to the addresses of Bob and Alice, has obtained an output meeting the current output difficulty level. Now, this node B1 will be able to produce the next block. At this moment, only node B1 knows which Bob's ticket value, after being concatenated with which Alice's ticket value and hashing concatenated ticket values, will yield a suitably low output. B 1 received the second (other than generated by itself) winning ticket value (generated using appropriate encryption key previously declared [by means of an encryption keys declaration] by Alice) from node A2.
4. In some instances, satellite node produces the block; satellite nodes taking part in block production have a guaranteed stake in reward for the production of said block (and transaction fees that relate to transactions included in said block). In the example presented here, the only incentive for node B1 to (indirectly) share its Internet bandwidth would be that node B 1 could get some part of the reward for block production. However, if B1 sent to Bob the just found winning ticket values and other data needed to compose and produce a block, what guarantee would B1 have that it would be the address of B 1 to be included in the distribution of the reward, in other words what guarantee would B1 have that Bob (in the new block that Bob produces) would not take the entire reward for himself (for Bob)? Moreover, node A2 and Alice should also have a guaranteed share in the reward (and transaction fees).
   In accordance with the simplified example we described in the previous section, Bob would compose a new block and sign said block with Bob's private key. However, we are now discussing a consensus involving satellite nodes; accordingly, this will be performed in a somewhat different manner.
   Let us assume that a block is produced at a blockchain height H and a new block at a blockchain height H₊₁ will be produced subsequently. At the moment the block at a blockchain height H is produced, every node-address cooperating (in the manner described in this section) with satellite nodes should (as a protocol rule) send to satellite nodes with which said node-address cooperates special messages (unique for each satellite node), signed using private key(s) associated with public key(s) used by a given node-address to generate the address(es) used to make encryption keys declaration(s), wherein said encryption keys declaration(s) can be the basis for generation of ticket values by satellite nodes with which a given node-address cooperates (each such special message signed using the private key associated with the public key that was used to generate the address that was used to make encryption keys declaration declaring encryption key[s] to be used by a given satellite node receiving relevant special message), which can be used to participate in consensus on block at a blockchain height H₊₁.
   Every such special message consists of the following data:
   a) the address chosen by a satellite node that is the recipient of such message (to eventually become the address of satellite node-beneficiary)
   b) blockchain height for which such message is valid (in our example, H₊₁)
   c) the number of encryption keys that were shared with satellite node that is recipient of such message, wherein said encryption keys were shared in order for the satellite node to use said encryption keys to generate ticket values in order to obtain an output satisfying current output difficulty level and produce a block at a given blockchain height (in our example, H₊₁)
   d) the number(s) identifying data block(s) from the set of data blocks from which the second level Merkle tree was constructed, wherein said second level Merkle tree was constructed from the set of data blocks containing data blocks consisting of encryption keys described in letter c) above; e.g., if said encryption keys are contained in first, second and third data blocks from all of data blocks from which said second level Merkle tree was constructed, this number will be 1-3 (first to third)
   Such messages will function like quasi-certificates, certifying that a given satellite node received given encryption keys in order to generate ticket values for a given purpose. Even if a node-address would circumvent the necessity of involving a satellite node, which should have a guaranteed stake in reward for block production, in sharing the block reward (e.g., by producing block itself), the satellite node that have such quasi-certificate will be able to include said quasi-certificate (within a special transaction) in a specific number of subsequent blocks, wherein such inclusion causes a return of the share in reward from any address that was previously (dishonestly) included in the block in question as an address of satellite node-beneficiary to the address described in letter a) above. Of course, in order for such quasi-certificate to be effective, said quasi-certificate must relate to dishonestly acquired reward for block production, wherein said reward was acquired using the winning ticket value generated using encryption key covered by said quasi-certificate (which is verifiable using Merkle proofs provided in the block) and at a proper blockchain height.
   In some instances, analogous method can be applied by satellite nodes to retrieve dishonestly acquired rewards for the production of a block in sub-chain, which (said production) is based on a vote (please refer to section 6 for clarity), or for the production of a vote itself.
5. In order for a satellite node to produce a block that is complete and can become a part of the blockchain, said satellite node should perform the following actions:
   a) In some instances, compose said block (in the form of basic components, including, *inter alia,* hash of the previous block's header, state and state transitions occurring in the sub-network [in the form of Merkle trees]).
   b) In some instances, add two winning ticket values to said block (generated using proper encryption keys).
   c) In some instances, add an output (of hash of concatenated winning ticket values allowing for the production of block) to said block that meets the output difficulty level.
   d) In some instances, add the following to said block:
      - Merkle proofs leading (in the sense of paths of hashes) from the leaves (of the relevant second level Merkle trees and through the relevant first level Merkle trees) that are the hashes of encryption keys used to generate the winning ticket values; as well as the encryption keys themselves that were used to generate the winning ticket values; in the example presented here, B1 only knows the Bob's encryption key and the Merkle proofs leading from the relevant leaf (containing hash of Bob's encryption key) of the second level Merkle tree (to the root of the second level Merkle tree) and through the first level Merkle tree (proving inclusion of the relevant root of the second level Merkle tree), since (according to the system principles) said encryption key and said Merkle proofs were shared by Bob simultaneously with sending the encryption key itself;
      - a hash of all components of the block that is intended to be produced by the satellite node, with the exclusion of the components described in this letter d), i.e., consisting of concatenated data from letters a), b) c), e) and f), which concatenated data should be provided by said satellite node to nodes-addresses that declared (each of the relevant nodes-addresses made that declaration by means of an encryption keys declaration) the encryption keys used to generate the winning ticket values; in the example presented here, concatenated data described in letters a), b) c), e) and f) should be provided by B1 to Alice and Bob (viaA2 to Alice);
      - a special field comprising the addresses of satellite nodes-beneficiaries; said addresses of satellite nodes-beneficiaries should be provided to the winning nodes-addresses; in the example presented here, said field will consist of addresses designated by B1 and A2 that will participate in the reward for the production of the block, which addresses must be provided to Alice and Bob;
      - messages signed (using private keys associated with public keys that were used to generate addresses used to make [by winning nodes-addresses] encryption keys declarations allowing for the production of block) by the winning nodes-addresses (each one winning node-address signs using their private key), comprising the data described in this letter d); in the example presented here, signatures are made by Bob and Alice, respectively, so that:
      Alice needs to sign (using the private key corresponding to the public key that was used to generate Alice's address - one which Alice used to declare [by means of an encryption keys declaration] the encryption key used to generate winning ticket value) a message consisting of the following: Merkle proofs leading (in the sense of paths of hashes) from the leaf containing a hash of Alice's encryption key (used to generate winning ticket value) to the root of the relevant second level Merkle tree and through the relevant first level Merkle tree (proving inclusion of the root of said second level Merkle tree); Alice's encryption key; a hash of the concatenated block components described in letters a), b) c), e) and f) of this item; addresses of satellite nodes-beneficiaries designated by B1 and A2;
      Bob needs to sign (using the private key corresponding to the public key that was used to generate Bob's address - one which Bob used to declare [by means of an encryption keys declaration] the encryption key used to generate winning ticket value) a message consisting of the following: Merkle proofs leading (in the sense of paths of hashes) from the leaf containing a hash of Bob's encryption key (used to generate winning ticket value) to the root of the relevant second level Merkle tree and through the relevant first level Merkle tree (proving inclusion of the root of said second level Merkle tree); Bob's encryption key; a hash of the concatenated block components described in letters a), b), c), e) and f) of this item; addresses of satellite nodes-beneficiaries designated B1 and A2.
      In some instances, analogous (properly signed) messages should be included in every block to be produced in the sub-network; data signed must be valid and true. In the example presented here, the above-mentioned two (signed) messages should be included in the block to be produced by B1. Bob and Alice need to send (upon request from B1, each request comprising all data that one of them [Alice or Bob] needs in order to be able to create appropriate message) these messages (Alice viaA2) to B1.
   e) In some instances, add to said block two plaintext-version ticket values that (as final ticket values, generated using appropriate encryption keys, i.e., after performing encryption needed in the process of generation of ticket values) allow for block production; in the example presented here, B1 adds two plaintext-version ticket values (wherein the relevant final ticket values, generated using appropriate encryption keys, are winning ticket values) to the block (one was treated as input during the generation [by encrypting using encryption key] of winning ticket value belonging to the Alice's address; the other was treated as input during the generation [by encrypting using encryption key] of winning ticket value belonging to the Bob's address); the one that was treated as an input during the generation (by encrypting using encryption key) of winning ticket value belonging to the Bob's address is known to him (to B1), and the one that was treated as input during the generation (by encrypting using encryption key) of winning ticket value belonging to the Alice's address may be requested from A2 or even found by B1, as B1 possesses all data necessary to find it (plaintext-version ticket value that was treated as input during the generation of winning ticket value belonging to the Alice's address).
   f) In some instances, add to said block the timestamp of the block (which points to the time the block was created and initially propagated in the peer-to-peer network and which should correspond to the local time of nodes propagating the block in the sub-network, wherein system clocks of nodes' devices should be synchronised, with some acceptable margin of error, according to selected time zone; this timestamp should be the same as the one included in the messages signed by nodes-addresses according to letter d) above; as a protocol rule, if the timestamp does not correspond, with some acceptable margin of error, to the local time of a node, said node will neither accept as valid nor propagate the block [and, e.g., try to extend, by producing the next block, the blockchain that includes said block] in the peer-to-peer network upon receiving said block) and sign the entire block with its own private key; the public key derived from said private key was used to generate the address to be the beneficiary of its part of the coinbase transaction - which address (address of satellite node-beneficiary) must be identical to the one that is a part of the messages signed by the winning nodes-addresses (described in letter d) above), which are an integral part of the block; in the example presented here, B1 signs the entire block with its (B1's) own private key; the public key derived from said private key was used to generate the address to be the beneficiary of its (B1's) part of the coinbase transaction - which address must be identical to the one that is a part of the messages signed by Alice and Bob (described in letter d) above), which are an integral part of the block.
6. In some instances, in order to execute steps described in item 5, the satellite node producing the block needs to send a special message to the other satellite node taking part in block production (the satellite nodes are directly connected in the peer-to-peer network; the other satellite node generated and sent to the satellite node producing the block a winning ticket value). In this message, said satellite node producing the block informs that it has been able to obtain appropriate hash of the concatenated ticket values, indicating which of the ticket values sent by the other satellite node is the winning ticket value, and transmits to the other satellite node taking part in block production (in order for the other satellite node to transmit it for signing to the node-address that declared [by means of an encryption keys declaration] the encryption key used to generate the winning ticket value that allows for block production; said node-address indirectly uses Internet bandwidth of said other satellite node) the hash of the concatenated block components described in letters a), b) c), e) and f) of item 5 and its address of the satellite node-beneficiary; additionally, the satellite node producing the block transmits to the other satellite node taking part in block production the block components described in letters a) and f) of item 5 in the form of a plaintext so that said other satellite node will be able to verify the correctness of data included therein and send them (the block components described in letters a) and f) of item 5 in the form of a plaintext) for verification to the node-address that declared the encryption key used to generate the winning ticket value that allows for block production (said node-address indirectly uses Internet bandwidth of said other satellite node). Upon receiving this message, said other satellite node adds its address of the satellite node-beneficiary to the address received from the satellite node producing the block, which two addresses now form the addresses of satellite nodes-beneficiaries, and transmits all of this to said node-address; said node-address signs relevant data to create a signed message in a manner described in item 5. In the example presented here, B1 sends a special message to A2, informing that B1 has been able to obtain appropriate hash of the concatenated ticket values and indicating which one of the ticket values sent by A2 is the winning ticket value. Then B1 transmits to A2 the hash of the concatenated block components described in letters a), b) c), e) and f) of item 5 (in order for A2 to transmit said hash to Alice for signing) and B1's address of the satellite node-beneficiary; additionally, B1 transmits to A2 the block components described in letters a) and f) of item 5 in the form of a plaintext so that A2 will be able to verify the correctness of the data included therein and send said block components described in letters a) and f) of item 5 in the form of a plaintext to Alice for verification. Upon receiving this message, A2 adds its address of the satellite node-beneficiary to the address received from B1, which two addresses now form the addresses of satellite nodes-beneficiaries, and transmits all of this to Alice; Alice signs the relevant data to create a signed message in a manner described in item 5.
7. In some instances, in order to execute steps described in item 5, the satellite node producing the block receives (upon request) two messages signed by the nodes-addresses that declared the encryption keys used to generate the winning ticket values that allow for block production. In the example presented here, B1 receives a message signed by Alice from A2; B1 cannot change said message without tampering with the signature (made using private key) required for the correctness of the block. B1 sends a request to Bob; B1 requests to sign the message described in item 5; Bob needs to send an appropriate, signed message to B1 for the block to be produced and in order to receive a part of the reward (as there will be information [in the block] on which addresses [Alice's and Bob's] originally declared [by encryption keys declarations] encryption keys that were used to generate the winning ticket values, Alice and Bob won't be deprived of their share in the reward [that is due to them] for the production of the block).
8. In some instances, the composed and signed block can be propagated in the peer-to-peer network by the satellite node producing the block. Said satellite node signs said block with its private key (the public key derived from said private key was used to generate its address of the satellite node-beneficiary). In the example presented here, B1, after composing and signing the block with its private key (the public key derived from said private key was used to generate its address of the satellite node-beneficiary, which it indicated in the messages signed by Alice and Bob), can propagate said block in the sub-network.

Notes:
1. In the example presented above, since the block production process requires special messages signed by Alice and Bob that contain key components of the block (including a part in the form of hash); since said block components are thus eventually confirmed by three independent nodes (including signature of B1), it is highly unlikely that B1 could create many alternative blocks (that would meet the system requirements) and use said alternative blocks to spam the sub-network. To achieve this, B1 would have to persuade Alice and Bob to cooperate; of course, each node verifying the block (e.g., before the propagation thereof) can verify the data contained therein and the signatures of Alice, Bob and B1 and its entire correctness.
2. In some instances, the sophisticated consensus mechanism described above (combined with the processes described in the following sections), in addition to many other desired characteristics, allows for the distribution of units proportional to the amount of used Internet bandwidth of the satellite nodes involved in the consensus.
3. In some instances, the sophisticated consensus mechanism described above (combined with the processes described in the following sections), in addition to many other desired characteristics, allows for distributed distribution of units over time (many independent nodes become beneficiaries), which may significantly affect the mass adoption and decentralisation of the system.
4. In the example presented above, how can a node-address entitled to generate ticket values using encryption keys that said node-address declared by means of an encryption keys declaration (such as Bob) know that satellite nodes connected thereto (such as B1) and cooperating with it actually send and/or receive ticket values and (in case of a satellite node receiving ticket values) concatenate said ticket values and, after concatenation, hash concatenated ticket values (in search of winning ticket values)?

In some instances, statistically, for every n combinations (pairs) of ticket values concatenated and (after concatenation) hashed by a satellite node, approximately y hash outputs (of concatenated and, after concatenation, hashed ticket values) will reach an output difficulty level L or higher. Statistically, only if satellite node really hashed approximately n combinations (pairs) of (concatenated) ticket values, that satellite node will be able to present approximately y hash outputs that have reached an output difficulty level L or higher.

In the example presented below, Bob can periodically verify B1 (verifying if B1 [or satellite nodes to which B1 sends ticket values] hashes the proper number of combinations [pairs] of ticket values [concatenated]).

In the example presented here, let us assume that Bob sends enquiry to B1 requesting hash outputs (of relevant concatenated ticket values), obtained by B1 (in case B1 received ticket value used to obtain relevant hash output) or by any satellite node cooperating with B1 (in case B1 sent ticket value used to obtain relevant hash output) during consensus on a block 1 block ago [in the present section, by "a block 1 block ago" we mean a block produced at a blockchain height that is equal to a blockchain height of the block being produced now -1; in the following sections 6 and 7 this term is used analogously], wherein one of ticket values used in the process of obtaining any one of said hash outputs was generated using one of encryption keys declared (by means of an encryption keys declaration) previously by Bob (for purpose of participating in consensus on a block 1 block ago), and reaching an output difficulty level L or higher. Bob also requests ticket values used to obtain said hash outputs (both for every hash output) and their sequential numbers of ticket values. This is reiterated at every blockchain height and requires satellite nodes to disclose to each other the appropriate data (hash outputs, ticket values and their sequential numbers of ticket values) that were used during consensus on a block 1 block ago, in accordance with the present paragraph. At this moment Bob requests neither encryption keys used to generate said ticket values nor Merkle proofs leading (in the sense of paths of hashes) from leaves that are their hashes (and through relevant first level Merkle trees).

After, e.g., 5 consecutive blocks, Bob sends an enquiry to B1, this time requesting all encryption keys that could have been used to generate ticket values related to consensus from before 6 blocks known to all satellite nodes with which B1 cooperates, not only encryption keys used to generate the ticket values described in the previous paragraph, and Merkle proofs leading (in the sense of paths of hashes) from leaves that are hashes of the relevant encryption keys to the roots of the second level Merkle trees and through the relevant first level Merkle trees. This is reiterated at every blockchain height and requires satellite nodes to disclose to each other the appropriate data (encryption keys and the relevant Merkle proofs) that relate to consensus on a block 6 blocks ago, in accordance with the present paragraph. Using the data received from B1, Bob will be able to verify B1's performance (by verifying correctness of data received from B1 according to previous paragraph). A node-address may want to enquire about this data (encryption keys and the relevant Merkle proofs) only a few of satellite nodes from all satellite nodes said node-address cooperates with, otherwise a lot of received data will be duplicates (as any given satellite node may, during the process of sharing the relevant encryption keys and Merkle proofs, receive same encryption key [and relevant Merkle proofs related to said encryption key] as the encryption key [and relevant Merkle proofs related to this encryption key] received by the majority of other satellite nodes).

In some instances, according to note 9 below, one satellite node either sends or receives ticket values. In such instances, for the purposes of the above-mentioned data sharing between satellite nodes, a satellite node that only sends ticket values shall receive hash outputs, ticket values and their sequential numbers of ticket values (as described above) from the satellite nodes said satellite node cooperates with; encryption keys and relevant Merkle proofs related to said encryption keys shall be send between satellite nodes bilaterally.

Below, in note 6, we will describe the procedures that, in some instances, are aimed at preventing centralisation of the process of concatenating and (after concatenation) hashing ticket values so that the distribution of units and the consensus itself were genuinely decentralised. One of the main solutions presented therein is the assumption that, in some instances, any address that declared (by means of an encryption keys declaration) encryption keys that allow for generation of ticket values related to consensus at one specific blockchain height will be penalised if anyone publishes (in the blockchain) a special penalising transaction containing more than a particular percentage of said encryption keys (and subsequently provides Merkle proofs leading [in the sense of paths of hashes] from leaves, which are hashes of said encryption keys, of the relevant second level Merkle tree to the root of the second level Merkle tree and through the relevant first level Merkle tree); such a penalising transaction, however, can only be published in the blockchain with the encryption keys contained therein that could have been used in the process of consensus on one of at most, e.g., 2 last blocks. This maximum should be lower than the number of blocks after which satellite nodes share, as described in this note, encryption keys and relevant Merkle proofs.

In some instances, if such sharing occurs, e.g., always after 6 blocks (in relation to the block for the consensus on which shared in such a way encryption keys were used [or could have been used] to generate ticket values), it will not be possible to include (in the blockchain) a penalising transaction on the basis of the encryption keys obtained in the process of such sharing, so this will not entail any risk for the nodes-addresses that originally declared said encryption keys (by means of an encryption keys declarations). Moreover, the number of blocks after which said sharing occurs should be sufficiently large so that the consensus from before this number of blocks, for which encryption keys shared were (or could have been) used (to generate ticket values), was already considered irreversible.

5. How, in the example presented here, does a satellite node B1 know that the node-address to which B1 is connected and with which B1 cooperates, e.g., Bob, sends a particular encryption key enabling some number of ticket values (to be used in the process of consensus) to be generated, only to B1 rather than to many other satellite nodes? The lack of this knowledge creates a possibility of a very uneven distribution of used Internet bandwidth of satellite nodes in relation to the number of ticket values that may be generated based on the encryption keys supplied by nodes-addresses. Above, it has been described how Bob verifies B1. Now, it will be described how B1 verifies Bob.

In the example presented here, whenever B1 participates in the process of reaching consensus on a block at a specific blockchain height, B1 is connected to (and cooperates with) many satellite nodes; one of its main tasks is to send and/or receive ticket values to/from a certain number of satellite nodes (optimally all of available satellite nodes, albeit this is most likely only theoretically possible).

In the example presented here, B1 would receive a certain number of encryption keys from Bob, depending on its (B1's) amount of used (to send ticket values generated using said encryption keys and/or to receive ticket values to be concatenated with said ticket values generated using said encryption keys [and, after concatenation, hashed]) Internet bandwidth (wherein the use of such encryption keys would be periodically verified by Bob as described in note 4) exclusively, i.e., Bob (according to Intercon principles), by sharing his (Bob's) encryption keys with B1, would "promise" (in a somewhat implicative manner) that he (Bob) would not share those encryption keys with any other satellite node. This is evidently a conventional issue, which, however, may be verified afterwards. At the same time, B1 would be under an obligation to send (per blockchain height) ticket values generated using those encryption keys to satellite nodes that can generate a certain number of ticket values and/or to receive (per blockchain height) a certain number of ticket values from satellite nodes, which would then result in the ticket values generated by B1 using the encryption keys received from Bob being concatenated (and, after concatenation, hashed) during the consensus at a certain blockchain height with some number of the ticket values belonging to the remaining addresses (other than Bob's address) actively participating in the consensus. Since B1 is certain that only B1 (as declared by Bob) uses a specific encryption key (declared, by means of an encryption keys declaration, using Bob's address) to generate ticket values whose sequential numbers of ticket value fall within particular interval (related to specific encryption key), then, as long as this is true, B1 will never encounter any satellite node that sends, in order for other satellite nodes to concatenate and (after concatenation) hash them, the ticket values generated using Bob's encryption key that Bob "promised" (to B 1) not to share with any other (than B 1) satellite node.

In the example presented above, B1 can verify its cooperation with Bob on an ongoing basis.

In some instances, nodes can bilaterally verify each other using methods described above; in order for this to be effective, appropriate procedures and parameters (as well as acceptable error margins) should be used for these processes.

6. In some instances, one of the basic assumptions in regard to the Intercon's consensus mechanism is that the nodes participating therein generally send/receive ticket values (that can be used in current consensus) to/from each other (after which receiving nodes concatenate ticket values and, after concatenation, hash said ticket values), yet without sending encryption keys themselves, using which these ticket values could be generated. There are only two exceptions to this rule: as described in note 4, but this is the case when consensus on the block from before, e.g., 6 blocks is considered irreversible and sharing encryption keys used (or ones that could have been used) to generate ticket values that could have been used for consensus 6 blocks ago cannot be detrimental to the current consensus; and during the production of the block by a satellite node, when said satellite node needs to obtain messages, containing encryption keys, signed with private keys associated with public keys that were used to generate addresses to which the winning ticket values belong; it may occur that the satellite node only declared that said satellite node had found a hash meeting the output difficulty level in order to obtain the encryption key, but this would be a rare phenomenon, as nothing would justify it (said phenomenon).

Why, however, would the nodes participating in the consensus simply not send to each other or to a server of their choosing encryption keys, allowing for ticket values to be generated by another node or server on its device? This could mean huge savings in Internet bandwidth used and could be tantamount to centralisation of the consensus in the peer-to-peer network. Below are four examples illustrating four variants in which this could take place:
a) In the example presented here, instead of sending ticket values to satellite node A2, satellite node B1 could send A2 an encryption key and the relevant Merkle proofs leading (in the sense of paths of hashes) from the leaf (which is a hash of said encryption key) of the second level Merkle tree and through the first level Merkle tree (in order to confirm encryption key) and enable A2 to generate such ticket values by itself (using its own device).
b) In the example presented here, nodes-addresses Alice, Bob and Carol could send to one another only encryption keys allowing for the generation of ticket values; Alice, Bob and Carol could send encryption keys related to both the current consensus and the future one as well.
c) In the example presented here, nodes-addresses Alice, Bob, and Carol could send encryption keys related to the current consensus (and the future one) to one node operating within peer-to-peer network, which would use said encryption keys to generate ticket values (and to perform concatenation of ticket values and, after concatenation, hashing) on its own device.
d) In the example presented here, nodes-addresses Alice, Bob, and Carol could send encryption keys to a server operating outside the peer-to-peer network for said server to use said encryption keys to generate ticket values and carry out appropriate actions (concatenation of ticket values and hashing).

In the examples presented above, option a) allows satellite nodes to save used Internet bandwidth and time. Options b), c) and d) allow the same to nodes-addresses and make satellite nodes redundant.

The answer to the question of how to prevent the four options described in the examples presented above is the same for each option.

In some instances, each node in the sub-network will be able to publish (in the blockchain) a special penalising transaction in which said node will include the particular percentage (or more) of encryption keys, declared (in a way of encryption keys declaration) using one address for the consensus at a particular blockchain height. If we assume that said particular percentage is 20%, then any node that knows 20% (or more) of encryption keys, generated and declared (by means of an encryption keys declaration) by one address and suitable for consensus at a particular blockchain height, may include these encryption keys in a penalising transaction. Said transaction should be contained in the first or second block following the block for the consensus on the production of which these encryption keys could have been used (using said encryption keys for generation of the relevant ticket values); the penalising transaction in the third and the next one is invalid. Let us assume that the number of blocks, followed by sharing data between satellite nodes described in note 4, related to encryption keys used (or suitable to be used) in the previous consensus (i.e., before this number of blocks), is 6 blocks after said consensus; therefore, on the basis of encryption keys and Merkle proofs received as a result of said sharing, nobody will be able to compose a correct penalising transaction, as there were 6 blocks already, and said correct penalising transaction can only be included in two subsequent ones (after the block in question, for the consensus on which the encryption keys in question were used or could have been used).

In some instances, any such penalising transaction, if said penalising transaction is included in two subsequent blocks (as described above) and meets the requirement of including, e.g., 20 percent or more of encryption keys generated and declared (by means of an encryption keys declaration) by one address and suitable for consensus at a particular blockchain height (from before one or two blocks), is correct. This transaction may appear unfounded, as it (this transaction) does not contain Merkle proofs, leading from the leaves (of the second level Merkle tree) that are hashes of data blocks containing the relevant encryption keys and through the first level Merkle tree (to its root declared by the address, in the encryption keys declaration, before the last checkpoint); so that such transaction proves nothing. The purpose of this transaction, at the time of publishing this transaction in the blockchain, is merely to prove that one node knew at that time of the appropriate number of encryption keys and that this node declared said encryption keys as such. The encryption keys, normally constituting the content of such a penalising transaction, can be included (in said transaction) in the form of a hash of concatenated encryption keys.

In some instances, for the penalising transaction to become valid, in any one of, e.g., 10 blockchain blocks following said penalising transaction, another transaction must be included, this time including Merkle proofs, leading (in the sense of paths of hashes) from the leaves (of the second level Merkle tree) that are hashes of data blocks containing the appropriate encryption keys and through the first level Merkle tree (to its root, declared by the address to be penalised in the encryption keys declaration). If such transaction is included within said 10 blocks and properly proves the previously (by means of a penalising transaction) declared encryption keys, the penalising transaction becomes valid, meaning that the penalised address loses all Intercoms said penalised address has, e.g., such units are simply erased, and the address that sent the penalising transaction (and the transaction proving the previously [by means of a penalising transaction] declared encryption keys) receives units in the amount equal to the amount of units erased (but said address can spend the units [or use them to make encryption keys declaration] only after a sufficient number of blocks, preferably after a number of blocks larger than the number of blocks produced between checkpoints). If, by means of a penalising transaction, the encryption keys were declared in the form of a hash of concatenated encryption keys, then in the transaction proving thusly declared encryption keys said concatenated encryption keys must be included in the form of a plaintext (that hashes to the hash value included in penalising transaction). In our example, 20 percent or more of encryption keys generated and declared (by means of an encryption keys declaration) using a single address and suitable for consensus at a single blockchain height must be declared in a penalising transaction. This number must be large enough so that it will be very unlikely (or almost impossible) that satellite nodes connected to and cooperating with any one of nodes-addresses and having access to this number of encryption keys (for the purpose of generating ticket values related to current consensus) belonging to the relevant address of node-address will cooperate in exchanging encryption keys between themselves in order to create a valid penalising transaction that penalises the node-address (how encryption keys are distributed in relation to satellite nodes' used Internet bandwidth is also of utmost importance). The larger this number, the less likely such cooperation; the majority of satellite nodes will not cooperate to gain INC in such a way (of penalising transactions), as that could debase the value of the INC itself (by destabilising the system and undermining trust in said system); furthermore, it's unlikely given that only one address can be a beneficiary of penalising transaction. At the same time, any advantage gained by nodes-addresses through centralising the process of generating ticket values is (disproportionately highly) countered by the increased risk of losing the INC units because of penalising transaction(s).

How will a node get hold of Merkle proofs, necessary for the transaction proving the previously declared (by means of a penalising transaction) encryption keys (as described above)?

In some instances, according to note 4, nodes share Merkle proofs leading (in the sense of paths of hashes) from the leaves (of the second level Merkle trees) that are hashes of data blocks containing encryption keys used in the consensus on the blockchain block from before 6 blocks and through the relevant first level Merkle trees, which allows for the already explained enquiring by nodes-addresses, such as (according to note 4) Bob, their satellite nodes. Let us remember that the purpose of each satellite node is to receive and/or send as many ticket values as possible. It would be ideal for any given satellite node if said satellite node were connected to and cooperating with every other satellite node. Thus, said satellite node would readily gain from the satellite nodes cooperating with it (said satellite node) the appropriate Merkle proofs, as early as after 6 blocks. But if said satellite node did not declare (by means of a penalising transaction) the relevant encryption keys appropriate number of blocks earlier, said satellite node cannot penalise anyone.

Let us see whether the four options described in the examples presented above will make sense in the light of the solution as above:
a) In line with the example presented in letter a) above, if B 1 sent every encryption key received from Bob to A2 and to A1 and A3, and so on to all satellite nodes cooperating with Alice; and if the same were done by node B2, node B3 and every other satellite node cooperating with Bob; then every satellite node cooperating with Alice would hold 100% of encryption keys (suitable for consensus at a particular blockchain height) declared (by means of an encryption keys declaration) using the relevant Bob's address and could make an effective penalising transaction; if satellite nodes cooperating with Bob and possessing (in total) 20% or more of encryption keys declared, by means of an encryption keys declaration, using the relevant Bob's address sent said encryption keys to other satellite nodes instead of ticket values, the risk that Bob will be affected by a penalising transaction is very high.

However, several factors almost completely exclude such possibility: Bob, being connected to and cooperating with as many satellite nodes as possible, distributes encryption keys proportionally to amount of Internet bandwidth used by satellite nodes (as described in note 12 below); Bob also verifies his (Bob's) cooperation with said satellite nodes on an ongoing basis. Statistically, the less malicious satellite nodes that send encryption keys instead of ticket values there are in the system, the less likely is Bob to encounter many of said malicious satellite nodes at once, while one of our basic assumptions is that malicious behaviour is engaged in by a minority (here, the amount of satellite nodes is to be understood in the context of the amount of ticket values that said satellite nodes send/receive rather than literally). Any satellite node that connects to and cooperates with Bob and engages in malicious behaviour, i.e., sends encryption keys instead of ticket values, will soon be exposed and connection with such satellite node will be closed.

Because of the above-mentioned reasons, it is irrational to send encryption keys instead of ticket values, since nodes-addresses will not want to cooperate with malicious satellite nodes.
b) In line with the example presented in letter b) above, sending to each other encryption keys (allowing for ticket values to be generated, both currently and for future blocks) by nodes-addresses is pointless for reasons analogous to those described in letter a).
c) In line with the example presented in letter c) above, sending encryption keys from multiple nodes-addresses to one node operating within peer-to-peer network would entail a risk for nodes-addresses that this node would penalise said nodes-addresses.
d) In line with the the example presented in letter d) above, the use of a server operating outside peer-to-peer network presents risks analogous to those described in the preceding letter.

7. In the example presented here, let us assume that the block at a blockchain height of 1205 is produced, which normally extends the history of transactions ending at block at a blockchain height of 1204; however, due to the incorrectness of the contents of block at a blockchain height of 1204, the block at a blockchain height of 1205 extends history of transactions ending at the block at a blockchain height of 1203 (as if the block at a blockchain height of 1205 were, in normal conditions, the block at a blockchain height of 1204). In such a case, when the block at a blockchain height of 1205 is produced, even though it is the block at a blockchain height of 1205, it simply extends the history of transactions ending at the block at a blockchain height of 1203, omitting transactions in the block at a blockchain height of 1204 (even though the block at a blockchain height of 1204 is still a part of the blockchain, produced according to the system rules and pointing to the hash of the previous block's header). In some instances, assuming that some of the optimisations described in the following section are implemented, such change could be executed by confirming in the main chain block sub-chain extension that occurred between two of previously produced main chain blocks (thus reverting the history of transactions).
8. In some instances, any given satellite node, when sending/receiving ticket values to/from other satellite nodes, should either send or receive ticket values to/from any particular (other) satellite node. This is important, because two-way sending and receiving ticket values between two given satellite nodes will result in unnecessary doubling of the concatenation process and (after concatenation) hashing the same pairs of ticket values.
9. In some instances, the current output difficulty level that must be obtained in order to allow for block production should be set to statistically allow for finding an output satisfying the output difficulty level after trying, e.g., 50% of all possible combinations of ticket values (without taking into account the gradual decrease in the level of output difficulty that must be obtained in order to allow for block production in case the proper output is not found within a specific time-frame) suitable for consensus on a block at a particular blockchain height. In such a scenario, a proper output may be found after trying, e.g., 25% of all possible combinations of ticket values or 90% of them, wherein the mode of probability distribution function that relates to probability of finding appropriate ticket values is expressed as 50% of all available combinations of ticket values. The process of adjusting the output difficulty level that must be obtained in order to allow for block production is described in item 3 of section 4.
10. In some instances, satellite nodes share encryption keys and the relevant Merkle proofs leading (in the sense of paths of hashes) from the leaves (of the second level Merkle trees) that are hashes of data blocks containing said encryption keys and through the first level Merkle trees after 6 six blocks (in relation to a blockchain height at which said encryption keys were used [or could have been used] to generate ticket values [suitable for consensus at a relevant blockchain height]). In some other instances, this number of blocks should be large enough so that consensus from before that number of blocks is considered absolutely irreversible. Assuming that said number of blocks would be 100 blocks, encryption keys declarations would freeze addresses until, e.g., 102 blocks after next checkpoint (e.g., an address that declared encryption keys, by means of an encryption keys declaration, in order to participate in consensus on blocks 2001-3000, 3000 being checkpoint block, would be frozen until block 3102; this would be done to allow for penalising transaction [as described in note 6], which could penalise said address thanks to the knowledge of encryption keys associated with encryption keys declaration made using said address, wherein said encryption keys could have been used in the process of reaching consensus on block at one particular blockchain height).
   In some instances, an address that is frozen due to making encryption keys declaration, wherein the relevant encryption keys allow for participation in current consensus, would be able to make another encryption keys declaration in the period of time when said address is frozen, said another encryption keys declaration being related to consensus on blocks after the next checkpoint and until subsequent one. Otherwise, addresses would be able to be used to participate in consensus (based on their encryption keys declarations) only intermittently (e.g., said addresses would be able to participate in consensus on blockchain extension [from the block after checkpoint to next checkpoint] C1, but not C2 [which immediately succeeds C1], then C3, but not C4).
11. In some instances, in order to start cooperating with satellite nodes (in the manner described in this section and aimed at exchanging ticket values and finding winning ticket values by satellite nodes), a node-address needs to:
   a) discover satellite nodes. The process of discovery is performed by asking every satellite node that is newly found in the peer-to-peer network about other satellite nodes of which said newly found satellite node knows about, then connecting to said other satellite nodes and reiterating this step, until a sufficient number of satellite nodes is thus discovered (the goal, albeit probably only theoretically achievable, may be to discover every available satellite node).
   b) send to discovered satellite nodes special messages, signed using the private key that was used to sign encryption keys declaration made by the node-address and published in the blockchain, wherein this encryption keys declaration will potentially allow for generation of ticket values by satellite nodes just discovered as part of the cooperation with node-address (if such cooperation will occur). Each of said special messages, sent to one of satellite nodes, includes any value chosen (at will) by the satellite node that receives given message (to exclude the possibility of using a message twice). This proves (to some extent) that sender of such message made proper encryption keys declaration; the number of ticket values to the generation of which (per blockchain height) said encryption keys declaration entitles can be calculated by satellite node.
   c) ask satellite nodes (to which said node-address sent messages described in letter b) above) if said satellite nodes want to cooperate with said node-address.
   d) if a given satellite node answers in affirmative to the question mentioned in letter c) above, then that satellite node sends to the node-address a message, wherein the content of the message is any value chosen (at will) by the node-address, signed using a private key chosen by the satellite node. Now both parties (satellite node and node-address) can use messages signed using proper private keys to identify themselves (e.g., in case one party lost Internet connection and wanted to prove its identity after reconnecting).
   e) receive data proving that a given satellite node statistically sends/receives to/from other satellite nodes a certain number of ticket values. Every satellite node that answered in affirmative (according to letter d) above) sends to node-address all hash outputs, found during its cooperation with other satellite nodes (conducted with the aim of finding winning ticket values), reaching an output difficulty level L or higher, ticket values used to obtain said hash outputs (both for every hash output) and their sequential numbers of ticket values, wherein this data relates to consensus on last block. After, e.g., 6 consecutive blocks, satellite nodes send to node-address all encryption keys that were used to generate said ticket values used to obtain said hash outputs reaching difficulty level L or higher, related to consensus from before 6 blocks, and Merkle proofs leading (in the sense of paths of hashes) from the leaves (of the second level Merkle trees) that are hashes of data blocks containing the relevant encryption keys and through the relevant first level Merkle trees (to their roots). This process (with some dissimilarities) is analogous to the process described in note 4 above.
      The node-address receiving hash outputs reaching an output difficulty level L or higher, ticket values used to obtain said hash outputs and their sequential numbers of ticket values does not know if satellite node that sent the data really possesses (at the moment of sending) encryption keys that allow for the generation of said ticket values. In order to make this verifiable, a special procedure may be introduced in the sub-network. According to this procedure, satellite node would send along with said ticket values messages signed using private keys associated with public keys that were used to generate addresses using which encryption keys declarations were made that allow for using encryption keys in the process of generating said ticket values. Satellite node would need to ask for such messages nodes-addresses with which said satellite node cooperates. Signed content of each such message would confirm that a given satellite node received such-and-such encryption keys (identified numerically [e.g., numbered in accordance to sequential numbers of ticket values which can be generated using said encryption keys], without disclosing said encryption keys) that can be used to generate ticket values based on such-and-such encryption keys declaration. Using these messages, a node-address verifying satellite node according the procedure described in this note could estimate (with some acceptable margin of error) how many encryption keys a given satellite node received and for generation of how many ticket values they (said encryption keys) allow. Every attempt to confirm, using said messages, the possession of the same encryption keys by more than one satellite node would be detected. This, together with method presented previously, would allow node-address interested in the cooperation with a satellite node to estimate (with some acceptable margin of error) how many (statistically) ticket values said satellite node sends/receives to/from other satellite nodes at each blockchain height.
   f) calculate (in the light of the fact that, statistically, one in every particular number of ticket values available in the sub-network can, after being concatenated with other ticket value and [after concatenation] hashed [treating concatenated ticket values as input of hash function], result in an output reaching output difficulty level L or higher) 3 values:
      - statistical number of all ticket values that satellite nodes, which participated in the procedure described above, have sent/received to/from other satellite nodes at each (measured according to this procedure) blockchain height in order to find winning ticket values; let us call this value V₁
      - statistical number of ticket values that any given satellite node, which participated in the procedure described above, have sent/received to/from other satellite nodes at each (measured according to this procedure) blockchain height in order to find winning ticket values; let us call this value V₂
      - relation of V₂ to V₁, calculated by dividing V₂ by V₁ for each satellite node; let us call this value V₃
   g) ask each satellite node, which participated in the procedure described above, how many ticket values (approximately and in relation to the current target size of the ticket value, as the target size of the ticket value, which determines the size of data of which one ticket value consists, can change; changes in the target size of the ticket value will affect the relation of number of ticket values to amount of data of which said ticket values consist) said satellite node can send/receive to/from other satellite nodes at each blockchain height as part of the cooperation with the node-address.
   h) uses the answers received from satellite nodes according to letter g) above and calculated (for each satellite node) value V₃ in order to distribute encryption keys (allowing for the generation of the ticket values [based on encryption keys declaration made by node-address in question] by satellite nodes as part of cooperation) so that the potential for generating ticket values (that can be generated based on encryption keys declaration made by node-address in question) by satellite nodes will be distributed maximally uniformly in relation to Internet bandwidth already used by satellite nodes (in the process of sending/receiving ticket value to/from other satellite nodes in order to find winning ticket values).
   A following question may arise: how can a node become a satellite node if in order to start cooperating with any node-address (in the manner described above) said node must already cooperate with some nodes-addresses (or at least one of them [nodes-addresses])?
   A node that does not cooperate (as a satellite node) with any node-address yet, may (upon discovering and connecting to node-address in the peer-to-peer network and instead of taking part in the scheme described in this note) perform some amount of Proof-of-Work, utilising any data chosen (at will) by a given node-address, before starting its cooperation with said node-address. This would lower the likelihood of dishonest offers of cooperation, while still allowing for bootstrapping the satellite node.
12. In some instances, due to the lack of synchronisation of system clocks of nodes' devices, propagation delay, differences in nodes' client software, etc., one part of the peer-to-peer network adopts one version of the blockchain as veridical (which means that some nodes within that part will work on extending said version of the blockchain), while another part of the peer-to-peer network adopts a different blockchain version as veridical (which means that some nodes within that part will work on extending said different blockchain version); this results in a fork. In order to resolve forks, the following method is to be used.
   Nodes participating in peer-to-peer network periodically (e.g., every full ten minutes) ask their peers for every version of blocks at a blockchain height H or higher (e.g., blocks produced at some [particular] number of latest blockchain heights) that is known to said peers; having received the answers from the peers, every node (which received said answers) compares blockchain versions incorporating the blocks received in the mentioned manner in terms of the sum of output difficulty levels obtained in all blocks added to blockchain since the checkpoint block preceding last checkpoint block, wherein only blockchain versions with last block's timestamp not exceeding the current local time (wherein system clocks of nodes' devices should be synchronised, with some acceptable margin of error, according to selected time zone) of node performing such comparison by more than some time (e.g., defined in seconds) are considered valid for the purposes of this procedure (under condition that output difficulty level obtained in said last block is big enough in relation to said last block's timestamp as compared with the timestamp of the block immediately preceding said last block; output difficulty level that must be met in order to produce a block can decrease over time [as described previously]), and switches to the known blockchain version with the biggest sum of output difficulty levels obtained in all blocks added to blockchain since the checkpoint block preceding last checkpoint block, thus considering it (said known blockchain version with the biggest sum of output difficulty levels obtained in all blocks added to blockchain since the checkpoint block preceding last checkpoint block) as veridical (and, potentially, works on extending it by adding new block).
   In some instances, satellite nodes decide themselves on which fork said satellite nodes are currently trying to extend (and that affects to/from which other satellite nodes said satellite nodes send/receive ticket values, although said satellite nodes can work on extending few different forks simultaneously); however, some (or all) of nodes-addresses with which said satellite nodes are cooperating can refuse to provide said satellite nodes with encryption keys allowing for working on extending a particular fork (e.g., if they [nodes-addresses] consider said fork invalid).
13. In some instances, satellite nodes send/receive ticket values to/from other satellite nodes, wherein said ticket values are generated according to the procedures described in section 3. Because a satellite node sending ticket values needs to know which address(es) and sequential number(s) of ticket value(s) it should use in the process of generating ticket values (which necessitates performing concatenation operations, as described in section 3, wherein said concatenation operations involve the relevant address[es] used to make encryption keys declaration[s] that allow for generation of ticket values by receiving satellite node and sequential number[s] of ticket value [s] covered by proper encryption key[s] that can be used by receiving satellite node in the process of generating the relevant ticket values to be concatenated and [after concatenation] hashed [in search of winning ticket values]) to be sent, before the relevant data transmission takes place, the receiving satellite node should inform sending satellite node about the relevant address(es) and sequential number(s) of ticket value(s), which the sending satellite node should use while performing concatenation operations (as part of the process of generating the relevant ticket values) so that the ticket values sent to receiving satellite node will be generated accordingly.

In some instances, any suitable data structure(s) may be used, *mutatis mutandis,* in a way analogous to how the use of hash tree(s) is presented in the exemplary embodiments in this section. Said suitable data structure may be, e.g., a linear data structure, a graph, another tree data structure or a hash-based data structure.

### SECTION 6: SUB-CHAIN AND VOTING

In the previous section, some instances of consensus mechanism, which is used in a sub-network, were described. According to what has been written there, blocks (obtained using said consensus mechanism) would contain, *inter alia,* state and state transitions that occur in the sub-network.

Although such a consensus mechanism is, by all means, implementable, some optimisation (described in this section) could be introduced in the consensus mechanism. In some instances, according to such optimisation, the blockchain blocks (as understood in the previous section) would in fact include no state or state transitions occurring in the sub-network; said blockchain blocks would include, *inter alia,* three other components, namely:
- votes;
- voting result, which determines the addresses (which can have a zero balance and be unincluded in the state of the blockchain) that will produce blocks in the sub-chain;
- hashes of headers of the sub-chain blocks that are added to the sub-chain.

In some instances, the main chain blocks will include, *inter alia,* the above-mentioned three components (votes, voting results, hashes of headers of the sub-chain blocks that are added to the sub-chain) rather than the state and state transitions occurring in the sub-network; the sub-chain blocks will include the state and state transitions occurring in the sub-network. Moreover, the sub-chain will be subordinate to the main chain, meaning that the consensus obtained in the main chain will determine which blocks are included in the sub-chain, but not vice versa.

In some instances, the result of voting would provide a basis for the selection of nodes, identified by means of an address, that would be entitled to produce blocks in the sub-chain. This solution is aimed at increased scalability and more efficient distribution of Intercoin units. Below we will describe the steps involved, in some instances, in the process of voting and interactions between sub-chain and main chain generally and by presenting an example. The process of voting and interactions between sub-chain and main chain comprise the following steps:
1. In some instances, as a result of concatenating ticket values and treating the concatenated ticket values as hash function's input, nodes in the sub-network obtain hash function's outputs; as described in section 4, the purpose of this process is to find ticket values such that will allow to obtain (after concatenation and hashing concatenated ticket values) a sufficiently low, i.e., meeting the output difficulty level, hash output. Logically, however, for each pair of ticket values thus found that, after concatenating and performing hash function, will give a sufficiently low output, there are many other pairs of ticket values that the nodes will successfully find (searching for the proper one) and that will only slightly miss the target (the target output difficulty level). If the difference in the output value (obtained by concatenating and, after concatenation, hashing ticket values) is sufficiently small (as determined using a system parameter) in relation to the current output difficulty level that must be obtained in order to allow for block production in the main chain, then, although no block in the main chain can be produced based on such pair of ticket values, the so-called vote may be cast and included in the main chain block. By using an appropriate parameter of the acceptable difference (as understood above), each block in the main chain will be able to include statistically predictable (to a certain degree) number of votes. The decrease in the target output difficulty level needed for main chain block production after a specific time has elapsed and no block was produced and propagated (analogous to the decrease [dependent on time elapsed since the production of preceding blockchain block] in output difficulty level described previously) does not affect the process described here.
   In some instances, when a satellite node finds a pair of ticket values that allows said satellite node to produce a vote (rather than a block), the production and propagation will be carried out similarly to the production of the block as described in the previous section. The significant difference is that a vote will be produced rather than a block, so said vote will consist of the data other than as described in letter a) of item 5 of the previous section.
   In some instances, one of the main components of the vote is the value (or values), exogenous to the sub-network, for which the vote is cast. In the example presented below, this value will be the current (at the moment of voting) USD:Intercoin exchange rate.
2. In the example presented here, a block is produced in the main chain. Let us assume that the block is produced by node B1, which produced a block in the example presented in section 5. Let us refer to letter a) of item 5 of section 5 describing the consensus process: "compose said block (in the form of basic components...)". By referring to "basic components", we meant, *inter alia,* hash of the previous block's header, the state and state transitions occurring in the sub-network. According to the optimisation described in this section, in some instances, the basic components of the block in the main chain will comprise the following:
   a) votes;
   b) hashes of block headers of blocks in the sub-chain that (i.e., sub-chain blocks) were produced since the last (preceding) main chain block;
   c) voting result.

In the example presented here, let us describe elements that, in order to produce a block in the main chain, B1 includes in said block (which are analogous to the "basic components" mentioned in letter a) of item 5 of section 5 and are, according to the optimisation described in this section, included instead of said components):
a) all votes as described in item 1 above. The ticket values used to produce votes should be generated using the encryption keys declared (by means of an encryption keys declarations) for the consensus at the blockchain height of the current block (in the example presented here, being produced by B1). Moreover, the value (related to occurrence exogenous to the sub-network) for which the vote is cast and which is included in said vote (in our example, the USD:Intercoin exchange rate) must be included in the correct form.
b) a median of the values (related to occurrence exogenous to the sub-network) for which all votes, included in the main chain block (in the example presented here, being produced by B1), were cast. Let us assume that, in the example presented here, B1 includes in its block 5 votes: A, B, C, D, E. A voted for the value of 0.94 USD:1 Intercom; B for 0.92 USD:1 Intercoin; C for 0.93 USD:1 Intercom; D for 0.95 USD: 1 Intercoin, E for 0.95 USD: 1 Intercoin. Below, it is described how the median of votes in this block will be determined. Votes are as follows (in USD: 1 INC):
   0.92; 0.93; 0.94; 0.95; 0.95;
   The median (0.94) is marked in bold font. All votes in the main chain block are used to determine the median.
c) a maximal median deviation. Let us assume that, in the example presented here, the maximal median deviation parameter is set to 0.01 USD (one cent). This means that any vote that includes the value of 0.94 (median) or 0.93 or 0.95 is valid; other votes are invalid. Accordingly, the vote cast by B is invalid. Invalid (as understood in the present context) votes can be included in main chain block, thus increasing reward for the production of block (as a larger number of votes included in main chain block will increase the amount of the reward for the production of that block); however, said invalid votes cannot be used in the process of concatenation described in item 5 below.
d) a list of addresses that will be able to produce the blocks in the sub-chain in the interim between the production of main chain block in question (in the example presented here, being produced by B1) and the production of subsequent main chain block. In the example presented here, the production of said blocks will take place after the production of the block in question in the main chain by B1 and will end before the production of the subsequent block in the main chain; in the example presented here, let us assume that this is always 9 sub-chain blocks between main chain blocks; each block is marked with a number and address that can produce said block.
e) the exact moment, e.g., in CET, until which every address entitled in accordance with letter d) above can produce its block in the sub-chain. Let us assume that, in the example presented here, the block produced by B1 (in the main chain) will have a timestamp 12:00:01 CET. Let us assume that the next block in the main chain is to be produced approximately (its production being regulated, to a certain degree, by the target size of the ticket value) after 10 minutes, i.e., at 12:10:01 CET. 9 blocks in the sub-chain are to be produced in the meantime. Thus, B1 identifies 9 addresses in its main chain block (according to letter d) and assigns to each of said addresses the task of producing one block in the sub-chain. Let us assume that these addresses are, starting from the one to produce as the first to the one to produce as the ninth: A, B, C, D, E, F, G, H, I. A may produce a block by 12:01:01 CET; B by 12:02:01 CET; C by 12:03:01 CET; D by 12:04:01 CET; E by 12:05:01 CET; F by 12:06:01 CET; G by 12:07:01 CET; H by 12:08:01 CET; and I by 12:09:01 CET.

Next, at (approximately) 12:10:01 CET a subsequent block in the main chain will be produced, which may include the hashes of headers of the sub-chain blocks produced by A, B, C, D, E, F, G, H, and I (in the time between the production of main chain blocks), thus "confirming" said sub-chain blocks. Each block in the main chain will perform these two functions: on the one hand, said block in the main chain will decide on which addresses will be able to produce blocks in the sub-chain after the production of this main chain block and until the production of the subsequent main chain block; on the other hand, each block in the main chain will also "confirm", or determine, by including the hashes of their headers, which blocks of the sub-chain were added to the sub-chain in the interval between the previous block of the main chain and the one that contains such "confirmation".

Given that:
- each block in the sub-chain produced by A-I contains a hash of the header of the sub-chain block preceding said block in the sub-chain; in the case of A, the first producer, this will be the last block, the hash of the header of which, in accordance with letter b) of item 2 of this section ("hashes of block headers..."), B1 included in its block of the main chain;
- it is assumed that the system clocks of the nodes are synchronised, with some acceptable margin of error;
- the next producer of the block in the main chain (let us refer to said producer as B2) will include, in accordance with letter b) of item 2 of this section, one version of the sub-chain extension produced by A-I (or by any number of addresses from the set comprising A, B, C, D, E, F, G, H, I), which version will probably be the longest known to B2 (consisting of the largest number of blocks), since a larger number of sub-chain blocks whose headers B2 will include in the form of their hashes in B2's main chain block will increase the amount of the reward for the main chain block produced by B2 (coinbase); therefore, it is rational for B2 to include a version with the greatest number of sub-chain blocks possible;
for the aforementioned reasons, it will be rational for the selected A-I nodes to produce and propagate their sub-chain blocks within the set time-frame; cooperation will result in the longest extension of the sub-chain, which will have the greatest odds (to be exact, hashes of headers of blocks of which) to be "confirmed" in the next block of the main chain produced by B2.

In some instances, main chain blocks determine the content of the sub-chain, i.e., of which blocks said sub-chain is composed. Each block of the main chain, as described above, performs two functions in this regard: said block of the main chain "confirms" the blocks that were added to the sub-chain since the last (preceding) block of the main chain; and determines the producers of the sub-chain blocks within the period of time until the subsequent block of the main chain.

In some instances, consensus on the state and state transitions of the sub-network is reached in the sub-chain blocks. Voting and consensus regarding sub-chain blocks occur in main chain blocks (since blocks of the main chain "confirm" which blocks constitute the current sub-chain, by including hashes of their headers).
3. In the example presented here, the reward (coinbase) for producing a block of the main chain by B1, analogously to the example in the previous section, will be divided between B1, A2, Alice and Bob. The manner of dividing said reward and the amount will be determined by the protocol rule and will give rise to an appropriate transaction, creating units constituting the reward and granting said units to appropriate addresses, in the sub-chain (as the state and state transitions are included in the sub-chain). However, in order to encourage B1 to include as many votes as possible in its main chain block and to include as long as possible extension variant of the sub-chain (in the form of hashes of block headers) with sub-chain blocks that were produced by the addresses designated in the previous main chain block by its producer (as in our example B1 designates addresses A-I); in order to encourage B1 to do that, the reward for producing its block must be increased with the increase in the number of said votes and hashes of headers of sub-chain blocks.
4. In the example presented here, B1 should also include in its main chain block information whether the median of the values included in the votes in said block (in our example, this value is the USD:Intercoin exchange rate, and the median is 0.94), the median being calculated in this block, is valid or not. The median shall be valid if said median has been calculated based on votes (included in a block said median relates to) in a number greater than or equal to 90% (90% is exemplary value) of the average number of votes per block, placed in m previous blocks of the main chain. Median validity is a key component that secures the consensus against situations where irreversible changes would occur (e.g., transactions that depend on the median's current value) based on a very small number of votes, specifically chosen by the producer of the main chain block. Without a valid median, the block in the main chain can be produced, but the median calculated therein will not be used for purposes of transactions occurring in the system that somehow depend on the value of said median.
5. Letter d) of item 2 above refers to the list of addresses that will be able to produce blocks in the sub-chain whose production will take place during the interval after the production of the block in the main chain by B1 and before the production of the subsequent block in the main chain. In our example, B1 designated 9 A-I addresses. How did B1 designate these addresses?

In order to illustrate the designation in an exemplary way, let us describe steps which B1 carries out to designate addresses; according to this, in the example presented here, B1 carries out the following steps to designate (for example) 9 addresses:
a) concatenates any valid ("validity" is understood as in letter c) of item 2 above) vote included in the last block of the main chain (i.e., importantly, in the block of the main chain immediately preceding the block that B1 produces, rather than in the block that B1 produces) with the hash output, wherein the input of hash function is formed of concatenated ticket values, which (output) entitles B1 to produce main chain block (i.e., with the output that meets the output difficulty level and which B1 has obtained by concatenating the ticket values and, after concatenation, hashing said ticket values).
   B1 treats the concatenated values described above (in the form of each valid vote in the previous main chain block concatenated with the output described above, entitling B1 to produce a main chain block) as the hash function input (every pair of values, each valid vote and hash output entitling to produce a main chain block, separately); since the concatenation covers the votes from the preceding block (rather than the one being currently produced), the concatenating node B1 may not tamper with which votes are subject to concatenation (which would be the case if it covered votes from its block, which it can include therein or not as it pleases).
b) performs the hash function and obtains an output of said function for each value (used as an input) gained by performing the concatenation described above (in letter a), generating vote outputs.
c) orders all vote outputs for all votes from the preceding main chain block from the lowest (in the decimal form) to the highest; the 9 lowest values represent 9 lowest outputs, which indicate 9 addresses (which cast votes resulting in the winning vote outputs); these addresses are designated to be the producers of 9 blocks in the sub-chain; in our example, A-I addresses.

In some instances, the rewards (coinbase) in the sub-chain blocks are divided among nodes' addresses analogously to the rewards for the production of a block in the main chain, i.e., if the example in the previous section, where B1 produces a block of the main chain, related to the production of vote and obtaining the winning vote output (which would, as a result, entitle B1 to produce a block in the sub-chain), then the reward for the production of a block in the sub-chain by B1 would be divided between B1, A2, Alice and Bob; the respective data, signed with Alice's and Bob's private keys, would need to be included in the vote content analogously to as described in the example in the previous section (however, instead of "block components", vote components would be included).

Notes:
1. In some instances, since each sub-chain block producer receives a reward for the production of the block and sub-chain blocks can be produced at high frequency, a distributed distribution of Intercoin units within the system occurs. To make the distribution even more distributed, a reward can be given to all nodes that participated in the production of all votes included in main chain blocks (but only if said votes are valid ones, as described in letter c) of item 2).
   If a larger part of all the rewards, whether for producing a block in the main chain or sub-chain (or for producing a vote), will go to satellite nodes, it will result in a dynamic expansion of the number of system users, which will make increase in decentralisation thereof more likely.
2. In some instances, nodes that will synchronise with the sub-network and verify the state and state transitions therein will first verify the main chain; then said nodes will verify the blocks in the sub-chain and the specific balances/transactions occurring in said blocks in the sub-chain. For the nodes that do not want to download the entire main chain, the key point (necessary for autonomous main chain verification) is the knowledge of which addresses were/are entitled to generate ticket values from block after one checkpoint until the subsequent checkpoint and which roots of the first level Merkle trees said addresses declared; this information should be available without requiring the entire main chain content to be downloaded.
   This could be done by including in each block of the main chain a separate Merkle tree constructed from data blocks containing encryption keys declarations currently (in each main chain block) added to the set of encryption keys declarations entitling to generation of ticket values (or to delegation of this task to satellite nodes) for the consensus on blocks after the next checkpoint and until the subsequent one, together with the roots of the first level Merkle trees generated and the depths of the latter.
3. In some instances, the sub-chain consensus will incorporate the following two stages of verification: each subsequent sub-chain block producer will choose whether to build its block based on the preceding one, having (presumably) verified its correctness; producers of blocks in the main chain who confirm the blocks added to the sub-chain will also (presumably) verify said sub-chain blocks.
4. In some instances, voting may concern multiple values exogenous to the sub-network rather than only one. If this is the case, for the vote to be considered valid, propagated in the sub-network, and included in the main chain block, it (said vote) must vote for many values determined by the sub-network (as necessary for vote's validity). Different criteria for the maximal median deviation (understood as described in letter c) of item 2 of this section) may be adopted for each value. For example, currency exchange rates may be considered in this manner: as acceptable in terms of median deviation or not. This will be measured differently in the context of values such as yes/no, 1/0 (e.g., answering the question whether a particular situation took place in the external world) or root of the state Merkle tree, wherein state is the state that occurred, e.g., 6 blocks ago in Ethereum. Voting for such values makes the sub-network aware of the circumstances external to said sub-network in a decentralised manner.
   In some instances, the list of values for which each vote in the sub-network must vote may be determined by voting itself, wherein each vote would have one additional data field (potentially) containing information on which mandatory values for votes in the sub-network said vote wants included or excluded. This data field would be optional and not taken into account for the validity of the vote. If, for example, within m last blocks, more than half of the votes in each block included a particular value in the described field, this value becomes mandatory for votes in the sub-network.
   Changes within the sub-network protocol itself and decentralised governance systems operating within sub-network (or across many sub-networks) can be implemented using similar processes.
5. In some instances, nodes do not need to cast votes by way of manual entry of values exogenous to the sub-network. Having access to suitable software, each of the nodes can establish a set of trusted sources (e.g., web servers or peer-to-peer nodes, depending on the kind of data) from which said node will periodically obtain data on the values.
6. In some instances, two votes, produced based on the hash of the same concatenated ticket values, cannot be included in one main chain block.

In some instances, the exemplary embodiments presented in this section can be implemented, *mutatis mutandis,* using consensus mechanism(s) and/or distributed ledger(s) other that the one(s) described in the sections 1-5 using the exemplary embodiments. Some of the steps described in this section, aimed at producing and including votes in blockchain block, can be performed in different, but analogous ways utilising other protocols. For example, in protocols based on Proof-of-Work, finding a nonce fulfilling a certain requirement may entitle to produce a message analogous to a vote; in protocols based on Proof-of-Stake, performing certain steps, wherein their performance is based on owning cryptocurrency units (stake), may entitle to produce a message analogous to a vote. In these cases, calculating and including in a block a measure of central tendency for a data set composed of values, included in messages analogous to votes and related to occurrence exogenous to a peer-to-peer network utilising a given protocol, as well as determining its validity for purposes of transactions, can be performed in various, but analogous to some instances presented in the present section, ways.

In some instances, any suitable data structure(s) may be used, *mutatis mutandis,* in a way analogous to how the use of hash tree(s) is presented in the exemplary embodiments in this section. Said suitable data structure may be, e.g., a linear data structure, a graph, another tree data structure or a hash-based data structure.

### SECTION 7: NETWORK

In some instances, any sub-network, using voting, is able to become aware of, in a decentralised manner:
a) The state (e.g., from several blocks ago) of another blockchain (or transactions occurring therein), by voting for, e.g., the root of state Merkle tree - regardless of whether such blockchain operates using the Intercon's consensus mechanism or another; said blockchain only needs to be publicly available.
b) Any information publicly available on the Internet, such as stock quotes or the results of sports competitions.

Thus, in some instances, each sub-network may have two nontrivial characteristics:
1. Said sub-network may be aware of occurrences in other sub-networks operating based on the same Intercon's consensus mechanism or operating based on another consensus mechanism.
   In the example presented here, let us assume that the sub-network A obtains proof regarding the state of the sub-network B and the proofs obtained by the sub-network B, and that the sub-network B obtains proof regarding the state of the sub-network C and the proofs obtained by the sub-network C, and so on. Sub-network A obtains proof regarding the state of sub-network B (in the form of the root of state Merkle tree) at a blockchain height H, but also of the proof (included in a block of main chain of B and obtained by way of voting in B) regarding the following: the state of sub-network C (in the form of the root of state Merkle tree) at height h1 (e.g., close to H in terms of block production time) and the proofs that the sub-network C obtained at that height (in the form of the root of another Merkle tree, constructed from data blocks containing said proofs). Once knowing one proof in sub-network A, we can thus verify (without synchronising with sub-network B) the correctness of proof, obtained by the sub-network B, regarding the state (and proofs) obtained in the sub-network C. Having thus verified the proof obtained by the sub-network C, pertaining to the state (and proofs) obtained in sub-network D, we can automatically, *mutatis mutandis,* verify the proof obtained in sub-network D, pertaining to the state (and proofs) obtained in sub-network E, and so on. This is an example of chain of proofs.
   Certainly, in the example presented above, sub-network B may well be aware of state and proofs obtained in sub-network A. These chains of proofs, in some instances, can be represented, rather than as linear dependencies, as a net of interdependent distributed consensuses, where each component, in the form of a sub-network, is potentially aware of consensus in any other due to its own consensus and due to chains of proofs.
   Thus, in some instances, transactions and smart contracts in each sub-network may operate in a way that is dependent on any proof obtained by consensus in any other sub-network. Below, it will be described how this could be done by providing (e.g., a smart contract) with a chain of proofs (in the form of Merkle proofs) starting with a proof in the sub-network where the logic is executed, up to the sub-network in which there occurs a direct proof of the value required.
2. Said sub-network may be aware of any publicly available information, without said sub-network being required to obtain the latter from a centralised entity (such as oracle), but by:
   - obtaining a proof regarding said information;
   - or verifying a proof from another sub-network, verifiable by using the chain of proofs, similar to as described above. In this scenario, the last proof in the chain of proofs would pertain to public information of any kind, including, e.g., the state of the distributed ledger, operating not in accordance with the Intercon's consensus mechanism.

In the example presented here, using Fig. 5 as our reference, let's assume that in sub-network A, a transaction X occurs in the amount of 2 INC with the following logic:

If the balance of address 1 in sub-network D is greater than or equal to 4 INC, and proof P1 pertaining to the current stock exchange price of NEW AGE company shares is greater than or equal to 4.03, then 2 INC will be sent by means of transaction X to Alice's address;
or
if the balance of address 1 in sub-network D is less than 4 INC, and proof P1 pertaining to the current stock exchange price of NEW AGE company shares is greater than or equal to 4.03, then 2 INC will be sent by means of transaction X to Bob's address;
or
if the balance of address 1 in sub-network D is greater than or equal to 4 INC, and proof P1 pertaining to the current stock exchange price of NEW AGE company shares is less than 4.03, then 2 INC will be sent by means of transaction X to Carol's address;
or
if the balance of address 1 in sub-network D is less than 4 INC, and proof P1 pertaining to the current stock exchange price of NEW AGE company shares is less than 4.03, then 2 INC will be sent by means of transaction X to David's address.

Note how, in the example presented here, the chains of proofs regarding the two key values, namely the balance of address 1 and proof P1, can be obtained in the sub-network A. It can done by producing chain of proofs A->B->D-> 1 or A->C->E->D-> 1; A->B->D->E->P1 or A->C->E->P1. The logic of transaction X could, e.g., comprise a condition stating that only one of these two alternative chains of proofs can be used to determine balance of address 1 or proof P1 for the purposes of said transaction.

In the example presented here, the producer of the sub-chain block in which transaction X is executed would have to provide appropriate chains of proofs, proving (in a verifiable manner) that certain proofs occurred in sub-networks D and E, wherein the result of this operation would determine the address to which 2 INC (the amount of said transaction) is transferred (Alice's address, Bob's address, Carol's address or David's address).

In order to compose the chain of proofs, e.g., A->B->D->1, he (said producer of the sub-chain block in which transaction X is executed) would need to obtain the relevant data from sub-networks B and D (related to proofs); without being directly obtained in sub-network A, the relevant proofs would still be verifiable in A based on the proof obtained by A pertaining to particular proof obtained in B, since the proof obtained in B leads to further proofs. Such chains regardless of their length, would be verifiable by means of the consensus in one sub-network A.

The chain of proofs, provided by sub-chain block producer in order to finalise transaction X, would be series of Merkle proofs, wherein for each Merkle proof the Merkle root would be the root of Merkle tree in which each leaf (except empty leaves) would contain a hash of a data block containing root of other Merkle tree, functioning in a similar manner and obtained (by way of voting) in other sub-network, or a hash of root of state Merkle tree from other sub-network, or a hash of value related to external world (exogenous to the network).

In the example presented here, sub-chain block producer in sub-network A starts by composing Merkle proof that leads (in the sense of path of hashes) to a root of Merkle tree (from one of its leaves), obtained in sub-network A by way of voting, in which each leaf (except empty leaves) is a hash, wherein each hash is a hash of a root of state Merkle tree from another sub-network or of a root of Merkle tree constructed from data blocks containing proofs obtained (by way of voting) in another sub-network, or of value related to external world (exogenous to the network). Sub-chain block producer composes the Merkle proof leading (in the sense of path of hashes) to a root of Merkle tree obtained in A (by way of voting) from leaf that is a hash of data block that contains the root of Merkle tree constructed from data blocks containing (current) proofs obtained in B. Then, using data available in B (knowing the values of the proofs obtained in B and the relevant Merkle tree constructed from data blocks containing said values of the proofs), he (sub-chain block producer) adds another Merkle proof, which leads (in the sense of path of hashes) through Merkle tree constructed from data blocks containing proofs obtained in B (wherein this Merkle tree was obtained in B by way of voting) from leaf that is a hash of another data block, this time containing root of Merkle tree constructed from data blocks containing (current) proofs obtained in C. Sub-chain block producer adds (analogously) another Merkle proof, this time leading (in the sense of path of hashes) from leaf that is a hash of data block containing the Merkle root of the state Merkle tree from sub-network D. Adding one more Merkle proof, he (sub-chain block producer) proves inclusion of leaf that is a hash of data pertaining to balance of address 1 in sub-network D. All of this is possible because each sub-network obtains, by way of voting, Merkle tree constructed from data blocks, wherein each data block contains (except empty data blocks) root of analogous Merkle tree obtained in other sub-network or root of state Merkle tree from other sub-network, or value related to external world (exogenous to the network).

Each sub-network obtains such Merkle tree related to data obtained in few other, selected sub-networks (however, a chain of proofs can reach any proof in any sub-network, while being verifiable in sub-network in which said chain of proofs originated); nodes that participate in obtaining, by way of voting, such Merkle tree related to data obtained in, e.g., set of sub-networks S should be, while voting, synchronised with each sub-network from the set S, in order to obtain the relevant proofs (related to state and proofs obtained in sub-networks belonging to set S) in a secure manner (this behaviour provides security against some forms of consensus attacks). This solution allows for the creation of chains of proofs in which the task of securing content thereof against consensus attacks is distributed amongst many sub-networks (through which particular chain of proofs leads).

Because the sub-chain block producer, in order to compose Merkle proofs needed to properly execute transaction X, has to obtain appropriate data from few sub-networks, he (the sub-chain block producer) collects a fee (e.g., deducted from the amount of transaction X), wherein the amount of said fee depends, e.g., on the amount of data which he (the sub-chain block producer) had to obtain in order to compose appropriate Merkle proofs.

Furthermore, an appropriate fee, in the amount as determined in sub-network C, will be deducted from transaction X and send (wherein this occurs in sub-network A) to addresses of nodes that participated in the production of block that includes the proof, obtained in C, used by transaction X (in our example, proof regarding state of address 1 in D). This fee is paid to addresses of nodes that participated in the production of the block in which the relevant proof was directly obtained, but the payment itself occurs in sub-network in which the proof is used (A). The relevant addresses can be part of the proof itself. This is possible because format of addresses is the same across all sub-networks.

In some instances, a malicious node could try to manipulate the results of voting in the sub-networks, through which leads the chain of proofs to proof P1 or to the balance of address 1, so that 2 INC will be sent by means of transaction X to the malicious node. Theoretically, said malicious node could do so by investing more Internet bandwidth than the honest majority in any one of the sub-networks through which leads the chain of proofs to manipulate the voting result in a particular time-frame. Let us note, however, that each vote of the satellite node must, prior to production, obtain a sort of a confirmation (included in said vote in the form of properly signed messages) from the nodes-addresses (which declared the encryption keys used to generate the ticket values that were used to produce the vote). These nodes-addresses are financially invested in the sub-network and will presumably verify the value for which the vote is cast, assuming that said nodes-addresses operate honestly. Thus, in practice, in order to take control of the proofs obtained in the sub-network, it might be necessary to buy a very big portion of INC units that form the state of such sub-network. This is reasonable as long as the amount of the transaction dependent on the proof justifies such investment. In some instances, proofs pertaining to a large nominal value of transactions would be mostly obtained in (and through, if applicable) larger (in terms of INC resources) sub-networks.

In some instances, any sub-network node may verify the validity of any proof from any other sub-network without needing to connect to this sub-network, only by means of a chain of proofs, which may be verified using only a proof in the sub-network in which such chain of proofs originates.

In the example presented here, if a sub-network obtains proof pertaining to, e.g., the state and state transitions in exemplary distributed ledger DL, which is not part of the Intercon system, any particular sub-network, using appropriate chains of proofs, could enable atomic cross-chain transactions between such sub-network, which we will call N, and DL.

In the example presented here, let us take as an example a transaction placed by address O in sub-network N with the following logic: if transaction A takes place in DL, then transaction B will be made from address O (blocked due to inability to use the balance of the address for a certain number of blocks) that exists in N; if transaction A is not made in DL, then after said number of blocks address O will be unblocked. This is only an example of the simplest transaction logic that can be used in atomic cross-chain transactions, which transactions can be enabled by chains of proofs; the logic may be far more sophisticated.

In some instances, why do we need a network composed of connected sub-networks? Because of scalability. Each sub-network can effectively handle some amount of data, including proofs, but it is impossible to create a single sub-network with infinite scalability. Node resources such as disk space or Internet bandwidth are limited. Number of proofs in obtaining consensus on which nodes can participate is limited. No node can have such quantity of resources that would allow said node to participate in a sub-network of any size (in terms of amount of data, proofs, etc.), but a number of interdependent sub-networks may be created so that each node can participate in any of said sub-networks. In other words, the intention is not to improve sub-network by partitioning consensus (e.g., by sharding); we want to improve consensus by partitioning sub-network. Below, it is described how this partitioning can be achieved by the procedure of separation.

In some instances, special procedure may be established in sub-networks according to which another sub-network could be separated from an existing one. For example, let us assume that there are 1000 INC units in sub-network A. 100 units are paid to an address of a special smart contract that (indirectly) causes the creation of a new sub-network, providing said new sub-network with the matrix state, rules and determining the starting time of the consensus. As part of this operation, 100 units are erased in sub-network A, but another sub-network B is created, with an initial state of 100 INC, owned by holders of the addresses that deposited 100 INC into an address of said smart contract, which exists in A. B will operate based on the same standardised Intercoin token. B may be a sub-network specialised in providing other sub-networks with proofs related to particular circumstance(s), wherein users of other sub-networks (e.g., smart contracts) will pay for such proofs thus provided (this process was be described by way of example above), which will incentivise creation of new sub-networks by separation (in order to provide users of other sub-networks with certain proofs [possibly related to occurrences of interest to said users] and collect applicable fees). As users of each sub-network will be able to use (which will require payment) proofs obtained in other sub-network, process of separation will facilitate creation of economy based on decentralised consensuses and proofs, allowing for multitude of applications. Another sub-network, e.g., C, may be separated from B; this process may be reiterated indefinitely.

In some instances, when the first Intercon sub-network is established, another sub-network may be formed therefrom over time by way of separation, thus reducing the state of the original one and transforming reduced state into the matrix state of the new one. This process can be reiterated many times and sub-networks can replicate indefinitely.

In some instances, in order to standardise Intercoin units in every such further sub-network, at least the following conditions must be met:
a) the state of the sub-network from which another one is separated must be reduced precisely by the number of units that will constitute the matrix state of the new separated sub-network;
b) parameters and protocol rules determining the basic sub-network consensus, at all levels and stages thereof, including in particular those directly or indirectly affecting the creation and distribution of units over time, must be identical in both sub-networks, i.e., in the separated and original ones; with the proviso that upon such separation, rewards for the production of a block (in the main chain and in the sub-chain) and for the production of a vote in the original sub-network must be reduced proportionally to the reduction of its (sub-network's) total state, resulting from the separation of the new sub-network; in turn, the same rewards in the separated sub-network will be proportional to the difference between these rewards in the original sub-network before and after separation (thus, separation will not ultimately change the pace of increasing the supply of units in the network as a whole over time; regardless of the number of sub-networks in the network itself, said pace will stay the same).
c) once a sub-network is formed from the first Intercon sub-network to ever exist (which here will be called the principal sub-network), the newly formed sub-network (and every sub-network which will be separated from said newly formed sub-network) will, as a protocol rule, periodically obtain proof related to the value representing the pace of monetary supply expansion in the principal sub-network (wherein monetary supply is the amount of Intercoin units, existing in the principal sub-network) in a given interval I and, upon obtaining said proof, adjust the amount of rewards received (which is possible because these rewards are inaccessible for a specific number of blocks after the relevant coinbase transactions; said specific number of blocks must be a value big enough to prohibit accessing funds before the procedure described here is applied to said funds) for the production of blocks and votes during analogous interval I' in said newly formed (from the principal sub-network) sub-network (or another sub-network formed therefrom), so that the pace of monetary supply expansion is the same in the principal sub-network and sub-network formed therefrom (during intervals I and I' respectively). This process, reiterated periodically, ensures uniformity of the pace of monetary supply expansion across sub-networks and (with some acceptable margin of error) across extended periods of time.

In some instances, this is necessary to ensure some standardisation of units. If, for example, in one sub-network, rewards for the block were higher; or production of blocks more frequent; or in any other way, the sub-network were able to achieve a higher increase in the supply of units over time than it is normally allowed (by its state), this would stand in stark contradiction to the concept of (at least partial) standardisation of units.

In some instances, processes described in letters a), b) and c) above require that nodes synchronising with every sub-network (except the principal sub-network) verify if that sub-network conforms to the norms described in said letters.

In some instances, the minimal matrix state of the newly separated sub-network should be large enough (compared to the original sub-network) to ensure adequate decentralisation of consensus in the new sub-network.

In some instances, as smaller (in terms of INC resources) sub-networks can be prone to some forms of consensus attacks, a special procedure is introduced according to which a node resynchronising with, e.g., sub-network D after a period of no periodical synchronisation, wherein sub-network D is a small sub-network (in terms of INC resources), synchronises with the principal sub-network, e.g., sub-network A, first; then, using chains of proofs leading through increasingly smaller (in terms of INC resources) sub-networks, e.g., through B and C, as reference, said node reaches in a secure manner the proof (obtained in C) pertaining to the hash of the header of main chain block (at a particular [current] blockchain height) produced in sub-network D. In order to allow for this, sub-networks need to obtain proofs pertaining to hashes of headers of main chain blocks from other sub-networks. The crux of this solution is that it protects sub-network D from a certain kind of consensus attack, wherein attacker buys a large amount of INC units in sub-network D, makes encryption keys declarations using said INC units, sells said INC units and simulates certain number of main chain blocks (in sub-network D) afterwards (when the attacker is no longer invested in sub-network D). These simulated blocks can seem genuine to any node resynchronising with D after a period of no periodical (e.g., before the production of each checkpoint) synchronisation. If a given node synchronises with D periodically (e.g., before the production of each checkpoint [once all the relevant encryption keys declarations have been made]), it cannot be deceived so easily, because performing attack on current consensus would be much more costly (as an attacker would, by corrupting consensus in D, decrease value of his (attacker's) own INC units [held in D]) than doing this a posteriori. However, performing such consensus attack a posteriori won't change the proof obtained in C and related to hash of the header of particular main chain block in D, which is obtained just after the production of the relevant main chain block in D. Same reasoning applies, *mutatis mutandis,* to the relevant proofs in B and A.

In some instances, the possibility of implementing changes to the sub-network protocol itself and establishing governance systems that operate within sub-network (or across many sub-networks) in a way that is decentralised (as mentioned in note 4 of the previous section), coupled with the potential to access publicly available data in a decentralised manner (which is made available using chains of proofs), allows for creation of many kinds of cybernetic systems that do not necessitate any centralisation.

In some instances, the exemplary embodiments presented in this section can be implemented, *mutatis mutandis,* using consensus mechanism(s) and/or distributed ledger(s) other that the one(s) described in the sections 1-5 using the exemplary embodiments.

In some instances, any suitable data structure(s) may be used, *mutatis mutandis,* in a way analogous to how the use of hash tree(s) is presented in the exemplary embodiments in this section. Said suitable data structure may be, e.g., a linear data structure, a graph, another tree data structure or a hash-based data structure.

### SECTION 8: GENERATING AND UTILISING STABLE VALUE DIGITAL TOKENS

The present section relates to generating and utilising stable value digital tokens in such a way that no centralised entity is needed in the process.

For illustrative purposes, it is assumed in the examples presented in this section that the creation and use of stable units (tokens) operating within Intercon takes place in the context of the price stability of such units in relation to the exemplary traditional national currency (USD), the value of a fictional company shares (New Age), etc., but this may be done in relation to almost any value. Any references in this section to stability or stable units are intended to denote such a stability in price, value, exchange rate, etc.

In some instances, for the stabilisation of Intercoin units (in relation to any value), through a process in which stable tokens will be generated, we need three components: a method for identifying the price/exchange rate of values external to the sub-network (such as currency exchange rates, price of precious metal, etc.) in relation to INC - and this is done using proofs (as described in section 7); users who have a genuine interest in transactions made using stable units - we assume that such users exist; and a method for stabilising units. Said method for stabilising units will be described by presenting examples and comprises the following steps:
1. Risk appetite naturally varies across communities, including cryptocurrency users. Those with higher risk appetite are more willing to take risks, provided that the odds of gaining profit are (in their opinion) sufficient, and vice versa. In the example presented here, let us assume that user Alice is a person who does not want to be exposed to the risk associated with INC exchange rate and would prefer to be sure that, say, in a year her assets that she (Alice) currently holds in INC, which are worth, e.g., USD 1000, will not decrease in terms of their value denominated in USD. In return for such a guarantee, Alice is willing to pay, e.g., 3% of the value of her assets (USD 30). However, Alice does not want to withdraw her assets completely, e.g., by selling her assets for US dollars and depositing USD into a bank account. Alice wants to enjoy, e.g., decentralisation offered by Intercon, but without running the risk of losing real purchasing power (understood, for the sake of our example, as purchasing power expressed in USD).
   On the other hand, there is user Bob in the sub-network. Bob has a greater appetite for risk and wants to keep his (Bob's) assets in the form of native Intercoin units. Bob has units worth USD 1000. However, Bob may increase his exposure to INC against USD by leveraging his investment in INC so that the exposure to INC against USD would be the same as if Bob had an equivalent of USD 2000 in the form of INC. It would certainly be an additional incentive for Bob if someone paid him for this. If Bob leveraged the investment so that, having USD 1000 equivalent in the form of INC, Bob would be exposed to INC against USD as if he (Bob) had USD 2000 equivalent in the form of INC, but would receive, say, an additional 3% of USD 1000 equivalent in the form of INC after a year, then let us assume that Bob would have agreed to this.
2. In the example presented here, Alice and Bob conclude an agreement using an appropriate smart contract. The agreement, represented by the logic of the smart contract, is as follows: Alice freezes (the term "freezing" in this section denotes imposing temporary inability to use one's INC) her INC units worth (at the moment) USD 1000 for one year; likewise, Bob freezes his INC units also worth (at the moment) USD 1000 for one year. Alice's and Bob's INC are frozen in the address of smart contract.
   After one year, the agreement concluded using smart contract is going to terminate. Pursuant to it, Alice shall (in one year) receive from said address (frozen by the smart contract) INC worth (at the moment of termination) USD 1000 (in line with the USD/INC exchange rate established using proofs as described in section 7), exactly that much. If these units are cheaper by this time (worth less USD) than at the moment Alice and Bob concluded the agreement, the missing part will be deducted from Bob's units. If said units are more expensive (worth more USD), Bob will receive Alice's excess units (surplus over the current equivalent of USD 1000).
   Moreover, notwithstanding the above, Alice will pay Bob an equivalent (in INC) of USD 30, calculated using the exchange rate at the time of conclusion of the agreement. This payment will be automatically deducted from the amount that is due to Alice at the time the agreement between her and Bob terminates.
3. In the example presented here, after the aforementioned agreement is concluded, the rights of both parties arising therefrom are tokenised, i.e., converted into divisible tokens, transferable within Intercon. Bob receives a number of transferable tokens that will entitle Bob to INC after one year from entering into the agreement (in an amount depending on the INC/USD exchange rate applicable at the time), while Alice receives a number of transferable tokens that entitle her to an equivalent of USD 1000 in INC after one year.
4. In the example presented here, for a small fee, Alice has stabilised her assets worth USD 1000 in relation to USD. Bob has increased the exposure to INC against USD, but received 3% (payable after one year) of additional benefit. This is reasonable behaviour for both sides.
   If Bob simply wanted to hold Intercoms worth USD 2000, in order to obtain an appropriate exposure, it would be rather more reasonable to increase his exposure in the manner described above, as 3% constitutes a bonus of a sort. Doubts may arise as to whether this is profitable for Bob, as it exposes Bob to a loss of liquidity associated with the freezing of INC in the agreement between Bob and Alice. However, Bob's tokens, which entitle Bob to a potential profit (equal to the one Bob would have if he held Intercoms worth USD 2000) and 3% of the bonus at the end of the agreement, are transferable between Intercon users just as Intercoins, native units, themselves, i.e., Bob's tokens can be sent to another user to his (another user's) address. Every subsequent holder of tokens, as long as said tokens are appropriately standardised and the terms of agreements (to which said tokens entitle) easily verifiable, will follow the same logic as when purchasing Intercoins themselves, hoping for the value of the crypto-unit to increase.
   For comparison, in derivative contracts existing in the traditional financial system, the current value of the derivative is highly correlated with the expected value of the underlying asset, just as the current value of the underlying asset is highly dependent on the expected future value of said underlying asset.
   The 3% bonus makes such a quasi-derivative relatively more profitable compared to the underlying asset, i.e., INC. Therefore, for users with a higher risk appetite, it seems more reasonable to hold a derivative rather than an underlying asset (the terms "derivative" and "underlying asset" in the context of the mechanism described should be interpreted as comparative and illustrative rather than literal), which may result in a large part of Intercoins in Intercon being either stabilised or leveraged.
5. In the example presented here, since the stabilisation of INC will involve a fee (in our example it's 3%), we can expect it will only be used by those who are genuinely interested in stable, decentralised currency.
6. In the example presented here, once stable tokens are created under an agreement between Alice and Bob, entitling Alice to an equivalent of USD 1000 in INC after the period of one year, Alice will be able to use said stable tokens for various operations within the sub-network. With access to stable tokens, users may (in addition to buying goods and services) create synthetic (operating solely on the basis of distributed ledger) exchanges of, e.g., company shares or goods. These would be based on the same principles as the original agreement between Alice and Bob.
   In the example presented here, Alice, holding 1000 tokens stable in relation to USD, which are here and hereinbelow referred to as (for the sake of example) "USD-tokens", and Carol, holding 500 USD-tokens, may, using an appropriate smart contract, freeze their 1500 USD-tokens, e.g., for 3 months; Alice's USD-tokens are worth 50 shares in an exemplary stock company by the name of, say, New Age; Carol's USD-tokens are worth 25 shares of New Age at this time. After 3 months (or when Carol's USD-tokens are no longer sufficient to secure the terms of the agreement), Alice will receive USD-tokens in an amount equivalent (at the time of termination of the agreement, i.e., after 3 months or when Carol's USD-tokens are no longer sufficient to secure the terms of the agreement) to 50 shares of New Age. If the value of the share in USD increases between the time of conclusion and termination of the agreement between Alice and Carol, Alice will receive more USD-tokens (from Carol's 500 USD-tokens), an amount such that will constitute an equivalent of 50 New Age shares; and if it decreases, Carol will get the profit (in the form of the surplus of Alice's USD-tokens above the equivalent of 50 New Age shares).
   Such an agreement may generate another pair of transferable tokens representing the rights arising therefrom (for Alice and Carol, respectively), which tokens Alice and Carol can transfer. We assume that the value of New Age shares in relation to USD is made available to the applicable smart contract that Alice and Carol used to conclude the agreement.
   This allows for stabilising one value to almost any other, provided that appropriate information on this value measured in relation to other is available. It is therefore possible to create synthetic, tokenised investments in precious metals, baskets of financial instruments, etc. Similarly, tokenised mutual bets could also be made regarding this or that circumstance arising in the world.
   In the example presented here, vegans would create a vege-token in 2024, which would represent a bet that global meat consumption in 2025 will drop by 10% or more compared to 2024. At the time of establishment of the token, its value would be 1:1 to USD-token. Those betting that meat consumption would decrease as described above would buy, using USD-tokens, vege-tokens; buying 1 vege-token would mean paying 1 USD-token and freezing said 1 USD-token until the end of 2025. Those believing that global meat consumption would not decrease by 10% or more in 2025 compared to 2024 could invest USD-tokens to receive meat-tokens; buying 1 meat-token would mean paying 1 USD-token and freezing said 1 USD-token until the end of 2025. The number of vege-tokens and meat-tokens would be identical. After a year, smart contract would obtain the information whether the circumstance arose (using a proof as described in section 7). If holders of vege-tokens were right, all USD-tokens frozen by smart contract would go to said holders pro rata (taking into account the number of vege-tokens held); and if holders of meat-tokens were right, the other way around.
7. In the example presented here, if, at any time during the term of the agreement between Alice and Bob, the funds frozen by Bob in the address of smart contract in order to stabilise Alice's funds (i.e., initially, the equivalent of USD 1000 in INC) are no longer sufficient for that purpose, Bob's (or their subsequent holder's [holders']) tokens, representing Bob's original rights under the original agreement, will no longer be convertible to INC by the end of the agreement and will become permanently worthless. In our example with Alice and Bob, if the INC/USD exchange rate dropped by half or more during the term of the agreement, Bob (or buyer [buyers] of the tokens representing Bob's original rights) loses everything, because (under the terms of the agreement) his funds have been completely exhausted; he will never receive INC under the agreement in question, even if the INC/USD exchange rate later changed to his benefit.

In some instances, if funds frozen in the address of smart contract in order to stabilise another funds become insufficient for that purpose, stabilised funds frozen in the address of smart contract can be stabilised again, even without any action from the side of their owners, in a way analogous to described in the present section. This would require a certain transaction to be made by the address owning the tokens (or part of said tokens), which represent rights to stabilised funds, confirming that this is to be done with the stabilised funds (or with the appropriate part of said stabilised funds). A mechanism for matching funds to be stabilised to funds to be used for stabilisation would need to exist. Automation of this process would allow for stabilisation of funds over extended periods of time and without any necessity of action from the side of their owners.

In some instances, the exemplary embodiments presented in this section can be implemented, *mutatis mutandis,* using consensus mechanism(s) and/or distributed ledger(s) other that the one(s) described in the sections 1-5 using the exemplary embodiments.

### SCOPE

Software implementations of the system described herein may include executable code that is stored in a computer readable medium and executed by one or more processors. The computer readable medium may be non-transitory and include a computer hard drive, ROM, RAM, flash memory, portable computer storage media such as a CD-ROM, a DVD-ROM, a flash drive, an SD card and/or other drive with, for example, a universal serial bus (USB) interface, and/or any other appropriate tangible or non-transitory computer readable medium or computer memory on which executable code may be stored and executed by a processor. The system described herein may be used in connection with any appropriate operating system.

Now that various embodiments of the present invention have been shown and described in detail, various modifications and improvements thereon can become readily apparent to those skilled in the art. It is intended that the specification and examples be considered as exemplary only, with the true scope and spirit of the invention being indicated by the following claims.

## Claims

1. In a computer-implemented distributed ledger, a computer-implemented method for an entity to take part in a process aimed at choosing, from a plurality of entities, a producer of a new block of valid transactions in a blockchain, relative to a sequence of prior blocks in the blockchain, the method comprising:
having the entity generate (802) a data structure, wherein at least a first part of the data structure:
allows for proving an inclusion of a particular data block within a set of data blocks that comprises components from which the data structure was constructed, wherein the particular data block contains at least one of a cryptographic key, which can be used for an encryption process, or a string
or
allows for, together with other information, proving an inclusion of a particular data block within a set of data blocks that comprises components from which the data structure or another data structure was constructed, wherein the particular data block contains at least one of a cryptographic key, which can be used for an encryption process, or a string;
having the entity send (803) a message in a peer-to-peer network, wherein the message is composed of at least a second part of the data structure, the message being included after having been sent in at least one of the prior blocks;
having the entity obtain (804) a value that is at least partly relative to contents of one or more of the prior blocks;
having the entity perform (805) at least one of encrypting at least one part of the value using the cryptographic key to produce an encrypted value or executing a computable function based on said at least one part of the value and at least a part of the string, which produces a function output;
having the entity perform (806) at least one function, wherein data comprising at least one of at least one part of the encrypted value or at least one part of the function output are at least a part of an input of the at least one function performed, to produce a ciphertext; and
having the entity check (807) the ciphertext against at least one criterion, wherein meeting said at least one criterion by the ciphertext allows for producing the new block of the valid transactions by the entity or by another entity.

2. In a computer-implemented distributed ledger, a computer-implemented method for an entity to take part in a process aimed at choosing, from a plurality of entities, a producer of a new block of valid transactions in a blockchain, relative to a sequence of prior blocks in the blockchain, the method comprising:
having the entity receive (801) a message that comprises at least one of a cryptographic key, which can be used for an encryption process, or a string, wherein at least one prior block includes at least one part of a data structure and said at least one part of the data structure:
allows for proving an inclusion of a particular data block within a set of data blocks that comprises components from which the data structure was constructed, wherein the particular data block contains the at least one of the cryptographic key, which can be used for the encryption process, or the string
or
allows for, together with other information, proving an inclusion of a particular data block within a set of data blocks that comprises components from which the data structure or another data structure was constructed, wherein the particular data block contains the at least one of the cryptographic key, which can be used for the encryption process, or the string;
having the entity obtain (804) a value that is at least partly relative to contents of one or more of the prior blocks;
having the entity perform (805) at least one of encrypting at least one part of the value using the cryptographic key to produce an encrypted value or executing a computable function based on said at least one part of the value and at least a part of the string, which produces a function output;
having the entity perform (806) at least one function, wherein data comprising at least one of at least one part of the encrypted value or at least one part of the function output are at least a part of an input of said at least one function performed, to produce a ciphertext; and
having the entity check (807) the ciphertext against at least one criterion, wherein meeting the at least one criterion by the ciphertext allows for producing the new block of the valid transactions by the entity or by another entity.

3. The method according to any of claims 1-2, wherein the step of having the entity perform (806) the at least one function to produce the ciphertext comprises having the entity concatenate the data comprising the at least one of said at least one part of the encrypted value or said at least one part of the function output with other data, received by the entity as a part of a data exchange aimed at finding an appropriate result of a concatenation process, and performing at least one cryptographic operation.

4. The method according to any of claims 1-3, wherein the other information comprises at least one hash output that is a part of at least one path of hashes.

5. The method according to any of claims 1-4, wherein the cryptographic key can be used for the encryption process using either an asymmetric cryptography or a symmetric cryptography.

6. The method according to any of claims 1-5, wherein at least one of the data structure or the other data structure is a hash tree.

7. In a computer-implemented distributed ledger, a computer-implemented method for an entity to establish a measure of a central tendency for a data set composed of at least one value related to an occurrence exogenous to the distributed ledger, in which transactions are organised in blocks forming a blockchain, and to produce a new blockchain block, wherein the new blockchain block includes at least one of the measure of the central tendency or at least some of outcomes of processes that are at least partly related to the measure of the central tendency, comprising:
having the entity receive (901) data comprising said at least one value related to the occurrence exogenous to the distributed ledger;
having the entity check (902) if the data are valid according to at least one protocol rule;
having the entity compute (903) the measure of the central tendency for the data set composed of said at least one value related to the occurrence exogenous to the distributed ledger; and
having the entity produce (904) the new blockchain block that includes the at least one of the measure of the central tendency or the at least some of the outcomes of the processes that are at least partly related to the measure of the central tendency.

8. The method according to claim 7, wherein the step of having the entity compute (903) the measure of the central tendency for the data set composed of said at least one value related to the occurrence exogenous to the distributed ledger further comprises having the entity execute at least some of the processes.

9. In a computer-implemented distributed ledger, a computer-implemented method for an entity (601) to create digital tokens whose worth is stable in relation to at least one certain value, the method comprising:
having the entity deposit (609) cryptocurrency units in an address of a smart contract (604), wherein this causes an inability to use the cryptocurrency units by the entity (601) under certain circumstances, the smart contract (604) being able to access data related to the at least one certain value; and
having the entity receive (608) the digital tokens, which represent rights (709) arising from depositing the cryptocurrency units, wherein at least one owner (701) of the digital tokens will receive (708), if specific conditions are met, an appropriate amount of another cryptocurrency units, if any, wherein the appropriate amount of the other cryptocurrency units received depends on the data related to the at least one certain value.

10. In a computer-implemented distributed ledger, in which transactions are organised in blocks forming a blockchain, a computer-implemented method for an entity to produce a new blockchain block, wherein the new blockchain block includes data allowing for a verification of another data that represent an occurrence exogenous to the distributed ledger, wherein the other data were reached by a consensus within the distributed ledger or within another distributed ledger, comprising:
having the entity include (1001) in suitable data from which the new blockchain block is being constructed the data allowing for the verification of the other data that represent the occurrence exogenous to the distributed ledger, wherein the data comprise at least one part of a data structure and said at least one part of the data structure:
allows for proving an inclusion of a particular data block within a set of data blocks that comprises components from which the data structure was constructed, wherein the particular data block contains the other data that represent the occurrence exogenous to the distributed ledger
or
allows for, together with other information, proving an inclusion of a particular data block within a set of data blocks that comprises components from which the data structure or another data structure was constructed, wherein the particular data block contains the other data that represent the occurrence exogenous to the distributed ledger;
having the entity produce (1002) the new blockchain block comprising the data.

11. The method according to claim 10, wherein the other information comprises at least one hash output that is a part of at least one path of hashes.

12. The method according to any of claims 10-11, wherein at least one of the data structure or the other data structure is a hash tree.

13. A computer-readable storage medium storing instructions that, when executed by a computer, cause the computer to perform the method of any of claims 1-12.

14. A computer program comprising executable code that, when executed by a computer, causes the computer to perform the method of any of claims 1-12.

15. A computer-implemented system (1100), comprising:
at least one non-transitory processor-readable storage medium (1110) that stores at least one of processor-executable instructions (1116) or data (1115) ; and
at least one processor (1120) communicably coupled to the at least one non-transitory processor-readable storage medium (1110), wherein the at least one processor (1120) is configured to perform the steps of the method of any of claims 1-12.
